# EUROPEAN PATENT APPLICATION

(11) **EP 4 084 139 A1**
(43) Date of publication of application: **02.11.2022**
(21) Application number: 21757110.8
(22) Date of filing: 19.02.2021
(51) Int. Cl.: H01M 4/36, H01M 4/525, H01M 4/62, H01M 10/052, H01M 10/0525, H01M 4/02

(54) **POSITIVE ELECTRODE ACTIVE MATERIAL HAVING ULTRA-FINE CRYSTAL GRAINS AND PRIMARY PARTICLES OF HIGH ORIENTATION, AND LITHIUM SECONDARY BATTERY COMPRISING SAME**

(30) Priority: 21.02.2020 KR 20200021604; 28.07.2020 KR 20200093548; 18.02.2021 KR 20210021976
(71) Applicant: Battery Solution, Seoul 04763 (KR)
(72) Inventor: SUN, Yang-Kook, Seoul 06288 (KR); PARK, Geon-Tae, Seoul 01006 (KR)
(74) Representative: Prüfer & Partner mbB Patentanwälte · Rechtsanwälte
(86) International application number: PCT/KR2021/002141
(87) International publication number: WO 2021/167409

(57) **Abstract**

The present invention relates to a positive electrode active material for a lithium secondary battery, the positive electrode active material comprising secondary particles consisting of a group of a plurality of primary particles, wherein the primary particles are provided on the surface of the secondary particles, the primary particles include oriented particles having a short axis and a long axis, the oriented particles include ultra-fine grains having a grain size of 0.1 µm to 0.5 pm, and the grain size is obtained by calculating an average cross-sectional area of the oriented particles as a square root.

## Description

### Technical Field

The present invention relates to a positive electrode active material having ultra-fine grains and highly oriented primary particles, and a lithium secondary battery including the same, and more particularly, to a positive electrode active material having ultra-fine grains and highly oriented primary particles have a heteroatom at the grain boundary between them, and the concentration of the heteroatom is higher at the grain boundary than in the central portion of the primary particle, and a lithium secondary battery including the same.

### Background Art

With the development of portable mobile electronic devices such as smart phones, MP3 players, and tablet PCs, the demand for secondary batteries capable of storing electrical energy has increased explosively. In particular, with the advent of electric vehicles, medium and large energy storage systems, and portable devices requiring high energy density, the demand for lithium secondary batteries has increased.

With an increasing demand for such lithium secondary batteries, research and development for positive electrode active materials for use in lithium secondary batteries has been conducted. For example, Korean Patent Application Publication No. 10-2014-0119621 (Korean Patent Application No. 10-2013-0150315) discloses a secondary battery having high-voltage capacity and long cycle life characteristics as a result of controlling the kinds and composition of metals substituted in a precursor for preparing a lithium-rich positive electrode active material and controlling the kinds and amounts of metals added.

### DISCLOSURE

### Technical Problem

An object of the present invention is to provide a positive electrode active material including primary particles having ultra-fine grains, and a lithium secondary battery including the same.

Another object of the present invention is to provide a positive electrode active material which has ultra-fine grains and highly oriented particles, and has high capacity and improved cycle life characteristics by having a high content of nickel, and a lithium secondary battery including the same.

Still another object of the present invention is to provide a positive electrode active material containing a heteroatom inside primary particles and at the grain boundary between the primary particles, wherein the concentration of the heteroatom is higher at the grain boundary than inside the primary particles, and a lithium secondary battery including the same.

Objects to be achieved by the present invention are not limited to the above-described objects.

### Technical Solution

To achieve the above objects, the present invention provides a positive electrode active material and a positive electrode.

One embodiment of the present invention includes a positive electrode active material for a lithium secondary battery including a secondary particle composed of a plurality of primary particles, wherein the primary particles include oriented particles provided in the surface portion of the secondary particle and having a short axis and a long axis, the oriented particles include ultra-fine grain grains having a grain size of 0.1 µm to 0.5 µm, and the grain size is obtained by calculating the square root of the average cross-sectional area of the oriented particles.

Another embodiment of the present invention includes a positive electrode active material for a lithium secondary battery including a secondary particle composed of a plurality of primary particles, wherein the primary particles include oriented particles provided in the surface portion of the secondary particle and having a short axis and a long axis, the oriented particles include those in which the average absolute value of acute angles among angles between long-axis-direction extension lines passing through the centers of the oriented particles and angle baselines connecting between the central points of the extension lines and the central point of the secondary particle is 20 or less, and the central point of each of the extension lines is the center of a line connecting one end to the other end of the oriented particle.

Still another embodiment of the present invention includes a positive electrode active material for a lithium secondary battery including a secondary particle composed of a plurality of primary particles, wherein the primary particles include oriented particles provided in the surface portion of the secondary particle and having a short axis and a long axis, and the oriented particles include those in which the distance between a long-axis-direction extension line passing through the centers of the oriented particles and a central baseline passing through the central point of the secondary particle in parallel with the extension line is 1.5 µm or less.

Other embodiments of the present invention include a positive electrode active material for a lithium secondary battery including a secondary particle composed of a plurality of primary particles, wherein the primary particles include oriented particles provided in the surface portion of the secondary particle and having a short axis and a long axis, wherein the primary particles contain a heteroatom, wherein the heteroatom is provided at the grain boundary between the primary particles and inside the primary particles, and the concentration of the heteroatom is higher at the grain boundary between the primary particles than inside the primary particles, so that the heteroatom reduces the degree of agglomeration of the oriented particles when the positive electrode active material is calcined at a high temperature of 700°C or higher.

In one embodiment, 70% or more of the primary particles distributed in a thickness (T) region ranging from the outermost surface of the secondary particle to a portion corresponding to 40% of the diameter (L) of the secondary particle in a direction toward the center of the secondary particle may be oriented particles.

In one embodiment, the thickness (T) ranging from the outermost surface of the secondary particle to a portion corresponding to 40% of the diameter (L) of the secondary particle in a direction toward the center of the secondary particle may be 1.5 µm to 4 µm.

In one embodiment, the long-axis direction of the oriented particles may correspond to a lithium ion diffusion path.

In one embodiment, the average aspect ratio of the oriented particles, which is the ratio of the length of the long axis to the length of the short axis, may be 2.5 to 15.

In one embodiment, the average diameter of the secondary particles may be 5 µm to 20 µm.

In one embodiment, the heteroatom may be composed of any one or more of antimony (Sb), molybdenum (Mo), tungsten (W), niobium (Nb), tellurium (Te), tantalum (Ta), zirconium (Zr), titanium (Ti), tin (Sn), yttrium (Y), indium (In), vanadium (V), and chromium (Cr).

In one embodiment, the average concentration of the heteroatom in the positive electrode active material may be 0.01 mol% to 2 mol%.

In one embodiment, the positive electrode active material may include one prepared by calcining a lithium compound together with a composite metal hydroxide including any one or more of nickel (Ni), cobalt (Co), manganese (Mn), and aluminum (Al), wherein the heteroatom is added together with any one or more of nickel (Ni), cobalt (Co), manganese (Mn), and aluminum (Al), or added together with the lithium compound, before calcination.

In one embodiment, the positive electrode active material may include lithium, a transition metal and oxygen, the primary particles may include a layered crystal structure in which a lithium (Li) layer including only lithium and a transition metal layer including only a transition metal are alternately and regularly arranged, the doping region may include a cation-ordered structure, the cation-ordered structure may include a first mixed layer and a second mixed layer, each containing lithium and the transition metal, together with the lithium layer and the transition metal layer, the content of lithium in the first mixed layer may be higher than the content of the transition metal therein, the content of the transition metal in the second mixed layer may be higher than the content of lithium therein, the first mixed layer and the second mixed layer may be stacked together, and a unit cell formed by the first mixed layer and second mixed layer stacked together may include a long-range ordered lattice with an increased a-axis lattice constant.

In one embodiment, the positive electrode active material may include one prepared by calcining a lithium compound together with a composite metal hydroxide containing any one or more of nickel (Ni), cobalt (Co), manganese (Mn), and aluminum (Al), and the positive electrode active material may be any one or more of NC-based, NCM-based, NCA-based, LNO-based, and NCMA-based positive electrode active materials.

In one embodiment, the composite metal hydroxide may be produced by a co-precipitation reaction such that any one or more of nickel (Ni), cobalt (Co), manganese (Mn), and aluminum (Al), which are contained in the composite metal hydroxide, have a concentration gradient in at least a portion of the composite metal hydroxide.

Embodiments according to another aspect of the present invention include a lithium secondary battery including: a positive electrode including the above-described positive electrode active material; a negative electrode facing the positive electrode and comprising graphite or lithium metal; a separator interposed between the positive electrode and the negative electrode; and an electrolyte solution or solid electrolyte containing a lithium salt.

Embodiments according to still another aspect of the present invention a composite metal hydroxide for a lithium secondary battery including at least one of nickel (Ni), cobalt (Co), manganese (Mn), and aluminum (Al) and including a preliminary secondary particle composed of a plurality of preliminary primary particles, wherein the preliminary primary particles include oriented particles provided in the surface portion of the preliminary secondary particle and provided in a rod shape having a short axis and a long axis, the oriented particles include those in which the average absolute value of acute angles between long-axis-direction extension lines passing through the centers of the oriented particles and angle baselines connecting between the central points of the extension lines and the central point of the secondary particle is 20 or less, the central point of each of the extension lines is the center of a line connecting one end to the other end of the oriented particle, and the oriented particles include those in which the distance between the long-axis-direction extension line passing through the centers of the oriented particles and a central baseline passing through the central point of the secondary particle in parallel with the extension line is 1.5 µm or less.

In one embodiment, the composite metal hydroxide may be produced by a co-precipitation reaction such that any one or more of nickel (Ni), cobalt (Co), manganese (Mn), and aluminum (Al), which are contained in the composite metal hydroxide, have a concentration gradient in at least a portion of the composite metal hydroxide.

### Advantageous Effects

According to the present invention as described above, it is possible to provide a positive electrode active material having improved cycle life characteristics and charge-discharge rate capability by having a high content of nickel and suppressing the formation of microcracks in the charged state of the nickel-rich positive electrode active material while maintaining a high discharge capacity, and a lithium secondary battery including the same.

In addition, according to the present invention, it is possible to provide a positive electrode active material in which at least a portion of primary particles are rod-shaped primary particles having a long axis and a short axis, and the primary particles include a heteroatom at the grain boundary between the primary particles at a higher concentration than in the central positions of the primary particles, and thus the positive electrode active material has a high content of nickel (Ni-rich), and at the same time, the crystal structure and the morphology of the primary particles are maintained during long-term cycling, thereby reducing the formation of microcracks, and a lithium secondary battery including the same.

### Brief Description of Drawings

FIG. 1 schematically shows a secondary particle according to an embodiment of the present invention.
FIG. 2 is a schematic sectional view of a positive electrode active material according to an embodiment of the present invention.
FIG. 3 schematically shows the movement of lithium ions in the positive electrode active material according to an embodiment of the present invention.
FIG. 4 is a schematic view illustrating a positive electrode active material including different element according to the present invention.
FIG. 5 shows diameter (L) and thickness (T) in a positive electrode active material according to an embodiment of the present invention.
FIG. 6 schematically shows a method of measuring orientation angle in a positive electrode active material according to an embodiment of the present invention.
FIG. 7 schematically shows a method of measuring orientation distance in a positive electrode active material according to an embodiment of the present invention.
FIG. 8 shows SEM images of composite metal hydroxides of Preparation Examples 1 to 21 of the present invention before calcination.
FIG. 9 shows SEM images of composite metal hydroxides of Preparation Examples 1 to 21.
FIG. 10 depicts TEM images of a precursor and of positive electrode active materials containing aluminum and molybdenum, respectively, after calcination at 600°C.
FIG. 11 shows the results of analyzing the orientations of positive electrode active materials containing aluminum and molybdenum, respectively, at different calcination temperatures.
FIG. 12 shows SEM images of a precursor and of positive electrode active materials containing 1 mol% aluminum and 1 mol% molybdenum, respectively, at different calcination temperatures.
FIG. 13 depicts graphs showing the results of analyzing the charge/discharge rate capabilities of positive electrode active materials containing aluminum and molybdenum, respectively, after calcination at 800°C.
FIG. 14 shows the results of TEM-EDX elemental mapping of positive electrode active materials containing aluminum, molybdenum and niobium, respectively.
FIG. 15 shows the results of TEM-EDX elemental line scanning of the positive electrode active materials according to FIG. 14.
FIG. 16 shows the results of TOF-SIMS sputtering of positive electrode active materials containing molybdenum, niobium and tantalum, respectively.
FIG. 17 shows the results of evaluating the capacity retention for positive electrode active materials prepared at different calcination temperature in Preparation Examples, after 100 cycles.
FIG. 18 is a graph showing the 500-cycle life characteristics of positive electrode active materials prepared in Preparation Examples.
FIG. 19a shows the number of primary particles per unit area of each of positive electrode active materials containing equal amounts of aluminum and molybdenum, respectively, depending on calcination temperature.
FIG. 19b shows microcracks in positive electrode active materials containing equal amounts of aluminum and molybdenum, respectively, when charged to 4.3 V.
FIG. 19c shows microcracks in positive electrode active materials containing equal amounts of aluminum and molybdenum, respectively, after 500 cycles.
FIG. 20 shows the results of analyzing the cation-ordered structure of Preparation Example 19.
FIG. 21 is a graph showing the average width of primary particles located in the surface portion of a secondary particle in each of positive electrode active materials prepared in Preparation Examples of the present invention at different calcination temperatures.
FIG. 22 is a graph showing the average aspect ratio of primary particles located in the surface portion of a secondary particle in each of positive electrode active materials prepared in Preparation Examples of the present invention at different calcination temperatures.
FIG. 23 is a graph showing the average grain size of primary particles located in the surface portion of a secondary particle in each of positive electrode active materials prepared in Preparation Examples of the present invention at different calcination temperatures.
FIG. 24 shows the results of measuring the orientation angles of primary particles provided in the surface portion of each individual secondary particle depending on the type of heteroatom and calcination temperature.
FIG. 25 shows the average value of the orientation angles shown in FIG. 24, depending on calcination temperature.
FIG. 26 shows the average value of the orientation angles shown in FIG. 24, depending on the type of heteroatom.
FIG. 27 shows the results of measuring the orientation distances of primary particles provided in the surface portion of each individual secondary particle depending on the type of heteroatom and calcination temperature.
FIG. 28 shows the average value of the orientation distances shown in FIG. 27, depending on calcination temperature.
FIG. 29 shows the average value of the orientation distances shown in FIG. 27, depending on the type of heteroatom.
FIG. 30 depicts graphs showing capacity retention after 100 cycles for the average values of the widths, grain sizes and aspect ratios of primary particles in Preparation Examples 1 to 21 depending on calcination temperature.
FIG. 31 depicts graphs showing capacity retention after 100 cycles for the average values of the orientation angles and orientation distances of primary particles in Preparation Examples 1 to 21 depending on calcination temperature.
FIG. 32 shows SEM images of secondary particles in NC90-based positive electrode active materials containing different types of heteroatom.
FIG. 33 shows SEM images of the shapes of primary particles provided in the surface portion of a secondary particle in each of a positive electrode active material containing boron and aluminum and a positive electrode active material containing tantalum.
FIG. 34 shows the results of TEM-EDX elemental mapping (a), TEM-EDX elemental line scanning (b) and TOF-SIMS sputtering (c) of an NC90-based positive electrode active material containing tungsten.
FIG. 35 shows the results of TEM-EDX elemental mapping (a), TEM-EDX elemental line scanning (b) and TOF-SIMS sputtering (c) of an NC90-based positive electrode active material containing antimony.
FIG. 36 is a graph showing the results of measuring the orientation angles of primary particles provided in the surface portion of a secondary particle in each of NC90-based positive electrode active materials containing different types of heteroatom.
FIG. 37 depicts graphs showing orientation distances in positive electrode active materials containing aluminum, tantalum and molybdenum, respectively.
FIG. 38 shows the results of measuring the aspect ratio (a), width (b) and grain size (c) of primary particles.
FIG. 39 shows the results of evaluating the long-term cycle life characteristics of NC90-based positive electrode active materials containing different types of heteroatoms.
FIG. 40 shows the results of EDAX mapping of Preparation Example 35 (Sb0.5-Gradient NCM90).
FIG. 41 depicts SEM images of the cross-sections of a composite metal hydroxide, which is a precursor before calcination, and concentration gradient-type NCM-based positive electrode active materials, depending on the type of heteroatom and calcination temperature.
FIG. 42 depicts graphs showing the aspect ratios of oriented particles in concentration gradient-type NCM-based positive electrode active materials depending on the type of heteroatom.
FIG. 43 depicts graphs showing the widths of oriented particles in concentration gradient-type NCM-based positive electrode active materials depending on the type of heteroatom.
FIG. 44 depicts graphs showing the orientation angles of oriented particles in concentration gradient-type NCM-based positive electrode active materials depending on the type of heteroatom.
FIG. 45 depicts graphs showing the orientation distance of oriented particles in concentration gradient-type NCM-based positive electrode active materials depending on the type of heteroatom.
FIG. 46 depicts graphs showing the aspect ratios in concentration gradient-type NCM-based positive electrode active materials depending on calcination temperature.
FIG. 47 depicts graphs showing the widths in concentration gradient-type NCM-based positive electrode active materials depending on calcination temperature.
FIG. 48 depicts graphs showing the orientation angles in concentration gradient-type NCM-based positive electrode active materials depending on calcination temperature.
FIG. 49 depicts graphs showing the orientation distances in concentration gradient-type NCM-based positive electrode active materials depending on calcination temperature.
FIG. 50 shows the results of comparing the characteristics of particles between a concentration gradient-type NCM-based positive electrode material as a precursor, and a concentration gradient-type pristine NCM-based positive electrode active material containing or not containing antimony, at a calcination temperature of 770°C.
FIG. 51 is a graph showing capacity retention after 100 cycles for concentration gradient-type NCM-based positive electrode active materials containing different types of heteroatom at calcination temperatures of 730°C, 750°C and 770°C.
FIG. 52 depicts graphs showing the concentration gradients of transition metals in a concentration gradient-type NCM-based positive electrode active material containing no heteroatom, a concentration gradient-type NCM-based positive electrode active material containing 0.5 mol% antimony, a concentration gradient-type NCM-based positive electrode active material containing 0.5 mol% tantalum, depending on calcination temperature.
FIG. 53 is a graph showing the concentration gradients of nickel in the central portion and surface portion of a secondary particle in each of a concentration gradient-type NCM-based positive electrode active material containing no heteroatom, a concentration gradient-type NCM-based positive electrode active material containing 0.5 mol% antimony, a concentration gradient-type NCM-based positive electrode active material containing 0.5 mol% tantalum, depending on calcination temperature.
FIG. 54 shows the results of TEM-EDX elemental mapping for Preparation Example 58.
FIG. 55 depicts SEM images of secondary particles in NCM90-based positive electrode active materials containing different concentrations of a heteroatom.
FIG. 56 is a graph showing the average size of grains in NCM90-based positive electrode active materials containing different concentrations of a heteroatom.
FIG. 57 shows SEM images of the cross-sections of secondary particles in NCMA89-based positive electrode active materials containing different concentrations of a heteroatom.
FIG. 58 is a graph showing the average size of grains in NCMA89-based positive electrode active materials containing different concentrations of a heteroatom.
FIG. 59 shows SEM images of the positive electrode active materials of Preparation Examples 69 and 71.

### Best Mode

Hereinafter, preferred embodiments of the present invention will be described in detail with reference to the accompanying drawings. However, the technical spirit of the present invention is not limited to the embodiments disclosed herein and may be embodied in other forms. Rather, the embodiments disclosed herein are provided so that this disclosure will be thorough and complete, and will fully convey the spirit of the present invention to those skilled in the art.

Throughout the present specification, when any component is referred to as being "on" another component, it not only refers to a case where the component is directly on the other but also a case where a third component exists between them. In addition, in the drawings, the thicknesses of the film and the region are exaggerated for effective description of the technical contents.

Furthermore, terms such as first, second, third and the like are used in various embodiments of the present specification in order to describe various components, but these components should not be limited by these terms. These terms are only used to distinguish any component from another component. Thus, a component referred to as a first component in any one embodiment may also be referred to as a second component in other embodiments. Each embodiment described and illustrated herein includes its complementary embodiment as well. Moreover, as used herein, the term "and/or," includes at least one of the associated listed items.

In the specification, singular expressions include plural expressions unless specified otherwise in the context thereof. The terms "include", "comprise", "have", etc., are intended to denote the existence of mentioned characteristics, numbers, steps, components, or combinations thereof, but do not exclude the probability of existence or addition of one or more other characteristics, numbers, steps, components, or combinations thereof.

In the following description, the detailed description of related known functions or configurations will be omitted when it may obscure the subject matter of the present invention.

In addition, in the present specification, "the expression "the proportion of the first crystal structure in a specific portion is higher than the proportion of the second crystal structure" means that the specific portion includes both the first crystal structure and the second crystal structure, and means not only that the proportion of the first crystal structure in the specific portion is higher than the proportion of the second crystal structure, but also that the specific portion has only the first crystal structure.

In addition, in the present specification, the crystal system may consist of seven crystal systems: triclinic, monoclinic, orthorhombic, tetragonal, trigonal or rhombohedral, hexagonal, and cubic crystal systems.

In addition, in the present application, "mol%" is interpreted as meaning the content of any metal in a positive electrode active material or a positive electrode active material precursor, based on 100% of the sum of metals other than lithium and oxygen in the positive electrode active material or the positive electrode active material precursor.

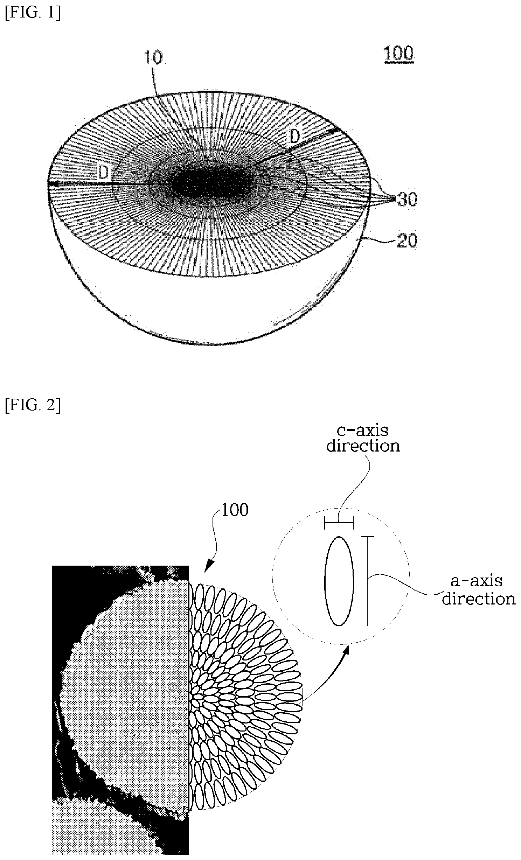

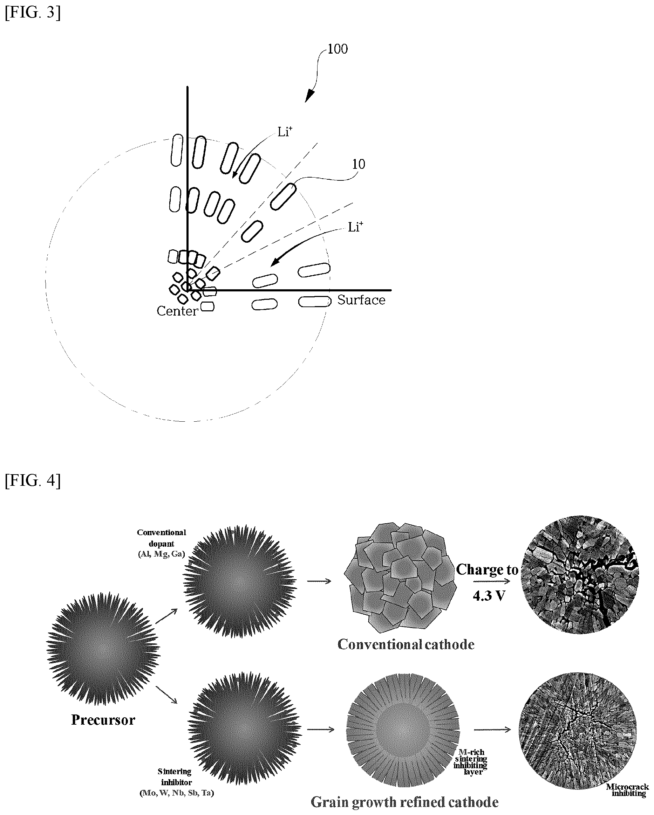

FIG. 1 schematically shows a secondary particle according to an embodiment of the present invention. FIG. 2 is a schematic sectional view of a positive electrode active material according to an embodiment of the present invention. FIG. 3 schematically shows the movement of lithium ions in the positive electrode active material according to an embodiment of the present invention.

Referring to FIGS. 1 to 3, the positive electrode active material according to an embodiment of the present invention may comprise a secondary particle 100 having an approximately spherical shape. The secondary particle 100 may be divided into a central portion 10 and a surface portion 20, and may be formed by agglomeration of a plurality of primary particles 30. The primary particles 30 may form a layered structure.

In the secondary particle 100, the primary particles 30 constituting the central portion 10 and the primary particles 30 constituting the surface portion 20 may have the same or different sizes, and the primary particles 30 constituting the surface portion 20 may be provided in a shape having a long axis and a short axis, and at least a portion of the primary particles 30 constituting the surface portion 20 may be oriented toward the central portion 10 of the secondary particle 100. At least a portion of the primary particles 30 constituting the surface portion 20 may be provided in a radial form.

The secondary particle 100 may be composed of one or more metals including lithium, and at least a portion of the one or more metals may have a concentration gradient in the central portion 10 and the surface portion 20. Alternatively, in the secondary particle 100, a gap may be formed between the central portion 10 and the surface portion 20, or the crystal form may be different between the central portion 10 and the surface portion 20, or a difference in image between the central portion 10 and the surface portion 20 may be created by making the central portion 10 and then making the surface portion 20 to surround the central portion 10. Thus, the secondary particle may be provided in a core-shell form.

The primary particles 30 may extend radially from one region in the second particle toward the surface portion 20 of the secondary particle. The one region in the secondary particle may be the central portion 10 of the secondary particle. In other words, the primary particle 30 may be formed in a flake shape, and the cross-section of the primary particles 30 may be of a rod shape extending from one region inside the secondary particle toward the surface 20 of the secondary particle.

Between the primary particles 30 having a rod shape, that is, between the primary particles 30 extending in a direction D from the central portion 10 of the secondary particle to the surface portion 20 thereof, a path for movement of metal ions (e.g., lithium ions) and an electrolyte may be provided. Accordingly, the positive electrode active material according to an embodiment of the present invention may improve the charging and discharging efficiency of a secondary battery.

According to one embodiment, in the direction from the center 10 of the secondary particle toward the surface 20 of the secondary particle, the primary particles 30 relatively adjacent to the surface portion 20 of the secondary particle may have a longer length than the primary particles 30 relatively adjacent to the central portion 10 of the secondary particle. In other words, in at least a portion of the secondary particle extending from the central portion 10 of the secondary particle to the surface portion 20, the length of the primary particles 30 may increase toward the surface portion 20.

For example, at least a portion of the primary particles 30 may have a short axis length and a long axis length, wherein the long axis length is longer than the short axis length. Thus, at least a portion of the primary particles 30 may be provided in a rod shape having an aspect ratio of 1 or more.

FIG. 4 is a schematic view illustrating a positive electrode active material containing a heteroatom according to the present invention.

According to one embodiment of the present invention, in a positive electrode material including a secondary particle composed of a plurality of primary particles, at least one of the primary particles may contain a heteroatom. The hetero element may be an element other than lithium (Li), nickel (Ni), cobalt (Co), manganese (Mn) and aluminum (Al), and the heteroatom may comprise any one or more of antimony (Sb), molybdenum (Mo), tungsten (W), niobium (Nb), tellurium (Te), tantalum (Ta), zirconium (Zr), titanium (Ti), tin (Sn), yttrium (Y), indium (In), vanadium (V), and chromium (Cr).

Referring to FIG. 4, the positive electrode active material is prepared by mixing a composite metal hydroxide as a precursor with a lithium compound and calcining the mixture at high temperature. In this case, the composite metal hydroxide comprises a preliminary secondary particle formed by agglomeration of a plurality of preliminary primary particles, and the preliminary primary particles are provided in a rod shape having a large aspect ratio. After the composite metal hydroxide is calcined at high temperature, agglomeration of the preliminary primary particles occurs, and the primary particles in the prepared positive electrode active material have an equiaxed shape, and the rod shape does not remain. In addition, even when a conventional dopant such as aluminum, manganese or gallium is added, the rod shape shown in the composite metal hydroxide does not remain after calcination.

On the other hand, the positive electrode active material according to this embodiment contains a heteroatom. As the heteroatom, a compound containing an excess of the heteroatom is provided at the grain boundary between the primary particles, and thus can prevent a phenomenon in which the plurality of primary particles are agglomerated during high-temperature calcination. Accordingly, the composite metal oxide in the positive electrode active material containing the heteroatom has a rod shape approximately similar to that before calcination, and thus microcracks may be inhibited from being formed in the secondary particle during a charging/discharging process, thereby improving electrochemical properties.

The heteroatom may be provided in a doping region formed by diffusion into the primary particle, and an excess of the heteroatom may also be provided and remain at the grain boundary between the primary particles. The concentration of the heteroatom may be higher at the grain boundary between the primary particles than inside the primary particles, so that agglomeration of the oriented particles during calcination of the positive electrode active material at a high temperature of 700°C or higher may be reduced. The primary particles may include oriented particles provided on the surface portion of the secondary particle and having a short axis and a long axis.

For example, at the grain boundary between the primary particles, a compound (Li-HA-O) composed of the heteroatom (HA), lithium and oxygen may be provided and an excess of the heteroatom may remain. The heteroatom may be disposed between the plurality of primary particles or may be provided by accumulation of a compound containing the heteroatom at the grain boundary between the primary particles in an island form. Here, the island shape refers to a shape provided to cover the primary particles at the grain boundary between the primary particles while exposing at least a portion of the primary particle. The concentration of the heteroatom included in the island form may be higher than the concentration of the heteroatom inside the primary particle. For example, the thickness of the compound (containing an excess of the heteroatom) at the grain boundary between the primary particles (the average thickness of the islands) may be about 2 nm to 15 nm, or 2 nm to 13 nm, or 2 nm to 10 nm, or 2 nm to 8 nm, or 2 nm to 5 nm, or 5 nm to 15 nm, or 7 nm to 15 nm, or 10 nm to 15 nm.

Specifically, when the heteroatom is tantalum (Ta), the compound may comprise any one or more of Ta₂O₅, LiTaO₃, Li₂TaO₃, Li₂TaO₄ and Li₃TaO₄; when the heteroatom is antimony (Sb), the compound may comprise any one or more of Sb₂O₃, Sb₂O₅, LiSbO₃, Li₂SbO₃, Li₂SbO₄ and Li₃SbO₄; and when the heteroatom is niobium (Nb), the compound may comprise any one or more of Nb₂O₅, LiNbO₃, LiNb₃O₃, Li₂NbO₃, Li₂NbO₄ and Li₃NbO₄. In addition, when the heteroatom is tungsten (W), the compound may comprise any one or more of WO₃, LiWO₃, Li₂WO₃, Li₂WO₄ and Li₃WO₄, and when the heteroatom is molybdenum (Mo), the compound may comprise any one or more of MoO₃, LiMoO₃, Li₂MoO₃, Li₂MoO₄, and Li₃MoO₄.

The doping region may be formed by uniform diffusion of the same heteroatom as the heteroatom provided at the grain boundary into the primary particle. The heteroatomcontaining compound provided on the grain boundary between the primary particles may interact with the elements constituting the primary particles, whereby the compound may function as a sintering inhibitor that reduces the extent to which pristine particles constituting the composite metal hydroxide are agglomerated together, even when the composite metal hydroxide is calcined at high temperature.

The heteroatom provided in excess at the grain boundary between the primary particles may prevent preliminary primary particles constituting the composite metal hydroxide, which is a precursor of the positive electrode active material, from being converted into equiaxed grains due to agglomeration of the particles during calcination at a high temperature of 700°C or higher, so that the primary particles of the positive electrode active material after calcination may have a rod shape approximately similar to the rod shape of the preliminary primary particles of the composite metal hydroxide.

The average concentration of the heteroatom in the positive electrode active material may be 0.01 mol% to 2 mol%, specifically 0.05 mol% to 2 mol%, or 0.1 mol% to 2 mol%, or 0.5 mol% to 2 mol%. The average concentration of the heteroatom at the grain boundary between the primary particles may be 0.5 mol% to 12 mol%, specifically 2 mol% to 12 mol%.

If the average concentration of the heteroatom throughout the positive electrode active material is less than 0.01 mol%, a problem may arise in that the heteroatom is not uniformly distributed throughout the primary particles constituting the secondary particle, and if the average concentration is more than 2mol%, a problem may arise in that the heteroatom may degrade capacity. In addition, if the average concentration of the heteroatom at the grain boundary between the primary particles is less than 2 mol%, a problem may arise in that the heteroatom cannot prevent agglomeration of the primary particles during high-temperature calcination, and if the average concentration is more than 12 mol%, a problem may arise in that the heteroatom is excessively accumulated at the grain boundary between the primary particles, so that the movement of lithium ions through the primary particles is not easy.

The positive electrode active material may contain lithium, a transition metal and oxygen, and the primary particles may include a layered crystal structure in which a lithium layer containing only lithium and a transition metal layer containing only a transition metal are alternately and regularly arranged. Here, the primary particles may further include a cation-ordered structure in a doping region formed by diffusion of the heteroatom.

The cation-ordered structure, together with the lithium layer and the transition metal layer, may further include a first mixed layer and a second mixed layer, each containing both lithium and a transition metal, wherein the content of lithium in the first mixed layer may be higher than the content of the transition metal, and the content of the transition metal in the second mixed layer may be higher than the content of lithium.

The first mixed layer and the second mixed layer are stacked together, and a unit cell formed by the first mixed layer and second mixed layer stacked together may include a long-range ordered lattice with an increased a-axis lattice constant. A lattice formed by the first and second mixed layers stacked adjacent to each other may include a superlattice whose a-axis is twice as long as that of a lattice formed by the lithium layer and the transition metal layer.

Specifically, the first mixed layer and the second mixed layer may be stacked adjacent to each other and alternately and regularly repeated to form a layered structure, and the first and second mixed layers stacked adjacent to each other may be configured such that the transition metal of the first mixed layer and the lithium of the second mixed layer may correspond to each other.

For example, the first and second mixed layer may be configured such that the lithium of the lithium layer and the transition metal of the transition metal layer are substituted with each other.

One example of the cation-ordered structure may include an ordered lattice structure formed by 1:1 site exchange between the lithium and transition metal provided at the positions corresponding to each other in the lithium layer and transition metal layer facing each other, although only lithium is present in the lithium layer and only the transition metal is present in the transition metal layer.

Another example of the cation-ordered structure may include a structure in which a lithium-transition metal layer and a transition metal-lithium layer are alternately and regularly formed, wherein a layer formed by exchange of the lithium of the lithium layer with the transition metal is referred to as the lithium-transition metal layer (first mixed layer), and a layer formed by site exchange of the transition metal of the transition metal layer with the lithium of the lithium layer is referred to as the transition metal-lithium layer (second mixed layer).

The positive electrode active material according to this embodiment may be composed of primary particles having a layered structure, and the cation-ordered structure may be formed adjacent to the grain boundary in the primary particles.

A lattice formed by the lithium-transition metal layer and the transition metal-lithium layer may include a long-range ordered lattice whose a-axis is longer than that of a lattice formed by the lithium layer and the transition metal layer.

The positive electrode active material may be prepared by calcining a lithium compound and a composite metal hydroxide including at least one of nickel (Ni), cobalt (Co), manganese (Mn) and aluminum (Al). In this case, the heteroatom may be added together with at least one of nickel (Ni), cobalt (Co), manganese (Mn) and aluminum (Al) in a wet process, or may be added together with the lithium compound in a dry process and calcined. As the composite metal hydroxide is calcined together with the lithium compound at high temperature, a spherical positive electrode active material formed by calcination may be produced. The heteroatom may be calcined together with the lithium compound after already included in the composite metal hydroxide, or may be added together with the lithium compound. In the positive electrode active material produced by calcination, the heteroatom may form a doping region inside the primary particle, and may be provided in excess in the form of a compound at the grain boundary between the primary particles.

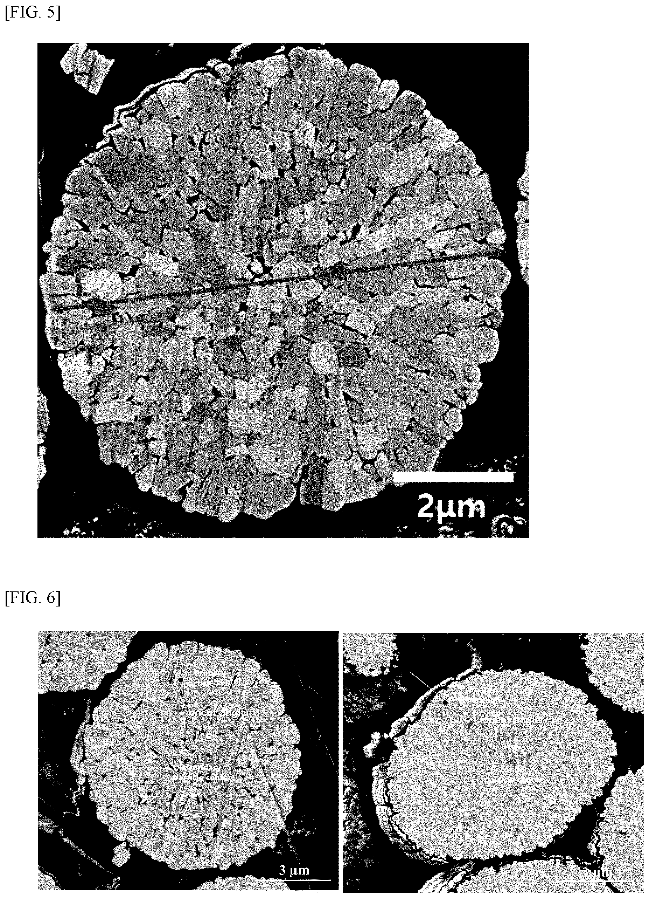

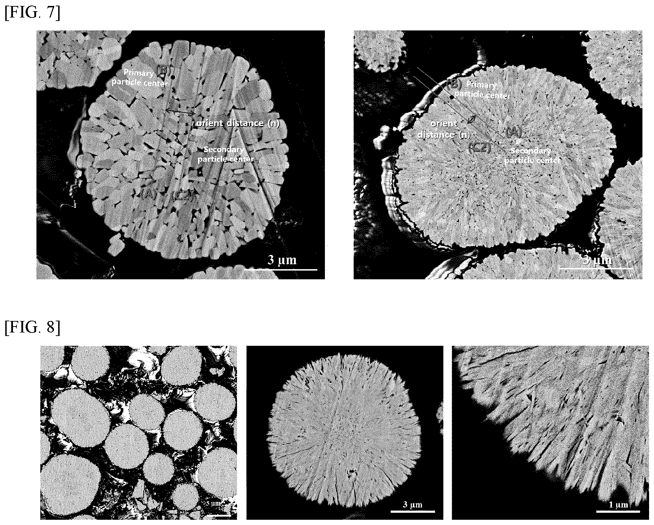

FIG. 5 shows diameter (L) and thickness (T) in a positive electrode active material according to an embodiment of the present invention. FIG. 6 schematically shows a method of measuring orientation angle in the positive electrode active material according to an embodiment of the present invention. FIG. 7 schematically shows a method of measuring oriented distance in the positive electrode active material according to an embodiment of the present invention.

The primary particles may include oriented particles provided on the surface of the secondary particle and having a long axis and a short axis, and the oriented particles may include those in which the average absolute value (orientation angle) of acute angles among angles between long-axis-direction extension lines passing through the centers of the oriented particles and angle baselines connecting between the central points of the extension lines and the central point of the secondary particle is 20 or less, wherein the central point of each of the extension lines may be the center of a line connecting one end to the other end of the oriented particle. The distance (orientation distance) between the long-axis-direction extension line passing through the centers of the primary particles and the central baseline passing through the central point of the secondary particle in parallel with the extension line may be 1.5 µm or less.

The secondary particles may have an average diameter of 5 µm to 20 µm. The secondary particles may have an approximately spherical shape, and specifically, the secondary particles have an average diameter of 6 µm to 20 µm, or 9 µm to 20 µm, or 12 µm to 20 µm, or 15 µm to 20 µm, or 5 µm to 18 µm, or 5 µm to 15 µm, 5 µm to 10 µm.

When the compound containing an excess of a heteroatom is provided at the grain boundary between the primary particles according to this embodiment, the primary particles constituting the positive electrode active material after calcination may have a rod shape approximately similar to that of preliminary primary particles constituting the composite metal hydroxide.

For example, the composite metal hydroxide may contain any one or more of nickel, cobalt, magnesium and aluminum, and may include an approximately sphere-shaped preliminary secondary particle prepared by a co-precipitation method and formed by agglomeration of a plurality of preliminary primary particles. Among the preliminary primary particles, the preliminary primary particles provided on the surface of the preliminary secondary particle may include oriented particles having a rod shape.

The oriented particles may include highly oriented particles provided on the surface of the preliminary secondary particle, among the preliminary primary particles constituting the composite metal hydroxide, and may include those in which the average absolute value of acute angles (e.g., orientation angles) among angles between long-axis-direction extension lines passing through the centers of the oriented particles and angle baselines connecting between the central points of the extension lines and the central point of the secondary particle is 20 or less, wherein the central point of each of the extension lines may be the center of a line connecting one end to the other end of the oriented particle.

The oriented particles may include those in which the distance (e.g., orientation distance) between the long-axis-direction extension line passing through the centers of the oriented particles and the central baseline passing through the central point of the secondary particle in parallel with the extension line may be 1.5 µm or less.

The orientation angle and orientation distance of the oriented particles in the composite metal hydroxide may affect the orientation angle and orientation distance of the primary particles of the positive electrode active material provided after high-temperature calcination, and even when the oriented particles of the composite metal hydroxide have an orientation angle and an orientation distance within the above-described ranges, the positive electrode active material produced by calcination at high temperature may have a structure with improved stability.

In addition, the composite metal hydroxide is produced by a co-precipitation reaction, and at least any one or more of nickel (Ni), cobalt (Co), manganese (Mn) and aluminum (Al) constituting the composite metal hydroxide may have a concentration gradient in at least a portion of the composite metal hydroxide.

The composite metal hydroxide may be mixed with a lithium compound and then calcined at high temperature to produce a positive electrode active material. Here, the extent to which the preliminary primary particles constituting the composite metal oxide are agglomerated during the calcination process may be reduced, and thus the primary particles constituting the positive electrode active material which is a calcined body may have a shape similar to the rod shape of the preliminary primary particles.

In the positive electrode active material according to this embodiment, 70% or more of the primary particles distributed in a thickness (T) region ranging from the outermost surface of the secondary particle to a portion corresponding to 40% of the diameter (L) of the secondary particle in a direction toward the center may be oriented particles. Specifically, the proportion of oriented particles among the primary particles distributed in a thickness (T) region ranging from the outermost surface of the secondary particle to a portion corresponding to 40% of the diameter (L) of the secondary particle in a direction toward the center may be about 75% or more, or 80% or more, or 85% or more.

For example, the orientation of the primary particles provided in a thickness (or depth, T) region ranging from the outermost surface to a portion corresponding to 40% of the diameter (L) of the secondary particle in a direct toward the inside may be particularly high, and the number of the primary particles provided in the surface portion of the secondary particle, which is the thickness (T) region of the secondary particle, may be similar to the number of preliminary primary particles in the composite metal hydroxide which is a precursor before high-temperature calcination.

In general, the thickness (T) region of the secondary particle is a portion that is particularly affected by heat during the calcination process. Thus, a problem arises in that, when the composite metal hydroxide is calcined, the orientation of the primary particles in the thickness (T) region of the secondary particle is reduced due to agglomeration of the primary particles.

On the other hand, in the positive electrode active material according to this embodiment, the heteroatom provided in excess at the grain boundary between the primary particles can prevent agglomeration of the primary particles in the thickness (T) region of the secondary particle so as to have high orientation. Accordingly, even after the positive electrode active material according to this embodiment is calcined at high temperature, the structure and orientation of the preliminary primary particles in the precursor stage can be maintained similar to those of the primary particles in the calcined body, and thus the overall structural stability of the positive electrode active material may be ensured and movement of lithium ions through the positive electrode active material may be easy even after multiple charging/discharging cycles.

In the positive electrode active material according to this embodiment, 80% or more of the primary particles distributed in a thickness (T) region ranging from the outermost surface of the secondary particle to a portion corresponding to 40% of the diameter (L) of the secondary particle in a direction toward the center may be oriented particles. The long-axis direction of the oriented particles may correspond to a lithium ion diffusion path.

The primary particles may further include oriented particles, and the oriented particles may be provided approximately in the surface portion of the secondary particle. Specifically, the secondary particle may have a spherical shape having a central portion and a surface portion, and the oriented particles may be provided in the surface portion of the secondary particle, that is, a portion that comes into contact with an electrolyte.

Referring to FIG. 6, the orientation angle refers to a narrow angle among angles between long-axis-direction extension lines (A) passing through the centers of the oriented particles and angle baselines (C1) connecting between the central points (B) of the extension lines in the oriented particles and the central point of the secondary particle. In this embodiment, the longest line segment among line segments having, as both endpoints, intersection points between the straight line passing through the center of the oriented particles and the oriented particle is referred to as a long axis. The long axis is a line segment connecting two points furthest from the center of the oriented particle, and the long axis is orthogonal to the short axis.

As the average of the orientation angles in the positive electrode active material according to this embodiment is 20 or less, the primary particles are aligned from the outermost surface of the secondary particle toward the center of the secondary particle, and thus may provide a movement path to facilitate lithium ion diffusion. As shown in the left drawing of FIG. 6, when the extension line (A) is drawn at the left with respect to the angle baseline (C1), an acute angle between the extension line (A) and the angle baseline (C1) is a (-) angle. As shown in the right drawing of FIG. 6, when the extension line A is drawn at the right with respect to the angle baseline (C1), the acute angle is a (+) angle. In this embodiment, the orientation angle is expressed as an absolute value.

When the average of the orientation angles of the oriented particles provided at the outer surface of the secondary particle is 20 or less, the oriented particles are structurally aligned in the secondary particle, the change in the volume of the primary particles during charging/discharging may occur reversibly, thereby preventing the occurrence of microcracks and changes in the morphology of the particles. In addition, the positive electrode active material may relieve micro strain in the positive electrode active material even under hard conditions such as high voltage and/or high-rate charge and discharge after long-term cycling, and prevent stress accumulation, thereby further improving the performance characteristics of a secondary battery, such as electrochemical properties, safety, and reliability. Here, the morphology of the particles may be expressed by the orientation angle, orientation distance, grain size, aspect ratio, and width of the primary particles.

Specifically, in the oriented particles, the average of acute angles among angles between long-axis-direction extension lines passing through the oriented particles and angle baselines connecting the central points of the extension lines may be 2 to 20, or 3 to 20, or 4 to 20, or 2 to 18, or 2 to 15, or 2 to 12, or 2 to 10, or 4 to 10.

The oriented particles may include those in which the distance (orientation distance) between the long-axis-direction extension line (A) passing through the centers of the oriented particles and the central baseline (C2) passing through the central point of the secondary particle in parallel with the extension line (A) is 1.5 µm or less.

The orientation distance refers to an orientation angle (n) which is a distance between the line connecting the long axes of the primary particles provided in the surface portion of the secondary particle, for example, the long axes of the primary particles provided in a region at a distance of 2 µm or more from the center with respect to the radius of the secondary particle, and the central baseline (C2) passing through the central point of the secondary particle in parallel with the long axes of the oriented particles. This means that the number of primary particles aligned toward the center of the secondary particle increases as the orientation distance (n) decreases. The orientation distance n may indicate the degree of agglomeration of the primary particles provided in the surface portion of the secondary particle, together with the level at which the primary particles are aligned toward the center of the secondary particle. For example, as the orientation distance (n) decreases, the primary particles provided in the surface portion of the secondary particle may be aligned toward the center of the secondary particle to exhibit excellent orientation, and the degree of aggregation of the primary particles may decrease even after calcination.

As the orientation distance, which is a vertical distance or spacing between the extension line (A) of the oriented particles and the central baseline (C2), is maintained at 1.5 µm or less, the overall orientation of the secondary particles may be further improved. Specifically, the distance between the extension line of the oriented particles and the central baseline may be 0.1 µm to 1.5 µm, or 0.1 µm to 1.2 µm, or 0.1 µm to 1 µm, or 0.1 µm to 0.9 µm, or 0.2 µm to 1.5 µm, or 0.2 µm to 1.2 µm, or 0.1 µm to 1 µm, or 0.1 µm to 0.9 µm, or 0.2 µm to 0.9 µm.

As the positive electrode active material according to an embodiment of the present invention contains a heteroatom and the heteroatom is provided at high concentration at the grain boundary between the primary particles, the heteroatom may reduce the degree of agglomeration of the primary particles in the surface portion of the secondary particle during the calcination process, thereby maintaining the aspect ratio of the primary particles at a higher ratio, and improving the orientation of the primary particles provided in the outermost surface of the secondary particle so that the primary particles are aligned toward the center of the secondary particle.

In addition, the spacing between adjacent particles among the oriented particles, which are primary particles provided in the surface portion of the secondary particle with improved orientation, may be maintained at an approximately constant level, and the occurrence of microcracks and morphological changes of the particles by volumetric changes due to shrinkage and expansion of the primary particles during the charging/discharging process may be prevented. In addition, the positive electrode active material may relieve micro strain in the positive electrode active material even under hard conditions such as high voltage and/or high rate charge and discharge after long-term cycling, and prevent stress accumulation, thereby further improving the performance characteristics of a secondary battery, such as electrochemical properties, safety, and reliability. Here, the morphology of the particles may be expressed by the orientation angle, orientation distance, grain size, aspect ratio, and width of the primary particles.

Specifically, 80% or more of the primary particles distributed in a thickness (T) region ranging from the outermost surface of the secondary particle to a portion corresponding to 40% of the diameter (L) of the secondary particle in a direction toward the center may be oriented particles.

In addition, the thickness (T) ranging from the outermost surface of the secondary particle to a portion corresponding to 40% of the diameter (L) of the secondary particle in a direction toward the center may be 1.5 µm to 4 µm. Specifically, the thickness may be 1.2 µm to 4 µm, or 1.1 µm to 4 µm, or 1 µm to 4 µm, or 1.5 µm to 3.5 µm, or 1.5 µm to 3 µm, or 1.5 µm to 2.5 µm. Alternatively, when the average radius of the secondary particle is 5 µm, the thickness (T) may be 1.25 µm from the outermost surface of the secondary particle.

The oriented particles have a short axis and a long axis, and may include those in which an average aspect ratio which is the ratio of the length of the long axis to the length of the short axis is 2.5 to 15. Specifically, the average aspect ratio of the oriented particles may be 2.5 to 14, or 2.5 to 13, or 2.5 to 12, or 2.7 to 15, or 3 to 15, or 3 to 12.

The average grain size of the oriented particles may be obtained by calculating the square root of the average cross-sectional area of the oriented particles. Specifically, the average grain size may be 0.15 µm to 0.5 µm, or 0.18 µm to 0.5 µm, or 0.2 µm to 0.5 µm.

In general, in the process of preparing the positive electrode active material, it is not easy to make the average grain size of the primary particles 0.5 µm or less, except for a rapid heating method such as the SPS method. When the cathode active material is prepared by the co-precipitation method, the grain size inevitably increases in the process of synthesizing and heat-treating the composite metal hydroxide. In particular, when the composite metal hydroxide is heat-treated at 700°C or higher, a problem arises in that the average grain size of the primary particles in the prepared cathode active material increases to more than 0.5 µm.

On the other hand, as the positive electrode active material according to this embodiment contains a heteroatom such that the heteroatom is not only simply doped into the primary particle, but also provided in excess at the grain boundary between the primary particles, it is possible to control the grain size of the positive electrode active material to an ultra-fine grain size of 0.5 µm or less even after heat treatment at 700°C or higher, and accordingly, it is possible to prevent the occurrence of micro-cracks in a nickel-rich positive electrode active material.

For example, the average grain size of the oriented particles is a value obtained by calculating the cross-sectional area based on a TEM image of the positive electrode active material and taking the square root of the calculated value, and indicates the overall shape of the oriented particles. Here, the grain size can be obtained by measuring the cross-sectional area of the oriented particles to be measured using a size measuring program (e.g., ImageJ), and taking the square root of the measured cross-sectional area.

The positive electrode active material according to this embodiment may be prepared by calcining a lithium compound together with a composite metal hydroxide containing at least any one of nickel (Ni), cobalt (Co), manganese (Mn) and aluminum (Al), and the positive electrode active material may be any one or more of NC-based, NCM-based, NCA-based, LNO-based, and NCMA-based positive electrode active materials. For example, the NC-based, NCM-based, NCA-based, and NCMA-based positive electrode active materials are determined by the types of metal elements other than lithium and a heteroatom added as a dopant in the positive electrode active materials, wherein N denotes nickel (Ni), C denotes cobalt (Co), M denotes manganese (Mn), and A denotes aluminum (Al). The NC-based may refer to a positive electrode active material composed of nickel and cobalt without lithium and a heteroatom added as a dopant, the NCM-based may refer to a positive electrode active material composed of nickel, cobalt and manganese, the NCA-based may refer to a positive electrode active material composed of nickel, cobalt and aluminum, and the NCMA-based may refer to a positive electrode active material composed of nickel, cobalt, manganese and aluminum. In addition, the positive electrode active material according to this embodiment may further include an LNO-based positive electrode active material. The LNO-based may refer to a positive electrode active material composed of lithium (Li) and nickel (Ni).

The secondary particles include bulk type particles in which a concentration gradient does not appear throughout the secondary particles, and gradient type particles in which at least one of nickel (Ni), cobalt (Co), manganese (Mn) and aluminum (Al) has a concentration gradient. In addition, the secondary particle may comprise: a core portion which is provided in the central portion of the secondary particle; and a shell portion which is provided to cover the core portion and in which at least one of nickel (Ni), cobalt (Co), manganese (Mn) and aluminum (Al) has a concentration gradient. Specifically, the core portion in the secondary particle may be of bulk type, and the shell portion may be of gradient type.

The positive electrode active material according to this embodiment may be nickel (Ni)-rich, and for example, may contain 60 mol% or more, or 65 mol% or more, or 70 mol% or more, or 75 mol% or more, or 90 mol% or more of nickel. In at least one or more of the primary particles, a compound containing an excess of a heteroatom may be provided at the grain boundary between the primary particles, thereby suppressing the formation of microcracks during charging and discharging of the nickel-rich positive electrode active material.

In the positive electrode active material, the oriented particles may be provided in a rod shape, wherein the rod shape has a long axis and a short axis, the average length of the short axis may be 1.0 µm or less, and the average length of the long axis may be 1.0 µm or more.

Another aspect of the present invention includes a lithium secondary battery including: a positive electrode including the above-described positive electrode active material; a negative electrode facing the positive electrode and comprising graphite or lithium metal; a separator interposed between the positive electrode and the negative electrode; and an electrolyte solution or solid electrolyte containing a lithium salt.

### Mode for Invention

Hereinafter, examples and comparative examples of the present invention will be described. However, the following examples are only preferred examples of the present invention, and the scope of the present invention is not limited by the following examples.

### 1. Preparation of positive electrode active materials

### Preparation Example 1 (Al1-NC96)

10 liters of distilled water was placed in a co-precipitation reactor (volume: 40 L; rotary motor output: 750 W or more), and then N₂ gas was supplied into the reactor at a rate of 6 liters/minute and stirring was performed at 350 rpm while the temperature of the reactor was maintained at 45°C. Nickel sulfate aqueous solution (NiSO₄·6H₂O, Samchun Chemicals) and cobalt sulfate aqueous solution (CoSO₄·7H₂O, Samchun Chemicals) were mixed together in amounts such that the molar ratio between nickel (Ni) and cobalt (Co) was 96:4, thus preparing a 2M metal solution. The prepared metal solution, a 16M ammonia solution (NH₄OH, JUNSEI) and a 4M sodium hydroxide solution (NaOH, Samchun Chemicals) were continuously introduced into the reactor at rates of 0.561 liters/hour, 0.11 liters/hour and 0.60 liters/hour, respectively, for 24 hours. While the pH in the reactor was maintained in the range of 10 to 12, a co-precipitation reaction was performed to produce a Ni_{0.96}Co_{0.04}(OH)₂ composite metal hydroxide.

The produced composite metal hydroxide was filtered, washed several times with distilled water, and then dried in a dry oven at 110°C for 12 hours to obtain powder. The obtained composite metal hydroxide powder, aluminum hydroxide (Al(OH)₃) as a heteroatom, and lithium hydroxide (LiOH) were mixed at the molar ratio shown in Table 1 below, and then pre-calcined by heating at a rate of 2°C/min and then keeping at 450°C for 5 hours. Next, the mixture was calcined at 700°C for 10 hours, thus preparing NC-based positive electrode active material powder.

### Preparation Example 2 (Al1-NC96)and Preparation Example 3 (Al1-NC96)

NC-based positive electrode active material powders were prepared in the same manner as in Preparation Example 1, except that the calcination temperatures were 750°C and 800°C, respectively, as shown in Table 1 below.

### Preparation Example 4 (Ti1-NC96)

NC-based positive electrode active material powder was prepared in the same manner as in Preparation Example 1, except that the Ni_{0.96}Co_{0.04}(OH)₂ composite metal hydroxide powder produced in Preparation Example 1, titanium oxide (TiO₂) as a heteroatom, and lithium hydroxide (LiOH) were mixed together at the molar ratio shown in Table 1 below.

### Preparation Example 5 (Ti1-NC96) and Preparation Example 6 (Ti1-NC96)

NC-based positive electrode active material powders were prepared in the same manner as in Preparation Example 1, except that the calcination temperatures were 750°C and 800°C, respectively, as shown in Table 1 below.

### Preparation Example 7 (Ta1-NC96)

NC-based positive electrode active material powder was prepared in the same manner as in Preparation Example 1, except that the Ni_{0.96}Co_{0.04}(OH)₂ composite metal hydroxide powder produced in Preparation Example 1, tantalum oxide (Ta₂O₅) as a heteroatom, and lithium hydroxide (LiOH) were mixed together at the molar ratio shown in Table 1 below.

### Preparation Example 8 (Ta1-NC96) and Preparation Example 9 (Ta1-NC96)

NC-based positive electrode active material powders were prepared in the same manner as in Preparation Example 7, except that the calcination temperatures were 750°C and 800°C, respectively, as shown in Table 1 below.

### Preparation Example 10 (Sb1-NC96)

NC-based positive electrode active material powder was prepared in the same manner as in Preparation Example 1, except that the Ni_{0.96}Co_{0.04}(OH)₂ composite metal hydroxide powder produced in Preparation Example 1, antimony trioxide (Sb₂O₃, [3⁺]) as a heteroatom, and lithium hydroxide (LiOH) were mixed together at the molar ratio shown in Table 1 below.

### Preparation Example 11 (Sb1-NC96) and Preparation Example 12 (Sb1-NC96)

NC-based positive electrode active material powders were prepared in the same manner as in Preparation Example 10, except that the calcination temperatures were 750°C and 800°C, respectively, as shown in Table 1 below.

### Preparation Example 13 (Nb1-NC96)

NC-based positive electrode active material powder was prepared in the same manner as in Preparation Example 1, except that the Ni_{0.96}Co_{0.04}(OH)₂ composite metal hydroxide powder produced in Preparation Example 1, niobium pentoxide (Nb₂O₅) as a heteroatom, and lithium hydroxide (LiOH) were mixed together at the molar ratio shown in Table 1 below.

### Preparation Example 14 (Nb1-NC96) and Preparation Example 15 (Nbl-NC96)

NC-based positive electrode active material powders were prepared in the same manner as in Preparation Example 13, except that the calcination temperatures were 750°C and 800°C, respectively, as shown in Table 1 below.

### Preparation Example 16 (W1-NC96)

NC-based positive electrode active material powder was prepared in the same manner as in Preparation Example 1, except that the Ni_{0.96}Co_{0.04}(OH)₂ composite metal hydroxide powder produced in Preparation Example 1, tungsten trioxide (WO₃) as a heteroatom, and lithium hydroxide (LiOH) were mixed together at the molar ratio shown in Table 1 below.

### Preparation Example 17 (W1-NC96) and Preparation Example 18 (W1-NC96)

NC-based positive electrode active material powders were prepared in the same manner as in Preparation Example 17, except that the calcination temperatures were 750°C and 800°C, respectively, as shown in Table 1 below.

### Preparation Example 19 (Mo1-NC96)

NC-based positive electrode active material powder was prepared in the same manner as in Preparation Example 1, except that the Ni_{0.96}Co_{0.04}(OH)₂ composite metal hydroxide powder produced in Preparation Example 1, molybdenum trioxide (MoO₃) as a heteroatom, and lithium hydroxide (LiOH) were mixed together at the molar ratio shown in Table 1 below.

### Preparation Example 20 (Mo1-NC96) and Preparation Example 21 (Mo1-NC96)

NC-based positive electrode active material powders were prepared in the same manner as in Preparation Example 19, except that the calcination temperatures were 750°C and 800°C, respectively, as shown in Table 1 below.

**[Table 1]**

| | Classification | Composite metal oxide: heteroatom: lithium hydroxide (molar ratio) | Heteroatom | Heteroatom amount (mol%) | Calcination temperature (°C) |
|---|---|---|---|---|---|
| Preparation Example 1 | Al1-NC96 | 0.99:0.01:1.01 | A1 | 1 | 700 |
| Preparation Example 2 | Al1-NC96 | 0.99:0.01:1.01 | A1 | 1 | 750 |
| Preparation Example 3 | Al1-NC96 | 0.99:0.01:1.01 | A1 | 1 | 800 |
| Preparation Example 4 | Ti1-NC96 | 0.99:0.01:1.01 | Ti | 1 | 700 |
| Preparation Example 5 | Ti1-NC96 | 0.99:0.01:1.01 | Ti | 1 | 750 |
| Preparation Example 6 | Ti1-NC96 | 0.99:0.01:1.01 | Ti | 1 | 800 |
| Preparation Example 7 | Tal-NC96 | 0.99:0.01:1.01 | Ta | 1 | 700 |
| Preparation Example 8 | Tal-NC96 | 0.99:0.01:1.01 | Ta | 1 | 750 |
| Preparation Example 9 | Tal-NC96 | 0.99:0.01:1.01 | Ta | 1 | 800 |
| Preparation Example 10 | Sb1-NC96 | 0.99:0.01:1.01 | Sb | 1 | 700 |
| Preparation Example 11 | Sb1-NC96 | 0.99:0.01:1.01 | Sb | 1 | 750 |
| Preparation Example 12 | Sb1-NC96 | 0.99:0.01:1.01 | Sb | 1 | 800 |
| Preparation Example 13 | Nb1-NC96 | 0.99:0.01:1.01 | Nb | 1 | 700 |
| Preparation Example 14 | Nb1-NC96 | 0.99:0.01:1.01 | Nb | 1 | 750 |
| Preparation Example 15 | Nb1-NC96 | 0.99:0.01:1.01 | Nb | 1 | 800 |
| Preparation Example 16 | W1-NC96 | 0.99:0.01:1.01 | W | 1 | 700 |
| Preparation Example 17 | W1-NC96 | 0.99:0.01:1.01 | W | 1 | 750 |
| Preparation Example 18 | W1-NC96 | 0.99:0.01:1.01 | W | 1 | 800 |
| Preparation Example 19 | Mo1-NC96 | 0.99:0.01:1.01 | Mo | 1 | 700 |
| Preparation Example 20 | Mo1-NC96 | 0.99:0.01:1.01 | Mo | 1 | 750 |
| Preparation Example 21 | Mo1-NC96 | 0.99:0.01:1.01 | Mo | 1 | 800 |

### Preparation Example 22 (NC90)

10 liters of distilled water was placed in a co-precipitation reactor (volume: 47 L; rotary motor output: 750 W or more), and then N₂ gas was supplied into the reactor at a rate of 6 liters/minute and stirring was performed at 350 rpm while the temperature of the reactor was maintained at 45°C. A nickel sulfate aqueous solution (NiSO₄·6H₂O, Samchun Chemicals) and a cobalt sulfate aqueous solution (CoSO₄·7H₂O, Samchun Chemicals) were mixed together in amounts such that the molar ratio between nickel (Ni) and cobalt (Co) was 90:10, thus preparing a 2M metal solution. The prepared metal solution, a 16M ammonia solution (NH₄OH, JUNSEI) and a 4M sodium hydroxide solution (NaOH, Samchun Chemicals) were continuously introduced into the reactor at rates of 0.561 liters/hour, 0.11 liters/hour and 0.60 liters/hour, respectively, for 24 hours. While the pH in the reactor was maintained in the range of 10 to 12, a co-precipitation reaction was performed to produce a Ni_{0.9}Co_{0.1}(OH)₂ composite metal hydroxide.

The produced composite metal hydroxide was filtered, washed several times with distilled water, and then dried in a dry oven at 110°C for 12 hours to obtain powder. The obtained composite metal hydroxide powder and lithium hydroxide (LiOH) were mixed at a molar ratio of 1:1.01, and then pre-calcined by heating at a rate of 2°C/min and then keeping at 450°C for 5 hours. Next, the mixture was calcined at 730°C for 10 hours, thus preparing NC-based positive electrode active material powder. Conditions for preparing the NC-based positive electrode active material powder are shown in Table 2 below.

### Preparation Example 23 (Mg1-NC90)

NC-based positive electrode active material powder was prepared in the same manner as in Preparation Example 22, except that the Ni_{0.9}Co_{0.1}(OH)₂ composite metal hydroxide powder prepared in Preparation Example 22, magnesium oxide (MgO) as a heteroatom, and lithium hydroxide (LiOH) were mixed together at the molar ratio shown in Table 2 below.

### Preparation Example 24 (Al1-NC90)

NC-based positive electrode active material powder was prepared in the same manner as in Preparation Example 22, except that the Ni_{0.9}Co_{0.1}(OH)₂ composite metal hydroxide powder prepared in Preparation Example 22, aluminum hydroxide (Al(OH)₃) as a heteroatom, and lithium hydroxide (LiOH) were mixed together at the molar ratio shown in Table 2 below.

### Preparation Example 25 (Ti1-NC90)

NC-based positive electrode active material powder was prepared in the same manner as in Preparation Example 22, except that the Ni_{0.9}Co_{0.1}(OH)₂ composite metal hydroxide powder prepared in Preparation Example 22, titanium oxide (TiO₂) as a heteroatom, and lithium hydroxide (LiOH) were mixed together at the molar ratio shown in Table 2 below.

### Preparation Example 26 (Ta1-NC90)

NC-based positive electrode active material powder was prepared in the same manner as in Preparation Example 22, except that the Ni_{0.9}Co_{0.1}(OH)₂ composite metal hydroxide powder prepared in Preparation Example 22, tantalum oxide (Ta₂O₅) as a heteroatom, and lithium hydroxide (LiOH) were mixed together at the molar ratio shown in Table 2 below.

### Preparation Example 27 (Sb1-NC90)

NC-based positive electrode active material powder was prepared in the same manner as in Preparation Example 22, except that the Ni_{0.9}Co_{0.1}(OH)₂ composite metal hydroxide powder prepared in Preparation Example 22, antimony trioxide (Sb₂O₃, [3⁺]) as a heteroatom, and lithium hydroxide (LiOH) were mixed together at the molar ratio shown in Table 2 below.

### Preparation Example 28 (Mo1-NC90)

NC-based positive electrode active material powder was prepared in the same manner as in Preparation Example 22, except that the Ni_{0.9}Co_{0.1}(OH)₂ composite metal hydroxide powder prepared in Preparation Example 22, molybdenum trioxide (MoO₃) as a heteroatom, and lithium hydroxide (LiOH) were mixed together at the molar ratio shown in Table 2 below.

### Preparation Example 29 (B1,Al1-NC90)

NC-based positive electrode active material powder was prepared in the same manner as in Preparation Example 22, except that the Ni_{0.9}Co_{0.1}(OH)₂ composite metal hydroxide powder prepared in Preparation Example 22, boron oxide (B₂O₃) and aluminum hydroxide (Al(OH)₃) as heteroatoms, and lithium hydroxide (LiOH) were mixed together at the molar ratio shown in Table 2 below.

**[Table 2]**

| | Classification | Composite metal hydroxide: heteroatom: lithium hydroxide (molar ratio) | Heteroatom | Heteroatom amount (mol%) | Calcination temperature (°C) |
|---|---|---|---|---|---|
| Preparation Example 22 | NC90 | 0.99:0:1.01 | - | 0 | 730 |
| Preparation Example 23 | Mgl-NC90 | 0.99:0.01:1.01 | Mg | 1 | 730 |
| Preparation Example 24 | Al1-NC90 | 0.99:0.01:1.01 | Al | 1 | 730 |
| Preparation Example 25 | Ti1-NC90 | 0.99:0.01:1.01 | Ti | 1 | 730 |
| Preparation Example 26 | Tal-NC90 | 0.99:0.01:1.01 | Ta | 1 | 730 |
| Preparation Example 27 | Sb1-NC90 | 0.99:0.01:1.01 | Sb | 1 | 730 |
| Preparation Example 28 | Mo1-NC90 | 0.99:0.01:1.01 | Mo | 1 | 730 |
| Preparation Example 29 | B1,Al1-NC90 | 0.98:0.01(B):0.01(Al):1.01 | B, Al | 1 | 730 |

### Preparation Example 30 (Gradient NCM90)

10 liters of distilled water was placed in a co-precipitation reactor (volume: 40 L; rotary motor output: 750 W or more), and then N₂ gas was supplied into the reactor at a rate of 6 liters/minute and stirring was performed at 350 rpm while the temperature of the reactor was maintained at 45°C. A nickel sulfate aqueous solution (NiSO₄·6H₂O, Samchun Chemicals), a cobalt sulfate aqueous solution (CoSO₄·7H₂O, Samchun Chemicals) and a manganese sulfate aqueous solution (MnSO₄·H₂O, Samchun Chemicals) were mixed together in amounts such that the molar ratio between nickel (Ni), cobalt (Co) and manganese (Mn) was 100:0:0, thus preparing a first 2M metal solution. In addition, these solutions were mixed together in amounts such that the molar ratio between nickel (Ni), cobalt (Co) and manganese (Mn) was 80:10:10, thus preparing a second 2M metal solution. The prepared first metal solution, a 16M ammonia solution (NH₄OH, JUNSEI) and a 4M sodium hydroxide solution (NaOH, Samchun Chemicals) were continuously introduced into the reactor at rates of 0.561 liters/hour, 0.08 liters/hour and 0.60 liters/hour, respectively, for 14 hours, thus forming a first constant-concentration portion. Next, the second metal solution was continuously introduced into the first metal solution chamber at a rate of 0.561 liters/hour for 10 hours while constantly changing the concentration of the metal solution introduced into the reactor, thus forming a second concentration gradient portion on the outside of the first constant-concentration portion. Next, addition of the second metal solution to the first metal solution was stopped, and then only the first metal solution having a changed concentration was introduced into the reactor at a rate of 0.561 liters/hour to form a third constant-concentration portion on the outside of the second concentration gradient portion. While the pH in the reactor was maintained in the range of 10 to 12, a co-precipitation reaction was performed to produce a concentration gradient-type composite metal hydroxide having an average composition of Ni_{0.90}Co_{0.05}Mn_{0.05}(OH)₂.

The produced concentration gradient-type Ni_{0.90}Co_{0.05}Mn_{0.05}(OH)₂ composite metal hydroxide was filtered, washed several times with distilled water, and then dried in a vacuum dryer at 110°C for 12 hour to obtain powder. The obtained composite metal hydroxide powder and lithium hydroxide (LiOH) were mixed at the molar ratio shown in Table 3 below, and then pre-calcined by heating at a rate of 2°C/min and then keeping at 450°C for 5 hours. Next, the mixture was calcined at 730°C for 10 hours, thus preparing NCM-based (gradient NCM type) positive electrode active material powder.

### Preparation Example 31 (Gradient NCM90) and Preparation Example 32 (Gradient NCM90)

NCM-based positive electrode active material powders were prepared in the same manner as in Preparation Example 30, except that the calcination temperatures were 750°C and 770°C, respectively, as shown in Table 3 below.

### Preparation Example 33 (Sb0.5-Gradient NCM90)

NCM-based positive electrode active material powder was prepared in the same manner as in Preparation Example 30, except that the concentration gradient-type Ni_{0.90}Co_{0.05}Mn_{0.05}(OH)₂ composite metal hydroxide prepared in Preparation Example 22, antimony trioxide (Sb₂O₃, [3⁺]) as a heteroatom, and lithium hydroxide (LiOH) were mixed together at the molar ratio shown in Table 3 below.

### Preparation Example 34 (Sb0.5-Gradient NCM90) and Preparation Example 35 (Sb0.5-Gradient NCM90)

NCM-based positive electrode active material powders were prepared in the same manner as in Preparation Example 33, except that the calcination temperatures were 750°C and 770°C, respectively, as shown in Table 3 below.

### Preparation Example 36 (Mo0.75-Gradient NCM90)

NCM-based positive electrode active material powder was prepared in the same manner as in Preparation Example 30, except that the concentration gradient-type composite metal hydroxide powder Ni_{0.90}Co_{0.05}Mn_{0.05}(OH)₂ prepared in Preparation Example 30, molybdenum trioxide (MoO₃) as a heteroatom, and lithium hydroxide (LiOH) were mixed together at the molar ratio shown in Table 3 below.

### Preparation Example 37 (Mo0.75-Gradient NCM90) and Preparation Example 38 (Mo0.75-Gradient NCM90)

NCM-based positive electrode active material powders were prepared in the same manner as in Preparation Example 36, except that the calcination temperatures were 750°C and 770°C, respectively, as shown in Table 3 below.

### Preparation Example 39 (Ta0.5-Gradient NCM90)

NCM-based positive electrode active material powder was prepared in the same manner as in Preparation Example 30, except that the concentration gradient-type composite metal hydroxide powder Ni_{0.90}Co_{0.05}Mn_{0.05}(OH)₂ prepared in Preparation Example 30, tantalum oxide (Ta₂O₅) as a heteroatom, and lithium hydroxide (LiOH) were mixed together at the molar ratio shown in Table 3 below.

### Preparation Example 40 (Ta0.5-Gradient NCM90) and Preparation Example 41 (Ta0.5-Gradient NCM90)

NCM-based positive electrode active material powders were prepared in the same manner as in Preparation Example 39, except that the calcination temperatures were 750°C and 770°C, respectively, as shown in Table 3 below.

### Preparation Example 42 (Ta0.75-Gradient NCM90)

NCM-based positive electrode active material powder was prepared in the same manner as in Preparation Example 30, except that the concentration gradient-type composite metal hydroxide powder Ni_{0.90}Co_{0.05}Mn_{0.05}(OH)₂ prepared in Preparation Example 30, tantalum oxide (Ta₂O₅) as a heteroatom, and lithium hydroxide (LiOH) were mixed together at the molar ratio shown in Table 3 below.

### Preparation Example 43 (Ta0.75-Gradient NCM90) and Preparation Example 44 (Ta0.75-Gradient NCM90)

NCM-based positive electrode active material powders were prepared in the same manner as in Preparation Example 43, except that the calcination temperatures were 750°C and 770°C, respectively, as shown in Table 3 below.

### Preparation Example 45 (Ta1.0-Gradient NCM90)

NCM-based positive electrode active material powder was prepared in the same manner as in Preparation Example 30, except that the concentration gradient-type composite metal hydroxide powder Ni_{0.90}Co_{0.05}Mn_{0.05}(OH)₂ prepared in Preparation Example 30, tantalum oxide (Ta₂O₅) as a heteroatom, and lithium hydroxide (LiOH) were mixed together at the molar ratio shown in Table 3 below.

### Preparation Example 46 (Ta1.0-Gradient NCM90) and Preparation Example 48 (Ta1.0-Gradient NCM90)

NCM-based positive electrode active material powders were prepared in the same manner as in Preparation Example 45, except that the calcination temperatures were 750°C and 770°C, respectively, as shown in Table 3 below.

### Preparation Example 48 (Nb0.5-Gradient NCM90)

NCM-based positive electrode active material powder was prepared in the same manner as in Preparation Example 30, except that the concentration gradient-type composite metal hydroxide powder Ni_{0.90}Co_{0.05}Mn_{0.05}(OH)₂ prepared in Preparation Example 30, niobium pentoxide (Nb₂O₅) as a heteroatom, and lithium hydroxide (LiOH) were mixed together at the molar ratio shown in Table 3 below.

### Preparation Example 49 (Nb0.5-Gradient NCM90) and Preparation Example 50 (Nb0.5-Gradient NCM90)

NCM-based positive electrode active material powders were prepared in the same manner as in Preparation Example 48, except that the calcination temperatures were 750°C and 770°C, respectively, as shown in Table 3 below.

### Preparation Example 51 (Nb0.75-Gradient NCM90)

NCM-based positive electrode active material powder was prepared in the same manner as in Preparation Example 30, except that the concentration gradient-type composite metal hydroxide powder Ni_{0.90}Co_{0.05}Mn_{0.05}(OH)₂ prepared in Preparation Example 30, niobium pentoxide (Nb₂O₅) as a heteroatom, and lithium hydroxide (LiOH) were mixed together at the molar ratio shown in Table 3 below.

### Preparation Example 52 (Nb0.75-Gradient NCM90) and Preparation Example 53 (Nb0.75-Gradient NCM90)

NCM-based positive electrode active material powders were prepared in the same manner as in Preparation Example 51, except that the calcination temperatures were 750°C and 770°C, respectively, as shown in Table 3 below.

### Preparation Example 54 (Nb1.0-Gradient NCM90)

NCM-based positive electrode active material powder was prepared in the same manner as in Preparation Example 30, except that the concentration gradient-type composite metal hydroxide powder Ni_{0.90}Co_{0.05}Mn_{0.05}(OH)₂ prepared in Preparation Example 30, niobium pentoxide (Nb₂O₅) as a heteroatom, and lithium hydroxide (LiOH) were mixed together at the molar ratio shown in Table 3 below.

### Preparation Example 55 (Nb1.0-Gradient NCM90) and Preparation Example 56 (Nb1.0-Gradient NCM90)

NCM-based positive electrode active material powders were prepared in the same manner as in Preparation Example 54, except that the calcination temperatures were 750°C and 770°C, respectively, as shown in Table 3 below.

**[Table 3]**

| | Classification | Composite metal oxide: heteroatom: lithium hydroxide (molar ratio) | Heteroatom | Heteroatom amount (mol%) | Calcination temperature (°C) |
|---|---|---|---|---|---|
| Preparation Example 30 | Gradient NCM90 | 0.99:0:1.01 | - | 0 | 730 |
| Preparation Example 31 | Gradient NCM90 | 0.99:0:1.01 | - | 0 | 750 |
| Preparation Example 32 | Gradient NCM90 | 0.99:0:1.01 | - | 0 | 770 |
| Preparation Example 33 | Sb0.5-Gradient NCM90 | 0.995:0.005:1.01 | Sb | 0.5 | 730 |
| Preparation Example 34 | Sb0.5-Gradient NCM90 | 0.995:0.005:1.01 | Sb | 0.5 | 750 |
| Preparation Example 35 | Sb0.5-Gradient NCM90 | 0.995:0.005:1.01 | Sb | 0.5 | 770 |
| Preparation Example 36 | Mo0.75-Gradient NCM90 | 0.9925:0.0075:1.01 | Mo | 0.75 | 730 |
| Preparation Example 37 | Mo0.75-Gradient NCM90 | 0.9925:0.0075:1.01 | Mo | 0.75 | 750 |
| Preparation Example 38 | Mo0.75-Gradient NCM90 | 0.9925:0.0075:1.01 | Mo | 0.75 | 770 |
| Preparation Example 39 | Ta0.5-Gradient NCM90 | 0.995:0.005:1.01 | Ta | 0.5 | 730 |
| Preparation Example 40 | Ta0.5-Gradient NCM90 | 0.995:0.005:1.01 | Ta | 0.5 | 750 |
| Preparation Example 41 | Ta0.5-Gradient NCM90 | 0.995:0.005:1.01 | Ta | 0.5 | 770 |
| Preparation Example 42 | Ta0.75-Gradient NCM90 | 0.9925:0.0075:1.01 | Ta | 0.75 | 730 |
| Preparation Example 43 | Ta0.75-Gradient NCM90 | 0.9925:0.0075:1.01 | Ta | 0.75 | 750 |
| Preparation Example 44 | Ta0.75-Gradient NCM90 | 0.9925:0.0075:1.01 | Ta | 0.75 | 770 |
| Preparation Example 45 | Ta1.0-Gradient NCM90 | 0.99:0.01:1.01 | Ta | 1 | 730 |
| Preparation Example 46 | Ta1.0-Gradient NCM90 | 0.99:0.01:1.01 | Ta | 1 | 750 |
| Preparation Example 47 | Ta1.0-Gradient NCM90 | 0.99:0.01:1.01 | Ta | 1 | 770 |
| Preparation Example 48 | Nb0.5-Gradient NCM90 | 0.995:0.005:1.01 | Nb | 0.5 | 730 |
| Preparation Example 49 | Nb0.5-Gradient NCM90 | 0.995:0.005:1.01 | Nb | 0.5 | 750 |
| Preparation Example 50 | Nb0.5-Gradient NCM90 | 0.995:0.005:1.01 | Nb | 0.5 | 770 |
| Preparation Example 51 | Nb0.75-Gradient NCM90 | 0.9925:0.0075:1.01 | Nb | 0.75 | 730 |
| Preparation Example 52 | Nb0.75-Gradient NCM90 | 0.9925:0.0075:1.01 | Nb | 0.75 | 750 |
| Preparation Example 53 | Nb0.75-Gradient NCM90 | 0.9925:0.0075:1.01 | Nb | 0.75 | 770 |
| Preparation Example 54 | Nb1.0-Gradient NCM90 | 0.99:0.01:1.01 | Nb | 1 | 730 |
| Preparation Example 55 | Nb1.0-Gradient NCM90 | 0.99:0.01:1.01 | Nb | 1 | 750 |
| Preparation Example 56 | Nb1.0-Gradient NCM90 | 0.99:0.01:1.01 | Nb | 1 | 770 |

### Preparation Example 57 (NCM90)

10 liters of distilled water was placed in a co-precipitation reactor (volume: 47 L; rotary motor output: 750 W or more), and then N₂ gas was supplied into the reactor at a rate of 6 liters/minute and stirring was performed at 350 rpm while the temperature of the reactor was maintained at 45°C. A nickel sulfate aqueous solution (NiSO₄·6H₂O, Samchun Chemicals), a cobalt sulfate aqueous solution (CoSO₄·7H₂O, Samchun Chemicals) and a manganese sulfate aqueous solution (MnSO₄·H₂O, Samchun Chemicals) were mixed together in amounts such that the molar ratio between nickel (Ni), cobalt (Co) and manganese (Mn) was 90:5:5, thus preparing a 2M metal solution. The prepared metal solution, a 16M ammonia solution (NH₄OH, JUNSEI) and a 4M sodium hydroxide solution (NaOH, Samchun Chemicals) were continuously introduced into the reactor at rates of 0.561 liters/hour, 0.08 liters/hour and 0.60 liters/hour, respectively, for 24 hours. While the pH in the reactor was maintained in the range of 10 to 12, a co-precipitation reaction was performed to produce a Ni_{0.9}Co_{0.05}Mn_{0.05}(OH)₂ composite metal hydroxide.

The produced Ni_{0.9}Co_{0.05}Mn_{0.05}(OH)₂ composite metal hydroxide was filtered, washed several times with distilled water, and then dried in a vacuum dryer at 110°C for 12 hours to obtain powder. The obtained Ni_{0.9}Co_{0.05}Mn_{0.05}(OH)₂ composite metal hydroxide powder and lithium hydroxide (LiOH) were mixed together at a molar ratio of 1:1.01 and then pre-calcined by heating at a rate of 2°C/min and then keeping at 450°C for 5 hours. Next, the mixture was calcined at 750°C for 10 hours, thus preparing NCM-based positive electrode active material powder. Conditions for preparing the NCM-based positive electrode active material powder are shown in Table 4 below.

### Preparation Example 58 (Sn0.3-NCM90)

NCM-based positive electrode active material powder was prepared in the same manner as in Preparation Example 57, except that the Ni_{0.9}Co_{0.05}Mn_{0.05}(OH)₂ composite metal hydroxide powder prepared in Preparation Example 57, tin oxide (SnO₂), and lithium hydroxide (LiOH) were mixed together at the molar ratio shown in Table 4 below.

**[Table 4]**

| | Classification | Composite metal hydroxide: heteroatom: lithium hydroxide (molar ratio) | Heteroatom | Heteroatom amount (mol%) | Calcination temperature (°C) |
|---|---|---|---|---|---|
| Preparation Example 57 | NCM90 | 0.99:0:1.01 | - | 0 | 750 |
| Preparation Example 58 | Sn0.3-NCM90 | 0.997:0.003:1.01 | Sn | 0.3 | 750 |

### Preparation Example 59 (NCM90)

10 liters of distilled water was placed in a co-precipitation reactor (volume: 47 L; rotary motor output: 750 W or more), and then N₂ gas was supplied into the reactor at a rate of 6 liters/minute and stirring was performed at 350 rpm while the temperature of the reactor was maintained at 45°C. A nickel sulfate aqueous solution (NiSO₄·6H₂O, Samchun Chemicals), a cobalt sulfate aqueous solution (CoSO₄·7H₂O, Samchun Chemicals) and a manganese sulfate aqueous solution (MnSO₄·H₂O, Samchun Chemicals) were mixed together in amounts such that the molar ratio between nickel (Ni), cobalt (Co) and manganese (Mn) was 90:5:5, thus preparing a 2M metal solution. The prepared metal solution, a 16M ammonia solution (NH₄OH, JUNSEI) and a 4M sodium hydroxide solution (NaOH, Samchun Chemicals) were continuously introduced into the reactor at rates of 0.561 liters/hour, 0.08 liters/hour and 0.60 liters/hour, respectively, for 24 hours. While the pH in the reactor was maintained in the range of 10 to 12, a co-precipitation reaction was performed to produce a Ni_{0.9}Co_{0.05}Mn_{0.05}(OH)₂ composite metal hydroxide.

The produced Ni_{0.9}Co_{0.05}Mn_{0.05}(OH)₂ composite metal hydroxide was filtered, washed several times with distilled water, and then dried in a vacuum dryer at 110°C for 12 hours to obtain powder. The obtained Ni_{0.9}Co_{0.05}Mn_{0.05}(OH)₂ composite metal hydroxide powder and lithium hydroxide (LiOH) were mixed together at a molar ratio of 1:1.01 and then pre-calcined by heating at a rate of 2°C/min and then keeping at 450°C for 5 hours. Next, the mixture was calcined at 750°C for 10 hours, thus preparing NCM-based positive electrode active material powder. Conditions for preparing the NCM-based positive electrode active material powder are shown in Table 5 below.

### Preparation Example 60 (Nb0.5-NCM90) and Preparation Example 61 (Nb1-NCM90)

NCM-based positive electrode active material powders were prepared in the same manner as in Preparation Example 59, except that the Ni_{0.9}Co_{0.05}Mn_{0.05}(OH)₂ composite metal hydroxide powder prepared in Preparation Example 59, niobium pentoxide (Nb₂O₅) as a heteroatom, and lithium hydroxide (LiOH) were mixed together at the molar ratio shown in Table 5 below such that the concentrations of Nb in the positive electrode active materials were 0.5 mol% (Preparation Example 60) and 1 mol% (Preparation Example 61), respectively.

**[Table 5]**

| | Classification | Composite metal hydroxide: heteroatom: lithium hydroxide (molar ratio) | Heteroatom | Heteroatom amount (mol%) | Calcination temperature (°C) |
|---|---|---|---|---|---|
| Preparation Example 59 | NCM90 | 1:0:1.01 | - | 0 | 750 |
| Preparation Example 60 | Nb0.5-NCM90 | 0.995:0.005:1.01 | Nb | 0.5 | 750 |
| Preparation Example 61 | Nb1.0-NCM90 | 0.99:0.01:1.01 | Nb | 1 | 750 |

### Preparation Example 62 (NCMA89 (Al0.5%))

10 liters of distilled water was placed in a co-precipitation reactor (volume: 47 L; rotary motor output: 750 W or more), and then N₂ gas was supplied into the reactor at a rate of 6 liters/minute and stirring was performed at 350 rpm while the temperature of the reactor was maintained at 45°C. A nickel sulfate aqueous solution (NiSO₄·6H₂O, Samchun Chemicals), a cobalt sulfate aqueous solution (CoSO₄·7H₂O, Samchun Chemicals) and a manganese sulfate aqueous solution (MnSO₄·H₂O, Samchun Chemicals) were mixed together in amounts such that the molar ratio between nickel (Ni), cobalt (Co) and manganese (Mn) was 90:5:5, thus preparing a 2M metal solution. The prepared metal solution, a 16M ammonia solution (NH₄OH, JUNSEI) and a 4M sodium hydroxide solution (NaOH, Samchun Chemicals) were continuously introduced into the reactor at rates of 0.561 liters/hour, 0.08 liters/hour and 0.60 liters/hour, respectively, for 24 hours. While the pH in the reactor was maintained in the range of 10 to 12, a co-precipitation reaction was performed to produce a Ni_{0.9}Co_{0.05}Mn_{0.05}(OH)₂ composite metal hydroxide.

The produced Ni_{0.9}Co_{0.05}Mn_{0.05}(OH)₂ composite metal hydroxide was filtered, washed several times with distilled water, and then dried in a vacuum dryer at 110°C for 12 hours to obtain powder. The obtained Ni_{0.9}Co_{0.05}Mn_{0.05}(OH)₂ composite metal hydroxide powder, aluminum hydroxide (Al(OH)₃) and lithium hydroxide (LiOH) were mixed together at a molar ratio of 0.995:0.005:1.01 and then pre-calcined by heating at a rate of 2°C/min and then keeping at 450°C for 5 hours. Next, the mixture was calcined at 750°C for 10 hours, thus preparing NCMA-based positive electrode active material powder. Conditions for preparing the NCMA-based positive electrode active material powder are shown in Table 5 below.

### Preparation Example 63 (Nb0.5-NCMA89) and Preparation Example 64 (Nb1.0-NCMA89)

NCMA-based positive electrode active material powders were prepared in the same manner as in Preparation Example 62, except that the Ni_{0.9}Co_{0.05}Mn_{0.05}(OH)₂ composite metal hydroxide powder prepared in Preparation Example 62, niobium pentoxide (Nb₂O₅) as a heteroatom, and lithium hydroxide (LiOH) were mixed together at the molar ratio shown in Table 6 below such that the concentrations of Nb in the positive electrode active materials were 0.5 mol% (Preparation Example 60) and 1 mol% (Preparation Example 61), respectively.

**[Table 6]**

| | Classification | Composite metal hydroxide: aluminum: heteroatom: lithium hydroxide (molar ratio) | Heteroatom | Heteroatom amount (mol%) | Calcination temperature (°C) |
|---|---|---|---|---|---|
| Preparation Example 62 | NCMA89 (Al0.5%) | 0.995:0.005:0:1.01 | - | 0 | 750 |
| Preparation Example 63 | Nb0.5-NCMA89 | 0.99:0.005:0.005:1.01 | Nb | 0.5 | 750 |
| Preparation Example 64 | Nbl.0-NCMA89 | 0.985:0.005:0.01:1.01 | Nb | 1 | 750 |

### Preparation Example 65 (LNO)

10 liters of distilled water was placed in a co-precipitation reactor (volume: 40 L; rotary motor output: 750 W or more), and then N₂ gas was supplied into the reactor at a rate of 6 liters/minute and stirring was performed at 350 rpm while the temperature of the reactor was maintained at 45°C. Nickel sulfate aqueous solution (NiSO₄·6H₂O, Samchun Chemicals) was mixed with distilled water to obtain a 2M metal solution. The obtained metal solution, a 16M ammonia solution (NH₄OH, JUNSEI) and a 4M sodium hydroxide solution (NaOH, Samchun Chemicals) were continuously introduced into the reactor at rates of 0.067 liters/hour, 0.561 liters/ hour and 0.067 liters/hour, respectively, for 24 hours. While the pH in the reactor was maintained in the range of 10 to 12, a co-precipitation reaction was performed to produce a Ni(OH)₂ composite metal hydroxide.

The produced composite metal hydroxide was filtered, washed several times with distilled water, and then dried in a dry oven at 110°C for 12 hours to obtain powder. The obtained Ni(OH)₂ composite metal hydroxide powder and lithium hydroxide (LiOH) were mixed at a molar ratio of 1:1.01, and then pre-calcined by heating at a rate of 2°C/min and then keeping at 450°C for 5 hours. Next, the mixture was calcined at 650°C for 10 hours, thus preparing LNO-based positive electrode active material powder. Conditions for preparing the LNO-based positive electrode active material powder are shown in Table 7 below.

### Preparation Example 66 (Sb0.7-LNO)

LNO-based positive electrode active material powder was prepared in the same manner as in Preparation Example 65, except that the Ni(OH)₂ composite metal hydroxide powder prepared in Preparation Example 65, antimony trioxide (Sb₂O₃, [3⁺]) as a heteroatom, and lithium hydroxide (LiOH) were mixed together at the molar ratio shown in Table 7 below, and the calcination temperature was 700°C.

### Preparation Example 67 (Sb0.7-LNO) and Preparation Example 68 (Sb0.7-LNO)

LNO-based positive electrode active material powders were prepared in the same manner as in Preparation Example 66, except that the calcination temperatures were 730°C and 750°C, respectively, as shown in Table 7 below.

**[Table 7]**

| | classification | Composite metal hydroxide: heteroatom: lithium hydroxide (molar ratio) | Heteroatom | Heteroatom amount (mol%) | Calcination temperature (°C) |
|---|---|---|---|---|---|
| Preparation Example 65 | LNO | 0.99:0:1.01 | - | 0 | 650 |
| Preparation Example 66 | Sb0.7-LNO | 0.993:0.007:1.01 | Sb | 0.7 | 700 |
| Preparation Example 67 | Sb0.7-LNO | 0.993:0.007:1.01 | Sb | 0.7 | 730 |
| Preparation Example 68 | Sb0.7-LNO | 0.993:0.007:1.01 | Sb | 0.7 | 750 |

### Preparation Example 69 (NCM811)

10 liters of distilled water was placed in a co-precipitation reactor (volume: 47 L; rotary motor output: 750 W or more), and then N₂ gas was supplied into the reactor at a rate of 6 liters/minute and stirring was performed at 350 rpm while the temperature of the reactor was maintained at 45°C. A nickel sulfate aqueous solution (NiSO₄·6H₂O, Samchun Chemicals), a cobalt sulfate aqueous solution (CoSO₄·7H₂O, Samchun Chemicals) and a manganese sulfate aqueous solution (MnSO₄·H₂O, Samchun Chemicals) were mixed together in amounts such that the molar ratio between nickel (Ni) and cobalt (Co) was 8:1:1, thus preparing a 2M metal solution. The prepared metal solution, a 16M ammonia solution (NH₄OH, JUNSEI) and a 4M sodium hydroxide solution (NaOH, Samchun Chemicals) were continuously introduced into the reactor at rates of 0.561 liters/hour, 0.08 liters/hour and 0.60 liters/hour, respectively, for 24 hours. While the pH in the reactor was maintained in the range of 10 to 12, a co-precipitation reaction was performed to produce a Ni_{0.8}Co_{0.1}Mn_{0.1}(OH)₂ composite metal hydroxide.

The produced Ni_{0.8}Co_{0.1}Mn_{0.1}(OH)₂ composite metal hydroxide was filtered, washed several times with distilled water, and then dried in a dry oven at 110°C for 12 hours to obtain powder. The obtained Ni_{0.8}Co_{0.1}Mn_{0.1}(OH)₂ composite metal hydroxide powder, and lithium hydroxide (LiOH) were mixed together at a molar ratio of 1:1.01, and then pre-calcined by heating at a rate of 2°C/min and then keeping at 450°C for 5 hours. Next, the mixture was calcined at 770°C for 10 hours, thus preparing positive electrode active material powder. Conditions for preparing the positive electrode active material powder are shown in Table 8 below.

### Preparation Example 70 (Sb0.3-NCM811) and Preparation Example 71 (Sb0.5-NCM811)

Positive electrode active material powders were prepared in the same manner as in Preparation Example 69, except that the Ni_{0.8}Co_{0.1}Mn_{0.1}(OH)₂ composite metal oxide powder prepared in Preparation Example 69, antimony trioxide (Sb₂O₃, [3⁺]) as a heteroatom, and lithium hydroxide (LiOH) were mixed together at the molar ratio shown in Table 8 below, and the calcination temperatures 790°C and 810°C, respectively.

**[Table 8]**

| | Classification | Composite metal hydroxide: heteroatom: lithium hydroxide (molar ratio) | Heteroatom | Heteroatom amount (mol%) | Calcination temperature (°C) |
|---|---|---|---|---|---|
| Preparation Example 69 | NCM811 | 0.99:0:1.01 | - | 0 | 770 |
| Preparation Example 70 | Sb0.3-NCM811 | 0.997:0.003:1.01 | Sb | 0.3 | 790 |
| Preparation Example 71 | Sb0.5-NCM811 | 0.995:0.005:1.01 | Sb | 0.5 | 810 |

### Preparation Example 72 (Gradient NCM78)

10 liters of distilled water was placed in a co-precipitation reactor (volume: 40 L; rotary motor output: 750 W or more), and then N₂ gas was supplied into the reactor at a rate of 6 liters/minute and stirring was performed at 350 rpm while the temperature of the reactor was maintained at 45°C. A nickel sulfate aqueous solution (NiSO₄·6H₂O, Samchun Chemicals), a cobalt sulfate aqueous solution (CoSO₄·7H₂O, Samchun Chemicals) and a manganese sulfate aqueous solution (MnSO₄·H₂O, Samchun Chemicals) were mixed together in amounts such that the molar ratio between nickel (Ni), cobalt (Co) and manganese (Mn) was 100:0:0, thus preparing a first 2M metal solution. In addition, these solutions were mixed together in amounts such that the molar ratio between nickel (Ni), cobalt (Co) and manganese (Mn) was 73.5:12.25:14.25, thus preparing a second 2M metal solution. The prepared first metal solution, a 16M ammonia solution (NH₄OH, JUNSEI) and a 4M sodium hydroxide solution (NaOH, Samchun Chemicals) were continuously introduced into the reactor at rates of 0.561 liters/hour, 0.08 liters/hour and 0.60 liters/hour, respectively, for 14 hours, thus forming a first constant-concentration portion. Next, the second metal solution was continuously introduced into the first metal solution chamber at a rate of 0.561 liters/hour for 10 hours while constantly changing the concentration of the metal solution introduced into the reactor, thus forming a second concentration gradient portion on the outside of the first constant-concentration portion. Next, addition of the second metal solution to the first metal solution was stopped, and then only the first metal solution having a changed concentration was introduced into the reactor at a rate of 0.561 liters/hour to form a third constant-concentration portion on the outside of the second concentration gradient portion. While the pH in the reactor was maintained in the range of 10 to 12, a co-precipitation reaction was performed to produce a concentration gradient-type composite metal hydroxide having an average composition of Ni_{0.78}Co_{0.10}Mn_{0.12}(OH)₂.

The produced Ni_{0.78}Co_{0.10}Mn_{0.12}(OH)₂ composite metal hydroxide was filtered, washed several times with distilled water, and then dried in a vacuum dryer at 110°C for 12 hour to obtain powder. The obtained composite metal hydroxide powder and lithium hydroxide (LiOH) were mixed at a molar ratio of 1:1.01 as shown in Table 9 below, and then pre-calcined by heating at a rate of 2°C/min and then keeping at 450°C for 5 hours. Next, the mixture was calcined at 790°C for 10 hours, thus preparing NCM-based (gradient NCM type) positive electrode active material powder.

### Preparation Example 73 (Sb0.5-Gradient NCM78)

Concentration gradient-type NCM-based positive electrode active material was prepared in the same manner as in Preparation Example 72, except that the Ni_{0.78}Co_{0.10}Mn_{0.12}(OH)₂ composite metal hydroxide powder prepared in Preparation Example 72, antimony trioxide (Sb₂O₃, [3⁺]) as a heteroatom, and lithium hydroxide (LiOH) were mixed together at the molar ratio shown in Table 9 below.

### Preparation Example 74 (Sb0.5-Gradient NCM78)

Concentration gradient-type NCM-based positive electrode active material was prepared in the same manner as in Preparation Example 73, except that the calcination temperature was 800°C as shown in Table 9 below.

**[Table 9]**

| | Classification | Composite metal hydroxide: heteroatom: lithium hydroxide (molar ratio) | Heteroatom | Heteroatom amount (mol%) | Calcination temperature (°C) |
|---|---|---|---|---|---|
| Preparation Example 72 | Gradient NCM78 | 0.99:0:1.01 | - | 0 | 790 |
| Preparation Example 73 | Sb0.5-Gradient NCM78 | 0.995:0.005:1.01 | Sb | 0.5 | 790 |
| Preparation Example 74 | Sb0.5-Gradient NCM78 | 0.995:0.005:1.01 | Sb | 0.5 | 800 |

### 2. Fabrication of Half-Cells and Full-Cells Using Preparation Examples

Half-cells and full-cells were fabricated using the positive electrode active materials according to the above-described Preparation Examples.

To fabricate the half-cells and the full-cells, the powder-type positive electrode active material prepared according to each of the Preparation Examples, poly(vinylidene fluoride) and carbon black at a weight ratio of 90:4.5:5.5 were added into N-methyl pyrrolidone (0.4 g per g of the positive electrode active material) and then uniformly mixed together, thereby preparing positive electrode slurries. An aluminum foil was coated with each of the prepared positive electrode slurries, roll-pressed, and then dried under vacuum, thereby producing positive electrodes.

To fabricate half-cells using the prepared positive electrode active materials, an aluminum foil was coated with each of the prepared positive electrode active material slurries so that the loading level of the positive electrode active material was 5 mg/cm² (meaning that, when a square of 1 cm² is sampled from the aluminum foil coated with the positive electrode active material, the weight of only the positive electrode active material in the positive electrode is 5 mg), thereby producing positive electrodes. The electrolyte used was obtained by uniformly dissolving 2 wt% vinylene carbonate (VC) and 1.2 mol/L lithium salt LiPF₆ as additives in ethylene carbonate: ethyl methyl carbonate (EC:EMC = 3:7 v/v) as a solvent. As half-cells, 2032-coin type half-cells (hereinafter referred to as coil cells) employing Liₒ as a negative electrode were fabricated.

To fabricate full-cells using the prepared positive electrode active materials, an aluminum foil was coated with each of the prepared positive electrode active material slurries so that the loading level of the positive electrode active material was 8.5 mg/cm², thereby producing positive electrodes. In addition, an aluminum foil was coated with a prepared graphite slurry at a loading level of 6.5 mg/cm², roll-pressed, and then dried under vacuum, thereby producing a negative electrode. The electrolyte used was obtained by uniformly dissolving 2 wt% vinylene carbonate (VC) and 1.2 mol/L lithium salt LiPF₆ as additives in ethylene carbonate: ethyl methyl carbonate (EC:EMC = 3:7 v/v) as a solvent. Each of the positive electrodes, a separator (Celgard, model 2320) and the negative electrode were stacked in a pouch-type battery case, and sealed together with the prepared electrolyte, thereby fabricating pouch-type full-cells.

### 3. Evaluation of Preparation Examples

### (1) Evaluation of capacity and cycle characteristics using half-cells

Each of the fabricated half-cells was subjected to a 300-cycle charge/discharge test by charging to 4.3 V and discharging to 2.7 V at a constant current of 0.5 C (1 C: 180 mA/g) at 30°C, and the capacity retentions were measured (hereinafter referred to as 2.7V-4.3V).

### (2) Evaluation of capacity and cycle characteristics using full-cells

The fabricated full cells were cycled between 3.0 V (discharge voltage) and 4.2 V (charge voltage) at a constant current of 1 C at 25 °C, and the capacities and capacity retentions were measured.

### (3) Analysis of microstructures of composite metal hydroxide (precursor) and positive electrode active materials using SEM

For the positive electrode active materials according to the Preparation Examples and the composite metal hydroxide (precursor) before pre-calcination, the microstructures were analyzed by SEM (Nova Nano SEM 450, FEI).

Hereinafter, the microstructures, surface properties, and electrochemical properties of the positive electrode active materials according to the Preparation Examples will be described.

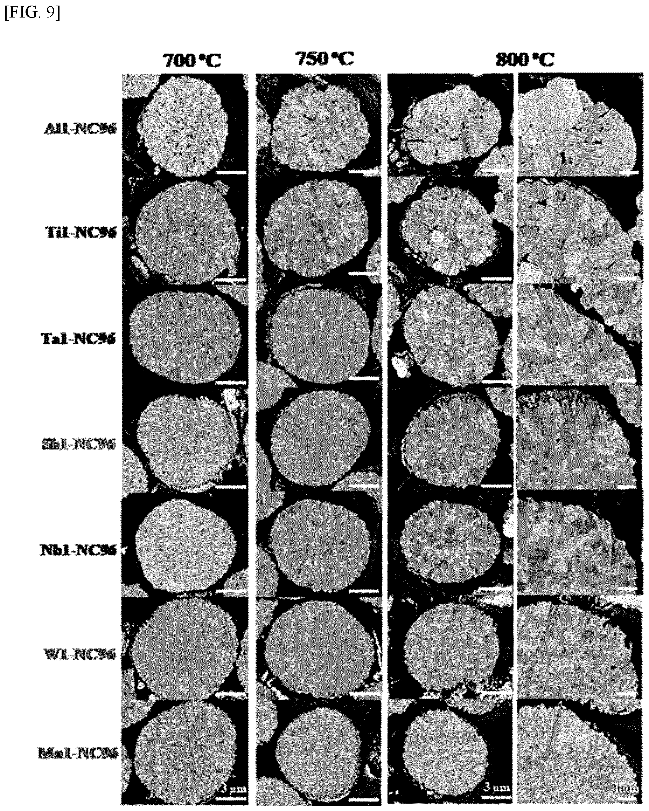

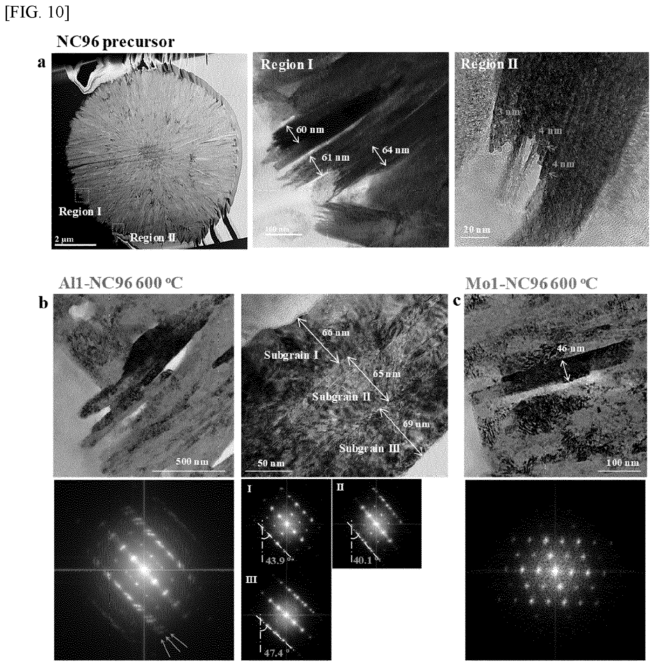

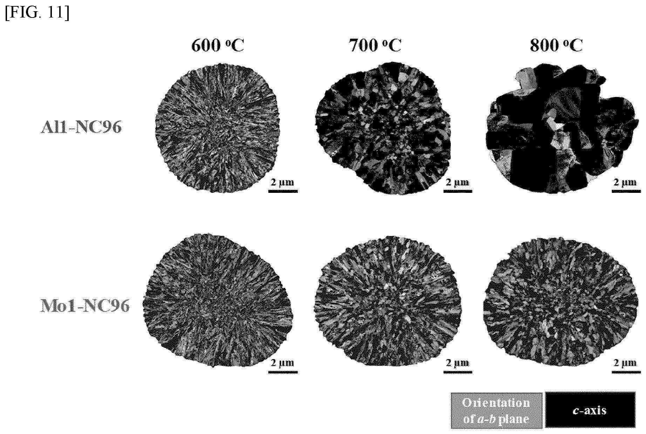

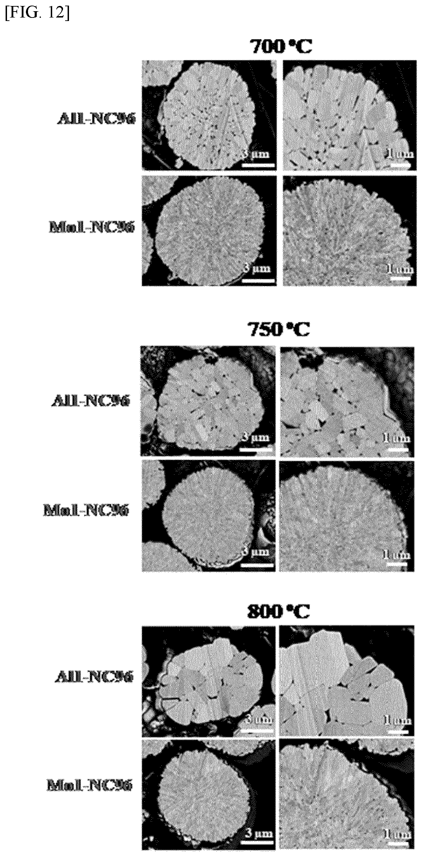

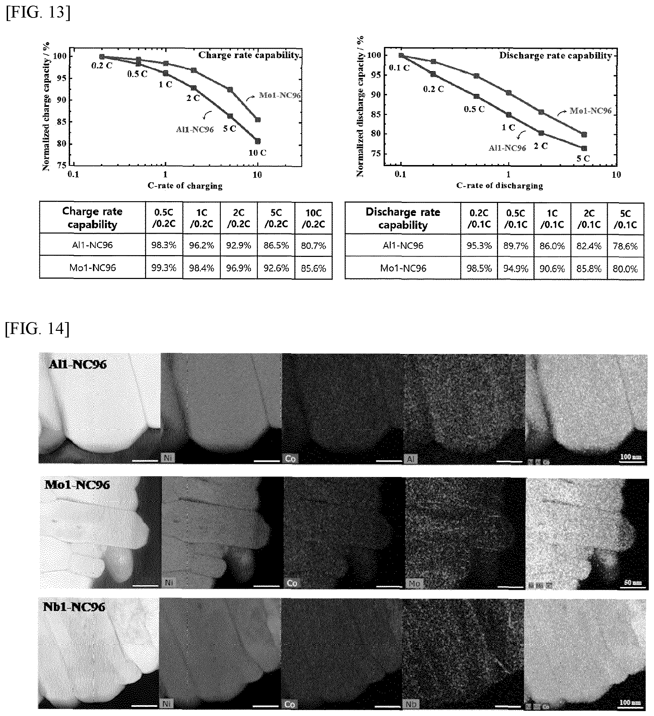

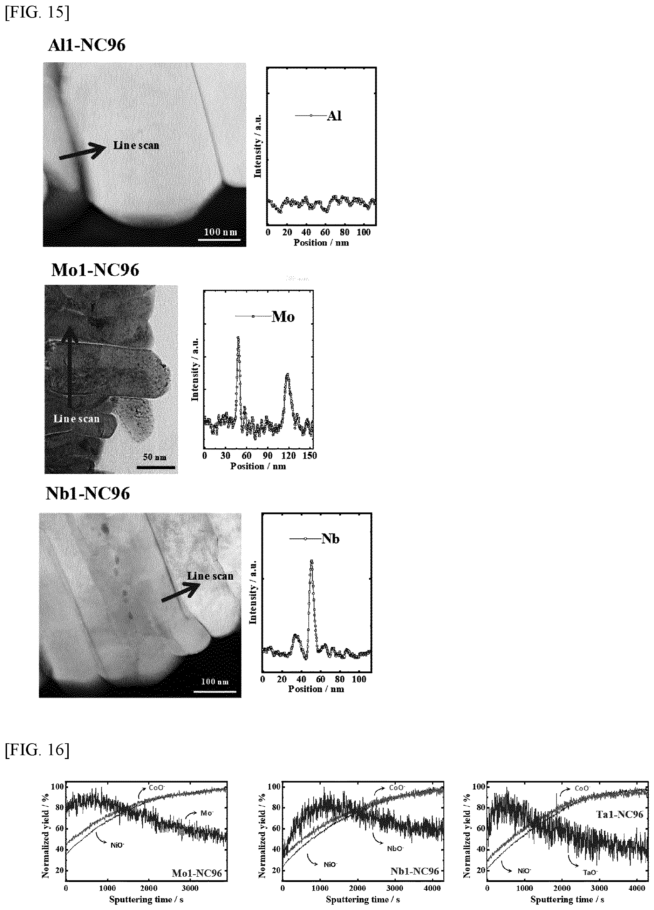

FIG. 8 shows SEM images of the composite metal hydroxides of Preparation Examples 1 to 21 of the present invention before calcination. FIG. 9 shows SEM images of the composite metal hydroxides of Preparation Examples 1 to 21. FIG. 10 depicts TEM images of a precursor and of positive electrode active materials containing aluminum and molybdenum, respectively, after calcination at 600°C. FIG. 11 shows the results of analyzing the orientations of positive electrode active materials containing aluminum and molybdenum, respectively, at different calcination temperatures. FIG. 12 shows SEM images of a precursor and of positive electrode active materials containing 1 mol% aluminum and 1 mol% molybdenum, respectively, at different calcination temperatures. FIG. 13 depicts graphs showing the results of analyzing the charge/discharge rate capabilities of positive electrode active materials containing aluminum and molybdenum, respectively, after calcination at 800°C. FIG. 14 shows the results of TEM-EDX elemental mapping of positive electrode active materials containing aluminum, molybdenum and niobium, respectively, and FIG. 15 shows the results of TEM-EDX elemental line scanning of the positive electrode active materials according to FIG. 14, and FIG. 16 shows the results of TOF-SIMS sputtering of positive electrode active materials containing molybdenum, niobium and tantalum, respectively.

FIG. 8 typically shows SEM images of the composite metal hydroxide of Preparation Example 1, because the composite metal hydroxides of Preparation Examples 1 to 21 are all identical ([Ni_{0.96}Co_{0.04}](OH)₂ (NC96 precursor)). As shown in FIG. 8, the composite metal hydroxide is composed of approximately spherical pristine secondary particles formed by agglomeration of a plurality of preliminary primary particles, and among the preliminary primary particles, the preliminary primary particles located in the surface portion are provided in a rod shape whose aspect ratio (which is the ratio of the long axis to the short axis) is high.

Referring to FIGS. 9 to 12, it could be confirmed that, when equal amounts of heteroatoms were added to the same positive electrode active material (NC96), the shape of the primary particles located in the surface portion of the secondary particle at each calcination temperature changed depending on the kind of heteroatom added. Specifically, it could be confirmed that, when aluminum (Al) was added, the size of the primary particles located in the surface portion of the secondary particle increased as the calcination temperature increased. On the other hand, it could be confirmed that, when titanium (Ti), tantalum (Ta), antimony (Sb), niobium (Nb), tungsten (W) or molybdenum (Mo) was added, the shape of the primary particles located in the surface portion of the secondary particle hardly changed even when the calcination temperature increased.

In particular, when aluminum and molybdenum were added in equal amounts (1 mol%), respectively, followed by calcination at 600°C, agglomeration of the primary particles could be observed after calcination.

The precursor (NC96 precursor) is composed of radial preliminary primary particles, wherein the preliminary primary particles have a width of 3 nm to 4 nm (FIG. 10 (a)).

When aluminum was added to the precursor, followed by calcination at 600°C, agglomeration between the particles occurred. Referring to FIG. 10(b), agglomeration of three preliminary primary particles of the precursor into a single primary particle in the calcined positive electrode active material is confirmed by TEM. Specifically, agglomeration of three primary particles (subgrains I, II and III) having thicknesses of 66 nm, 65 nm and 69 nm, respectively, is confirmed. In the Fourier Transform images, it can be seen that, when all subgrains I, II and III are Fourier-transformed, three lines in the electron diffraction pattern overlap and appear in different directions (at angles of 43.9°, 40.1°, and 47.4°, respectively) (three arrows). This suggests that the primary particles constituting the positive electrode active material are composed of three different subgrains I, II and III, and the subgrains I, II and III have different electron diffraction patterns when Fourier transformed. This means that, in the positive electrode active material to which aluminum has been added, three preliminary primary particles are agglomerated to form a single primary particle

On the other hand, it could be confirmed that, in the case of the positive electrode active material to which molybdenum was added, agglomeration between the primary particles did not occur. Specifically, in the positive electrode active material to which molybdenum was added, only a thin primary particle having a width of approximately 46 nm was confirmed, and when it was Fourier transformed, a single line appeared unlike the positive electrode active material to which aluminum was added, which means a single primary particle consisting of a single crystal.

Referring to FIGS. 11 and 12, it could be confirmed that, in comparison depending on the calcination temperature, in the case of the positive electrode active material to which aluminum was added, aggregation of the primary particles occurred as the calcination temperature increased from 700°C to 750°C and 800 °C, but in the case of the positive electrode active material to which molybdenum was added, the primary particles hardly changed depending on the calcination temperature.

The analysis method in FIG. 11 was performed using TEM analysis ASTAR (orientation and phase mapping system on TEM), and how the orientation of the primary particles changes as the calcination temperature is increased from 600°C to 700°C and 800°C was analyzed through images. In FIG. 11, yellow indicates an *a-b* plane, which is a lithium (Li) diffusion path, and black indicates a c-axis perpendicular to the *a-b* plane. In other words, more yellow in the drawing indicates easier lithium diffusion. In addition, referring to FIG. 11, it can be confirmed that, before the positive electrode active material was not calcined, that is, in the state of the precursor (NC96 precursor), the preliminary primary particles of the composite metal hydroxide existed in a rod shape, and when the calcination temperature was 600°C, the positive electrode active materials to which aluminum and molybdenum were added, respectively, all had excellent primary particle orientation.

It could be confirmed that, when calcination was performed at a high temperature of 700°C or higher, the positive electrode active material containing aluminum gradually lost orientation because aluminum does not have the effect of a sintering inhibitor, whereas in the case of the positive electrode active material containing molybdenum, the rod shape of the primary particle was maintained because molybdenum functioned as a sintering inhibitor.

Referring to FIG. 13, it could be confirmed that, when calcination was performed at high temperature, in the case of the positive electrode active material to which aluminum was added, the orientation of the primary particles was lowered, and the high-rate charge and discharge characteristics were also lower than those in the case of the positive electrode active material to which molybdenum was added.

Referring to FIG. 14, it was confirmed by TEM-EDX mapping that, in the positive electrode active material to which aluminum was added, a compound containing aluminum was not formed at the grain boundary between the primary particles, whereas, in the positive electrode active materials to which molybdenum and niobium were added, respectively, compounds containing excessive amounts of molybdenum and niobium, respectively, were formed at the grain boundaries between the primary particles. FIG. 15 shows the results of TEM-EDX elemental line scanning performed to examine whether the heteroatom added was segregated at the grain boundary between primary particles, and FIG. 16 shows the results of examining the distributions of the transition metals up to the inside of the secondary particles while cutting the surfaces of the secondary particles of the positive electrode active materials by TOF-SIMS sputtering.

Referring to FIG. 16, it could be confirmed that, in the case of the positive electrode active materials to which molybdenum, niobium and tantalum were added, respectively, the intensities for molybdenum, niobium and tantalum decreased in the direction from the surface portion of the secondary particle to the central portion, which means that the content of each of molybdenum, niobium and tantalum was higher in the surface portion of the secondary particle than in the central portion. It could be confirmed that, in the positive electrode active material to which aluminum was added, aluminum was not segregated at the grain boundary between the primary particles, whereas molybdenum or niobium was segregated at the grain boundary between the primary particles, suggesting that the concentration of molybdenum or niobium was higher at the grain boundary than the inside of the primary particles.

Aluminum is uniformly doped into the primary particles, whereas molybdenum and niobium are doped into the primary particles, and at the same time, compounds containing molybdenum and niobium, respectively, are segregated at the grain boundaries between the primary particles. When the compounds containing molybdenum and niobium, respectively, provided at the grain boundaries between the primary particles at a higher concentration than the inside of the primary particles, can reduce the degree of agglomeration of the primary particles during high-temperature calcination of the precursor composite metal hydroxide, whereby the rod shape of the preliminary primary particles shown in the composite metal hydroxide can be maintained at approximately the same shape even in the calcined positive electrode material. That is, molybdenum or niobium provided at the grain boundary between the primary particles can act as a sintering inhibitor to maintain the shape of the primary particles of the precursor even during high-temperature calcination.

That is, in the positive electrode active material to which aluminum has been added, a compound containing aluminum is not formed at the grain boundary between the primary particles and is uniformly doped only into the primary particles, and thus it does not function as a sintering inhibitor during high-temperature calcination, and the primary particles are agglomerated together to form an equiaxed positive electrode active material. The positive electrode active material to which titanium was added maintained the rod shape after calcination at 700°C, unlike the positive electrode active material containing aluminum, but after calcination at 750°C and 800°C, the size of the primary particles thereof increased and the aspect ratio decreased. In the case of the positive electrode active materials to which tantalum, antimony and niobium were added, respectively, the rod shape was maintained after calcination at 700°C and 750°C, but after calcination at 800°C, the size of the primary particles thereof increased and the aspect ratio decreased. It could be confirmed that the positive electrode active materials to which tungsten and molybdenum were added, respectively, maintained the rod shape after calcination at 700°C, 750°C and 800°C. That is, it could be confirmed that the temperature range in which the rod shape was maintained changed depending on the kind of metal added.

Tables 10 to 12 below show the results of evaluating the capacities of the half-cells fabricated using Preparation Examples 1 to 21 and evaluating the capacity retention after cycles, and Table 13 below shows the results of evaluating full-cells employing graphite as the negative electrode.

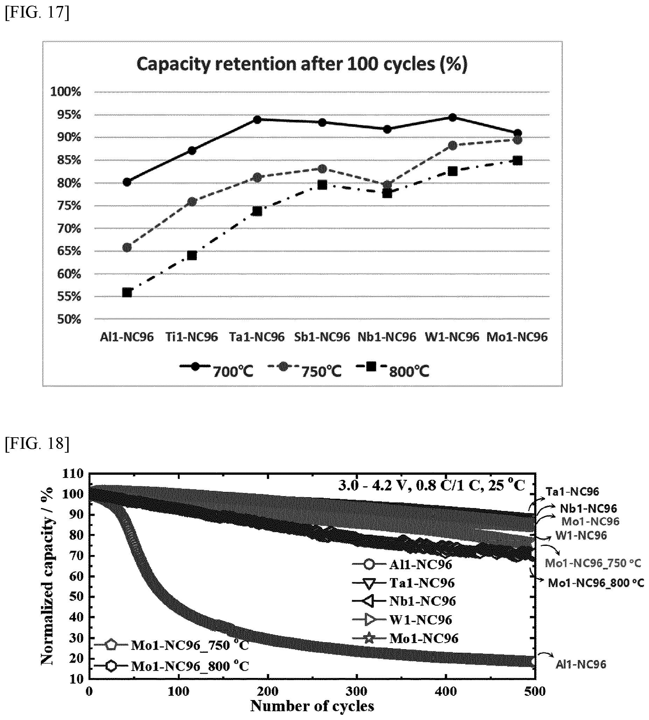

FIG. 17 shows the results of evaluating the capacity retention for positive electrode active materials prepared at different calcination temperatures in the Preparation Examples, after 100 cycles, and FIG. 18 is a graph showing the 500-cycle life characteristics of positive electrode active materials prepared in the Preparation Examples.

**[Table 10]**

| | Lithiation temperature 700°C | 0.5 C initial capacity (mAh g-1) | 0.5 C capacity after 100 cycles (mAh g-1) | Capacity retention after 100 cycles (%) |
|---|---|---|---|---|
| Preparation Example 1 | Al1-NC96 | 222.7 | 178.9 | 80.30% |
| Preparation Example 4 | Til-NC96 | 224.3 | 195.6 | 87.20% |
| Preparation Example 7 | Tal-NC96 | 227.1 | 213.1 | 93.90% |
| Preparation Example 10 | Sbl-NC96 | 218.9 | 204.3 | 93.30% |
| Preparation Example 13 | Nb1-NC96 | 231 | 212.3 | 91.90% |
| Preparation Example 16 | W1-NC96 | 225 | 212.4 | 94.40% |
| Preparation Example 19 | Mol-NC96 | 231 | 210.1 | 91.00% |

**[Table 11]**

| | Lithiation temperature 750°C | 0.5 C initial capacity (mAh g-1) | 0.5 C capacity after 100 cycles (mAh g-1) | Capacity retention after 100 cycles (%) |
|---|---|---|---|---|
| Preparation Example 2 | Al1-NC96 | 192.2 | 126.6 | 65.80% |
| Preparation Example 5 | Til-NC96 | 213.1 | 161.8 | 75.90% |
| Preparation Example 8 | Tal-NC96 | 223.1 | 181.1 | 81.20% |
| Preparation Example 11 | Sbl-NC96 | 224.2 | 186.3 | 83.10% |
| Preparation Example 14 | Nb1-NC96 | 222 | 176.7 | 79.60% |
| Preparation Example 17 | W1-NC96 | 226.3 | 199.8 | 88.30% |
| Preparation Example 20 | Mol-NC96 | 228.1 | 204.2 | 89.50% |

**[Table 12]**

| | Lithiation temperature 800°C | 0.5 C initial capacity (mAh g-1) | 0.5 C capacity after 100 cycles (mAh g-1) | Capacity retention after 100 cycles (%) |
|---|---|---|---|---|
| Preparation Example 3 | Al1-NC96 | 184 | 102.8 | 55.90% |
| Preparation Example 6 | Til-NC96 | 189.1 | 121.3 | 64.10% |
| Preparation Example 9 | Tal-NC96 | 204.2 | 150.9 | 73.90% |
| Preparation Example 12 | Sbl-NC96 | 200.2 | 159.3 | 79.60% |
| Preparation Example 15 | Nb1-NC96 | 200.9 | 156.2 | 77.80% |
| Preparation Example 18 | W1-NC96 | 226.1 | 186.8 | 82.60% |
| Preparation Example 21 | Mo1-NC96 | 226.2 | 192.1 | 84.90% |

**[Table 13]**

| Lithiation temperature | Classification | Cathode | Capacity retention after 500 cycles (%) |
|---|---|---|---|
| 700°C | Preparation Example 1 | Al1-NC96 | 18.50% |
| | Preparation Example 7 | Tal-NC96 | 88.20% |
| | Preparation Example 13 | Nb1-NC96 | 85.70% |
| | Preparation Example 16 | W1-NC96 | 84.70% |
| | Preparation Example 19 | Mol-NC96 | 85.30% |
| 750°C | Preparation Example 20 | Mol-NC96 | 75.50% |
| 800°C | Preparation Example 21 | Mol-NC96 | 71.20% |

Referring to Tables 10 to 12 above and FIG. 17, it could be confirmed that, when heteroatoms were added in equal amounts (1 mol%) to the same NC-based positive electrode active material, the capacity retention after 100-cycle charging/discharging in the case of aluminum (Al) decreased gradually as the calcination temperature increased, unlike the case of the other heteroatoms. On the other hand, it could be confirmed that the capacity retention characteristics in the case of titanium (Ti), tantalum (Ta), antimony (Sb), niobium (Nb), tungsten (W) and molybdenum (Mo) were better than those in the case of aluminum (Al), even when calcination was performed at high temperature. In particular, it could be confirmed that tungsten (W) and molybdenum (Mo) exhibited approximately constant capacity retention characteristics regardless of the calcination temperature.

As described above, the degree of function of the sintering inhibitor was different between the positive electrode active material containing aluminum (a first heteroatom), the positive electrode active material containing titanium (a second heteroatom), the positive electrode active materials containing tantalum, antimony and niobium (a third heteroatom), and the positive electrode active materials containing tungsten and molybdenum (a fourth heteroatom). Thereby, it could be confirmed that the degree of agglomeration of the primary particles provided in the surface portion of the secondary particle in each of the positive electrode active materials was significantly low, and it could be confirmed that the capacity retention characteristics after 100 cycles of charging and discharging also exhibited the same pattern. That is, it could be confirmed that, among the heteroatoms added to the positive electrode active materials, titanium (second heteroatom), tantalum, antimony and niobium (third heteroatom), and tungsten and molybdenum (fourth heteroatom), except for aluminum (first heteroatom), formed compounds containing titanium, tantalum, antimony, niobium, tungsten, and molybdenum, respectively, at the grain boundaries between the primary particles at higher concentrations than inside of the primary particles, and among them, tungsten and molybdenum (fourth heteroatom) had the best sintering inhibitor function during calcination at the highest temperature.

As shown in Table 13 above and FIG. 18, as a result of evaluating the 500-cycle life characteristics of the full-cells, it could be confirmed that, even when calcination was performed at 700°C, the cycle life characteristics in the case of aluminum were poor than those in the cases of tantalum, antimony, niobium, tungsten and molybdenum. It could be confirmed that, when 1 mol% molybdenum was added, the 500-cycle full-cell characteristics at calcination temperatures of 700°C, 750°C and 800°C were approximately similar.

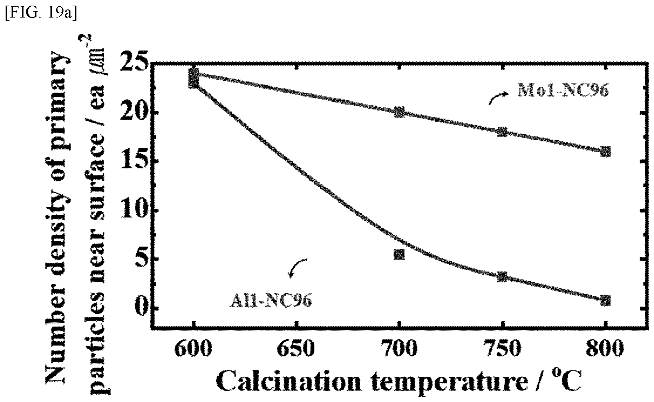

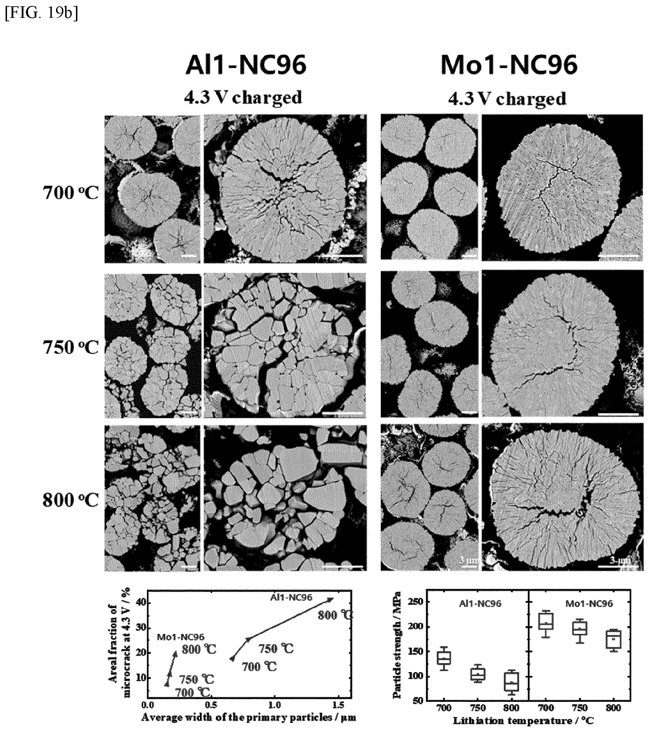

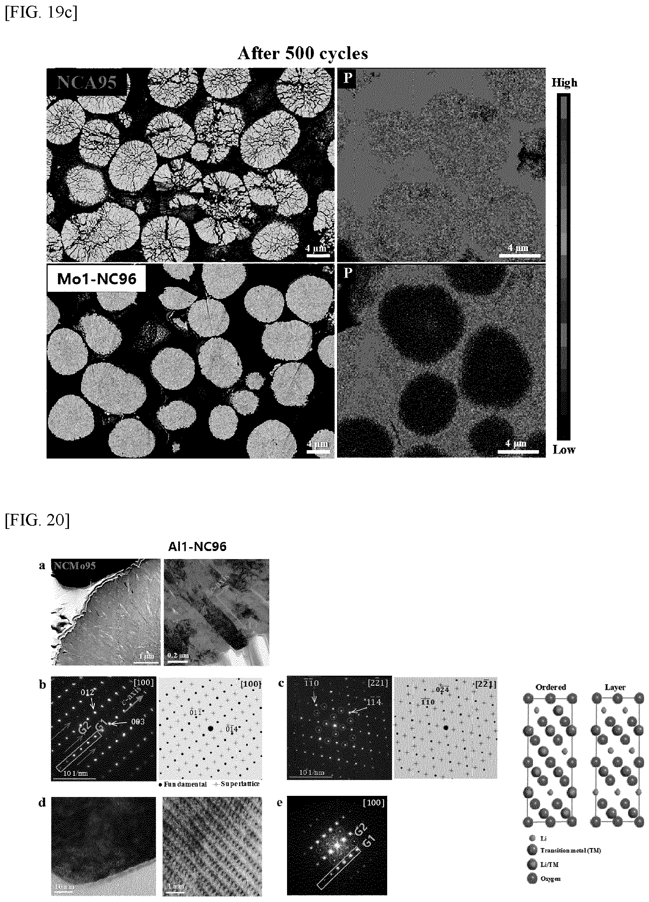

Table 14 below shows the characteristics of the primary particles of the positive electrode active materials to which aluminum and molybdenum were added in equal amounts, when charged to 4.3V. FIG. 19a shows the number of primary particles per unit area of each of the positive electrode active materials containing equal amounts of aluminum and molybdenum, respectively, depending on calcination temperature. FIG. 19b shows microcracks in the positive electrode active materials containing equal amounts of aluminum and molybdenum, respectively, when charged to 4.3 V. FIG. 19c shows microcracks in the positive electrode active materials containing equal amounts of aluminum and molybdenum, respectively, after 500 cycles.

**[Table 14]**

| | 4.3V charged | 700°C | 750°C | 800°C |
|---|---|---|---|---|
| Microcrack areal fraction (%) | Al1-NC96 | 17.8% | 25.5% | 41.1% |
| | Mol-NC96 | 7.41% | 11.49% | 19.4% |
| Particle strength (MPa) | Al1-NC96 | 136.1 | 104.3 | 87.4 |
| | Mol-NC96 | 207.8 | 195.3 | 175.1 |
| Number density (ea/µm²) | Al1-NC96 | 5.5 | 3.2 | 0.8 |
| | Mol-NC96 | 20 | 18 | 16 |

Referring to FIG. 19a, which shows the number of oriented particles per unit area at each calcination temperature, together with Table 14 above, it could be confirmed that, as the calcination temperature increased, the number of oriented particles decreased in the positive electrode active material containing aluminum, but did not significantly increased in the positive electrode active material containing molybdenum. This is believed to be because agglomeration of the primary particles occurred in the process of calcining the positive electrode active material containing aluminum, resulting in a decrease in the absolute number of particles. In addition, it could be confirmed that, when the calcination temperature was 600°C, the numbers of oriented particles were 23 ea/µm² in the positive electrode active material containing aluminum and 24 ea/µm² in the positive electrode active material containing molybdenum, which were similar. That is, it could be confirmed that, when the calcination temperature was low, agglomeration of the primary particles did not occur regardless of the kind of heteroatom (aluminum or molybdenum), and when the calcination temperature was high, agglomeration of the primary particles occurred for example, at 700°C or higher.

Referring to Table 14 above and FIG. 19b which shows the cross-sections of secondary particles the positive electrode active materials containing equal amounts of aluminum and molybdenum, respectively, at different calcination temperature after charged to 4.3V, it could be confirmed that, in the case of molybdenum, there was no significant change in the area where microcracks occurred, even when the calcination temperature increased, whereas in the positive electrode active material containing aluminum, the area where microcracks occurred increased as the calcination temperature increased. In addition, it can be confirmed that the strength of the secondary particles was greater in the positive electrode active material containing molybdenum than in the positive electrode active material containing aluminum. This is because the added molybdenum was provided as a compound at the grain boundary between the primary particles at a higher concentration than the inside of the primary particles, thereby reducing changes in the morphology of the primary particles even during calcination at a high temperature of 700°C or higher. This reduction in the morphological change of the primary particles can be expressed by the orientation angle, orientation distance, grain size, aspect ratio and width of the primary particles, and this reduction can relieve the occurrence of micro-strain during charging and discharging of the positive electrode active material, and prevent the accumulation of stress inside the secondary particles, thereby further improving electrochemical characteristics such as cycle life characteristics, high voltage/high-rate charge/discharge characteristics, etc.

Referring to FIG. 19c showing the results of evaluating the positive electrode active materials based on the fullcells after 500 cycles, it can be confirmed that the degree of occurrence of microcracks was lower in the positive electrode active material containing molybdenum than in the positive electrode active material containing aluminum.

In the case of nickel-rich positive electrode active materials such as NC90, there is a problem in that excessive agglomeration of primary particles generally occurs during high-temperature calcination, resulting in degradation in electrochemical properties and cycle life characteristics. On the other hand, in the embodiment of the present invention, tantalum, antimony, niobium, tungsten and molybdenum, which are the added heteroatoms, form compounds containing tantalum, antimony, niobium, tungsten and molybdenum at the grain boundaries between the primary particles constituting the positive electrode active materials, thereby reducing the degree of agglomeration of the primary particles during calcination of the positive electrode active materials at a high temperature of 700°C or higher.

That is, in the positive electrode active material containing molybdenum, the molybdenum is provided in the form of a compound at the grain boundary between the primary particles and doped into the primary particles. In this case, the molybdenum is provided at a higher concentration at the grain boundary than inside the primary particles, and thus prevents or reduces the agglomeration of the preliminary primary particles during high-temperature calcination of the precursor composite metal hydroxide. Thus, the rod shape of the preliminary primary particles is maintained almost unchanged even in the primary particles of the positive electrode active material, which is a calcined body, and the structural orientation of the primary particles in the secondary particle constituting the positive electrode active material is improved so that lithium ions can efficiently move reversibly to the central portion of the secondary particle. The primary particles constituting the positive electrode active material containing molybdenum have high particle strength due to enhanced crystallinity, do not morphologically change, and thus undergo shrinkage/expansion with little irreversibility during the charging/discharging process. In addition, the occurrence of micro-strain therein is relieved and stress accumulation therein is reduced. Thus, the positive electrode active material containing molybdenum exhibits excellent cycle life characteristics.

FIG. 20 shows the results of analyzing the cationordered structure of Preparation Example 19. In FIG. 20, (a) shows an image of the primary particles of a Mo1-NC96 positive electrode, (b) shows a SAED pattern (electron diffraction) viewed from the [100] direction of the Mo1-NC96 positive electrode, and (c) shows a SAED pattern (electron diffraction) viewed from the [221] direction of the Mo1-NC96 positive electrode. Here, the portion indicated by the dotted line circle indicates an additional diffraction spot formed by cation ordering. (d) shows high-resolution TEM data.

Referring to FIG. 20, it could be confirmed that, in the case of Preparation Example 11, a compound having a rock salt structure was formed at the grain boundary between the primary particles, and had a thickness of about 2 nm to 20 nm. In addition, it could be confirmed that a doping region formed by diffusion of molybdenum existed inside the primary particle, and a cation ordering phenomenon occurred in the molybdenum-diffused region (doping region). The cationordered structure can be formed by exchange between the lithium of the lithium layer and the transition metal of the transition metal layer facing the lithium layer.

Electron diffraction patterns for the [010] zone axis or [100] zone axis can be seen. The electron diffraction patterns show: a first diffraction spot group G1 in which one or more diffraction spots having a first intensity and corresponding to a lattice formed by the lithium layer and transition metal layer stacked adjacent to each other are aligned in one direction; and a second diffraction spot group G2 in which one or more diffraction spots having a second intensity relatively lower than the first intensity of the diffraction spots of the first diffraction group G1 and corresponding to a lattice formed by the first mixed layer and second mixed layer stacked adjacent to each other are aligned in one direction. They show an ordered structure.

The positive electrode active material may prevent the penetration of an electrolyte due to the ordered structure even when microcracks are formed, and may also exhibit excellent characteristics without reduction in capacity due to the ordered structure that has low reactivity with an electrolyte, even when the electrolyte penetrates the positive electrode active material.

Table 15 below shows each Preparation Example depending on calcination temperature. In Table 15, classification 1 shows each Preparation Example, and classification 2 shows the type and content of heteroatom and the type of positive electrode active material in order.

**[Table 15]**

| Classification 1 | Classification 2 | Calcination temperature (°C) |
|---|---|---|
| Preparation Example 1 | Al1-NC96 | 700 |
| Preparation Example 2 | Al1-NC96 | 750 |
| Preparation Example 3 | Al1-NC96 | 800 |
| Preparation Example 4 | Til-NC96 | 700 |
| Preparation Example 5 | Til-NC96 | 750 |
| Preparation Example 6 | Til-NC96 | 800 |
| Preparation Example 7 | Tal-NC96 | 700 |
| Preparation Example 8 | Tal-NC96 | 750 |
| Preparation Example 9 | Tal-NC96 | 800 |
| Preparation Example 10 | Sbl-NC96 | 700 |
| Preparation Example 11 | Sbl-NC96 | 750 |
| Preparation Example 12 | Sbl-NC96 | 800 |
| Preparation Example 13 | Nbl-NC96 | 700 |
| Preparation Example 14 | Nbl-NC96 | 750 |
| Preparation Example 15 | Nbl-NC96 | 800 |
| Preparation Example 16 | W1-NC96 | 700 |
| Preparation Example 17 | W1-NC96 | 750 |
| Preparation Example 18 | W1-NC96 | 800 |
| Preparation Example 19 | Mol-NC96 | 700 |
| Preparation Example 20 | Mol-NC96 | 750 |
| Preparation Example 21 | Mol-NC96 | 800 |

In the following, when the same positive electrode active material and heteroatoms were included, the average values of the widths, aspect ratios, grain sizes, orientation angles and orientation distances of the primary particles provided in the surface portion of the secondary particle with respect to the cross-section of the secondary particle were measured by experiments at different calcination temperatures. The surface portion of the secondary particle refers to a thickness (T) region ranging from the outermost surface of the secondary particle to a portion corresponding to 40% of the diameter (L) in a direction toward the center (see FIG. 6). In the positive electrode active material according to this embodiment, the thickness (T) was about 3 µm.

The orientation angle and orientation distance were measured as shown in FIGS. 6 and 7, respectively. The orientation angle was determined by measuring the average of acute angles among angles between the long-axis-direction extension lines passing through the centers of the primary particles distributed in the thickness T region and the angle baselines connecting between the central points of the extension lines and the central point of the secondary particle. The orientation distance was determined by measuring the distance between the oriented direction of the long axes of the primary particles and the central baseline passing through the center of the secondary particle. Specifically, the orientation distance was determined by measuring the distance between the long-axis-direction extension line passing through the centers of the primary particles and the central baseline passing through the central point of the secondary particle in parallel with the extension line.

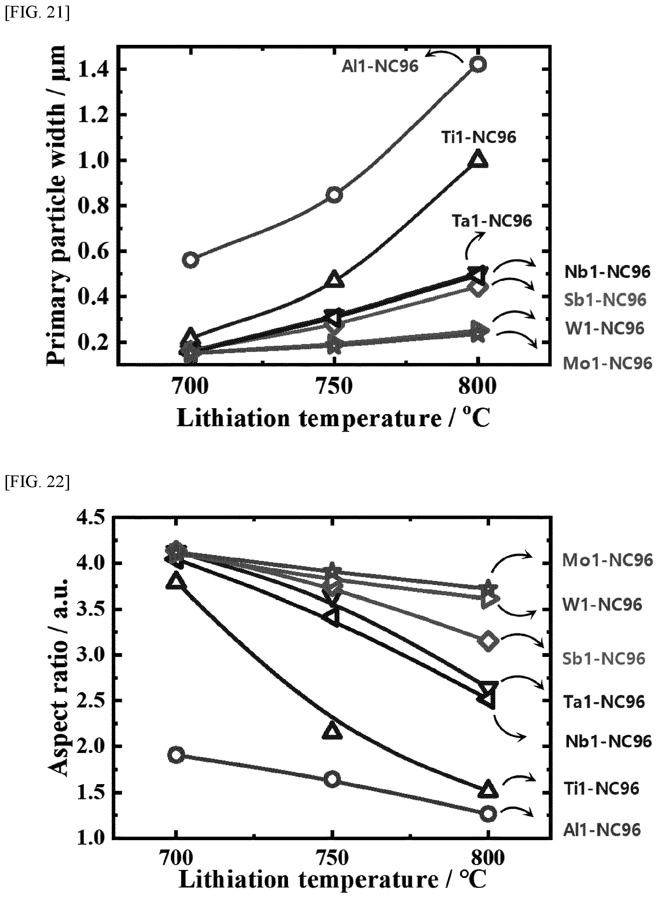

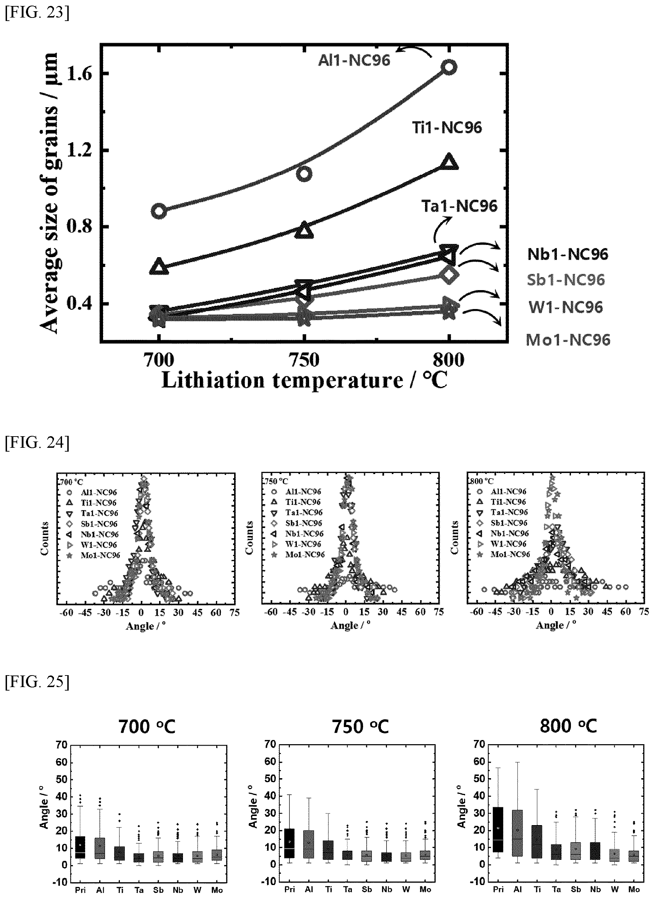

Table 16 below shows the average width of the primary particles located in the surface portion of the secondary particle of the positive electrode active material according to each Preparation Example of the present invention at each calcination temperature. Table 17 below shows the average aspect ratio of the primary particles located in the surface portion of the secondary particle of the positive electrode active material according to each Preparation Example of the present invention at each calcination temperature. Table 18 below shows the average grain size of the primary particles located in the surface portion of the secondary particle of the positive electrode active material according to each Preparation Example of the present invention at each calcination temperature. FIG. 21 is a graph showing the average width of the primary particles located in the surface portion of the secondary particle of the positive electrode active material according to each Preparation Example of the present invention at each calcination temperature. FIG. 22 is a graph showing the average aspect ratio of the primary particles located in the surface portion of the secondary particle of the positive electrode active material according to each Preparation Example of the present invention at each calcination temperature. FIG. 23 is a graph showing the average grain size of the primary particles located in the surface portion of the secondary particle of the positive electrode active material according to each Preparation Example of the present invention at each calcination temperature.

**[Table 16]**

| | | | |
|---|---|---|---|
| Average width (µm) | 700°C | 750°C | 800°C |
| Al1-NC96 | 0.56 | 0.847 | 1.422 |
| Til-NC96 | 0.215 | 0.467 | 0.998 |
| Tal-NC96 | 0.16 | 0.314 | 0.501 |
| Sb1-NC96 | 0.161 | 0.276 | 0.442 |
| Nbl-NC96 | 0.153 | 0.306 | 0.492 |
| W1-NC96 | 0.152 | 0.191 | 0.251 |
| Mol-NC96 | 0.15 | 0.183 | 0.235 |

**[Table 17]**

| | | | |
|---|---|---|---|
| Average aspect ratio | 700°C | 750°C | 800°C |
| Al1-NC96 | 1.91 | 1.64 | 1.27 |
| Til-NC96 | 3.79 | 2.15 | 1.51 |
| Tal-NC96 | 4.12 | 3.65 | 2.64 |
| Sb1-NC96 | 4.14 | 3.75 | 3.15 |
| Nbl-NC96 | 4.05 | 3.41 | 2.52 |
| W1-NC96 | 4.11 | 3.81 | 3.61 |
| Mol-NC96 | 4.12 | 3.91 | 3.72 |

**[Table 18]**

| | | | |
|---|---|---|---|
| Average grain size (µm) | 700°C | 750°C | 800°C |
| Al1-NC96 | 0.88 | 1.075 | 1.633 |
| Til-NC96 | 0.584 | 0.773 | 1.129 |
| Tal-NC96 | 0.359 | 0.491 | 0.675 |
| Sb1-NC96 | 0.342 | 0.424 | 0.55 |
| Nbl-NC96 | 0.324 | 0.46 | 0.645 |
| W1-NC96 | 0.327 | 0.34 | 0.389 |
| Mol-NC96 | 0.319 | 0.322 | 0.358 |

Table 16 above and FIG. 21 show the average width of the primary particles provided in the surface portion of the secondary particle. It was shown that, at a calcination temperature of 700°C, the average width of the primary particles provided in the surface portion of the secondary particle in the positive electrode active material containing aluminum (the first heteroatom) was 0.56 µm, which is about three times larger than the average width (0.152 µm) in the positive electrode active material containing tungsten. It could be confirmed that, at a calcination temperature of 700°C, the average widths of the primary particles provided in the surface portions of secondary particles in the positive electrode active material containing titanium (the second heteroatom), the positive electrode active materials containing tantalum, antimony and niobium (the third heteroatom), and the positive electrode active materials containing tungsten and molybdenum added (the fourth heteroatom), except for the positive electrode active material containing aluminum (the first heteroatom), were similar (about 0.16 µm). It could be confirmed that, at a calcination temperature of 750°C, the average width was approximately similar between the positive electrode active materials containing tantalum, antimony and niobium (the third heteroatom), and the positive electrode active materials containing tungsten and molybdenum added (the fourth heteroatom), but was relatively larger in the positive electrode active material containing aluminum (the first heteroatom) and the positive electrode active material containing titanium (the second heteroatom), and at a calcination temperature of 800°C, the average width was the largest in the positive electrode active materials containing tungsten and molybdenum added (the fourth heteroatom).

Referring to Table 17 above and FIG. 22, which show the average aspect ratio of the primary particles provided in the surface portion of the secondary particle in each positive electrode active material, it could be confirmed that, at the lowest calcination temperature of 700°C, the average aspect ratio in the positive electrode active material containing aluminum was the lowest (1.91), and as the calcination temperature increased, the aspect ratio decreased gradually. On the other hand, it could be confirmed that the positive electrode active materials containing tungsten and molybdenum (the fourth heteroatom) had a high aspect ratio, and the aspect ratio was maintained almost unchanged even when the calcination temperature increased to 800°C. The aspect ratio of the primary particles means the ratio of the length of the long axis to the length of the short axis in the primary particle, and as the aspect ratio increases, the primary particles are provided in a rod shape, so that the orientation of the primary particles may be improved. Since the primary particles of the positive electrode active material containing aluminum have a low aspect ratio even at a calcination temperature of 700°C, the primary particles hardly show a rod shape, and thus the orientation thereof is low. On the other hand, the primary particles of the positive electrode active materials containing tungsten and molybdenum a (the fourth heteroatom) have a high aspect ratio and high orientation even after high-temperature calcination, and thus the positive electrode active materials have high structural stability and improved cycle life characteristics.

Referring to Table 18 above and table, which show the grain size of the primary particles provided in the surface portion of the secondary particle according to each Preparation Example, it can be confirmed that, in the case of the positive electrode active materials containing titanium (the second heteroatom) and the positive electrode active materials containing tantalum, antimony and niobium (third heteroatom), except for the positive electrode active material containing aluminum (the first heteroatom), the grain size tended to increase as the calcination temperature increased. On the other hand, it could be confirmed that the grain size in the positive electrode active materials containing tungsten and molybdenum (the fourth heteroatom) was almost constant regardless of the calcination temperature.

As described above, it could be confirmed that, in the case of the positive electrode active material containing aluminum (the first heteroatom), aluminum was not present at the grain boundary between the primary particles and the added aluminum was completely doped into the primary particles. Therefore, when the positive electrode active material containing aluminum is calcined at high temperature, the primary particles are excessively agglomerated, so that the rod shape almost disappears, and thus the primary particles are provided in an approximately equiaxed form. It could be confirmed that, at a calcination temperature of 700°C, the primary particles of the positive electrode active material containing titanium (the second heteroatom) had the rod shape while having as a higher aspect ratio than the positive electrode active material containing aluminum, but at calcination temperatures of 750°C and 800°C, the primary particles were agglomerated and the rod shape could not be maintained. It could be confirmed that, in the case of the positive electrode active materials containing tantalum, antimony and niobium (the third heteroatom), the rod shape of the primary particle was maintained at 700°C and 750°C, but could not be maintained at 800°C. It could be confirmed that the rod shape of the primary particles in the positive electrodes containing tungsten and molybdenum (the fourth heteroatom) was maintained at all calcination temperatures of 700°C, 750°C and 800°C.

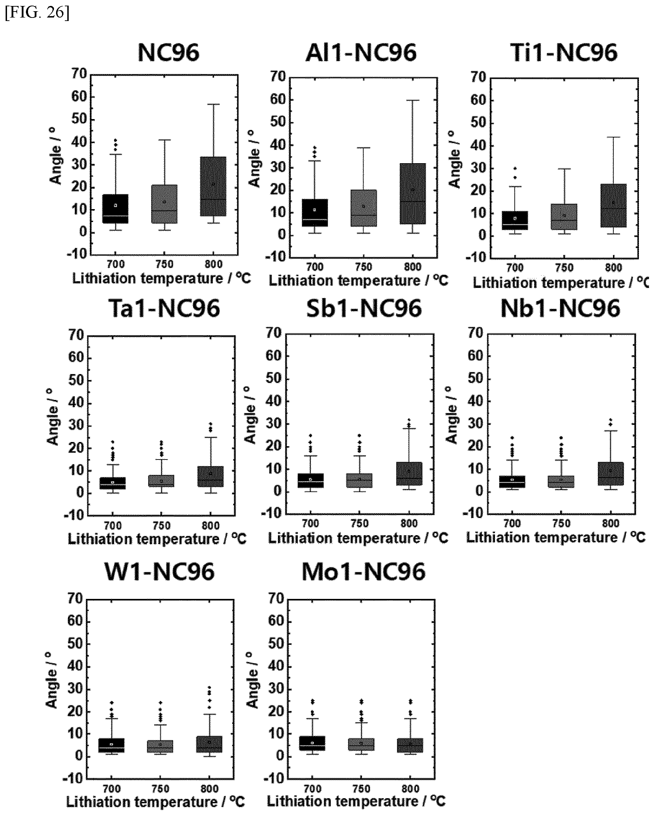

Table 19 below shows the average orientation angle in the positive electrode active material containing each heteroatom at each calcination temperature. FIG. 24 shows the results of measuring the orientation angles of primary particles provided in the surface portion of each individual secondary particle depending on the type of heteroatom and calcination temperature. FIG. 25 shows the average value of the orientation angles shown in FIG. 24, depending on calcination temperature. FIG. 26 shows the average value of the orientation angles shown in FIG. 24, depending on the type of heteroatom.

**[Table 19]**

| | | | |
|---|---|---|---|
| Average orientation angle (°) | 700°C | 750°C | 800°C |
| NC96 | 11.9 | 13.5 | 21.4 |
| Al1-NC96 | 11.4 | 13.3 | 24.1 |
| Til-NC96 | 8.2 | 10.3 | 16.6 |
| Tal-NC96 | 5.7 | 7.5 | 8.4 |
| Sb1-NC96 | 5.9 | 6.8 | 9.3 |
| Nbl-NC96 | 5.6 | 6.7 | 8.6 |
| W1-NC96 | 5.7 | 5.6 | 6.2 |
| Mol-NC96 | 5.3 | 5.5 | 5.9 |

Referring to Table 19 above and FIGS. 24 to 26, it could be confirmed that the average orientation angle at a calcination temperature of 700°C was higher in the order of the positive electrode active material containing aluminum (the first heteroatom), the positive electrode active material containing titanium (the second heteroatom), and the other positive electrode active materials tantalum, antimony, niobium, tungsten and molybdenum (the third heteroatom and the fourth heteroatom), and the average orientation angle in the positive electrode active material containing aluminum (the first heteroatom) increased gradually as the temperature increased.

Here, it could be confirmed that the aluminumcontaining positive electrode active material (the first heteroatom) having the largest average orientation angle showed wide distributions of the average value, maximum value and minimum values of the orientation angles, and the positive electrode active materials containing tungsten and molybdenum (the fourth heteroatom), which have the smallest orientation angle, showed a narrow distribution of the orientation angle even when the calcination temperature increased. In addition, In addition, it could be confirmed that the positive electrode active material containing aluminum (the first heteroatom) and the positive electrode active material containing no heteroatom exhibited similar orientation angle characteristics. That is, it could be confirmed that, even in the case of the positive electrode active material in which the aluminum was distributed like a dopant inside the primary particles, the positive electrode active material exhibited characteristics similar to those of the positive electrode active material containing no heteroatom, suggesting that characteristics such as alignment and shape maintenance of the primary particles during high-temperature calcination are irrelative to doping of the heteroatom and are attributable to the heteroatom provided at the grain boundary between the primary particles at a higher concentration than inside the primary particles.

That is, it could be confirmed that, in the case of the positive electrode active materials containing tungsten and molybdenum (the fourth heteroatom), not only the average value of the orientation angle of the primary particles provided in the surface portion of the secondary particle, but also the overall orientation and alignment of the primary particles were improved and uniformly appeared.

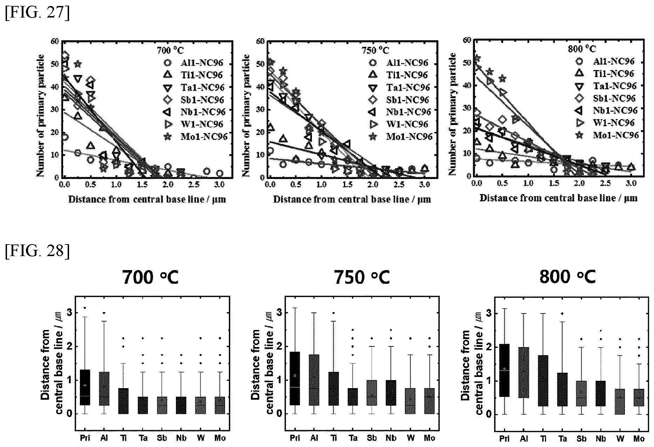

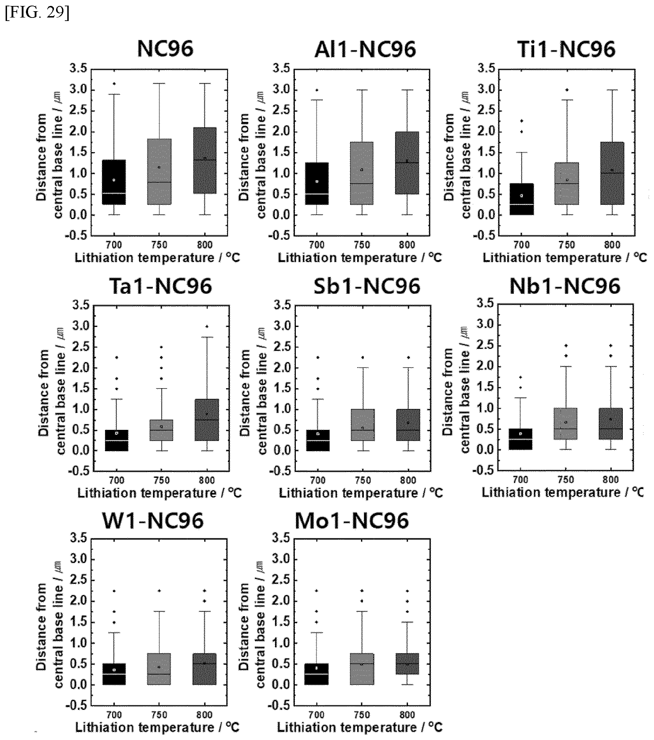

Table 20 below shows the average orientation distance depending on the type of heteroatom and calcination temperature. FIG. 27 shows the results of measuring the orientation distances of primary particles provided in the surface portion of each individual secondary particle depending on the type of heteroatom and calcination temperature. FIG. 28 shows the average value of the orientation distances shown in FIG. 27, depending on calcination temperature. FIG. 29 shows the average value of the orientation distances shown in FIG. 27, depending on the type of heteroatom.

**[Table 20]**

| | | | |
|---|---|---|---|
| Average orientation distance (µm) | 700°C | 750°C | 800°C |
| NC96 | 0.844 | 1.144 | 1.362 |
| Al1-NC96 | 0.816 | 1.136 | 1.341 |
| Til-NC96 | 0.477 | 0.845 | 1.082 |
| Tal-NC96 | 0.435 | 0.586 | 0.865 |
| Sbl-NC96 | 0.411 | 0.566 | 0.685 |
| Nbl-NC96 | 0.399 | 0.696 | 0.791 |
| W1-NC96 | 0.394 | 0.419 | 0.51 |
| Mol-NC96 | 0.403 | 0.43 | 0.489 |

FIG. 27 shows the results of measuring the orientation distance for the primary particles provided in the surface portion of the secondary particle in each positive electrode active material at each calcination temperature, and FIGS. 28 and 29 are graphs showing the average values of the orientation distances. Referring to Table 20 above and FIGS. 27 to 29, it could be confirmed that the positive electrode active material containing aluminum (the first heteroatom) exhibited orientation distance characteristics similar to those of the positive electrode active material containing no heteroatom, and the average value and distribution of the orientation distances therein increased as the calcination temperature increased. On the other hand, it could be confirmed that the positive electrode active materials containing tungsten and molybdenum (the fourth heteroatom), which showed excellent orientation angle characteristics, also exhibited excellent orientation distance characteristics, and the average value and distribution of the orientation distances therein were maintained almost unchanged even when the calcination temperature increased.

It could be confirmed that the orientation distance in the positive electrode active material containing no heteroatom and in the positive electrode active material containing aluminum (the first heteroatom) was about double that in the positive electrode active materials containing tungsten and molybdenum, even at the lowest calcination temperature of 700°C, and the average value and standard deviation of the orientation distances therein increased and decreased as the calcination temperature increased.

It could be confirmed that the orientation angle and orientation distance characteristics almost unchanged depending on the type of heteroatom, and were better in the order of the positive electrode active material containing titanium (the second heteroatom), the positive electrode active materials containing tantalum, antimony and niobium (third heteroatoms), and the positive electrode active materials containing tungsten and molybdenum (the fourth heteroatom), depending on the calcination temperature.

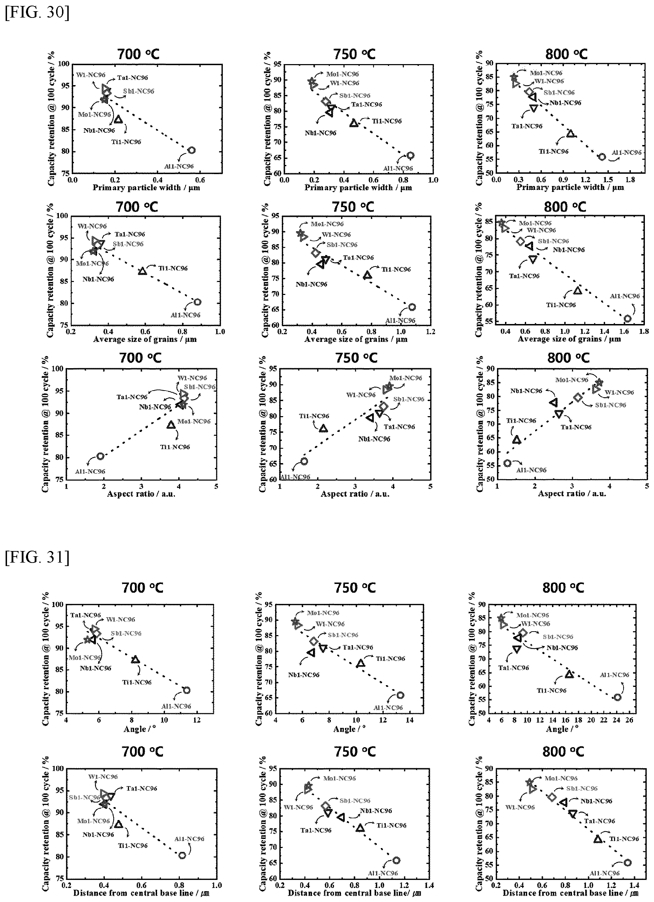

FIG. 30 depicts graphs showing capacity retention after 100 cycles for the average values of the widths, grain sizes and aspect ratios of the primary particles according to Preparation Examples 1 to 21 depending on calcination temperature. FIG. 31 depicts graphs showing capacity retention after 100 cycles for the average values of the orientation angles and orientation distances of the primary particles according to Preparation Examples 1 to 21 depending on calcination temperature.

Referring to FIGS. 30 and 31, it could be confirmed that the capacity retention after 100 cycles was better as the width, grain size, aspect ratio, orientation angle and orientation distance values of the primary particles were smaller.

It was confirmed through experiments that, when the nickel content in the positive electrode active material according to this embodiment was 96 mol%, 80% or more of the primary particles provided in the surface portion of the secondary particle were oriented particles, and when the width, grain size, aspect ratio, orientation angle and orientation distance of the oriented particles were within the ranges described below, the positive electrode active material exhibited capacity retention of 80% or more after 100 cycles. Average width of the oriented particles: 0.2 µm to 0.5 µm; average grain size: 0.2 µm to 0.5 µm; average aspect ratio: 2 to 5; an average orientation angle: 4° to 10°; and average orientation distance: 0.2 µm to 0.9 µm.

In the process of calcining the positive electrode active material, the primary particles provided in the surface portion of the secondary particle are most affected by the heat of calcination. In addition, in the positive electrode active material, the primary particles provided in the surface portion of the secondary particle are in direct contact with an electrolyte and may function as an inlet through which lithium ions flow into the secondary particle, thereby providing a path for lithium ions. That is, in the case of the positive electrode active material according to this embodiment, the primary particles constituting the secondary particle are doped with a specific heteroatom, and the heteroatom is provided as a compound at the grain boundary between the primary particles at a higher concentration than the inside of the primary particles, thereby reducing the degree of agglomeration of the primary particles even during high-temperature calcination, so that the rod shape which is the shape of the preliminary primary particles of the composite metal hydroxide before calcination can be maintained. In addition, the compound containing an excess of a heteroatom, formed at the grain boundary between the primary particles, is provided on the outer surfaces of the primary particles in a crystalline phase different from that of the primary particles, and thus it may protect the primary particles and, at the same time, stabilize the boundary between adjacent primary particles, whereby the primary particles provided in the surface portion of the secondary particle may be aligned toward the center of the secondary particles and have high orientation.

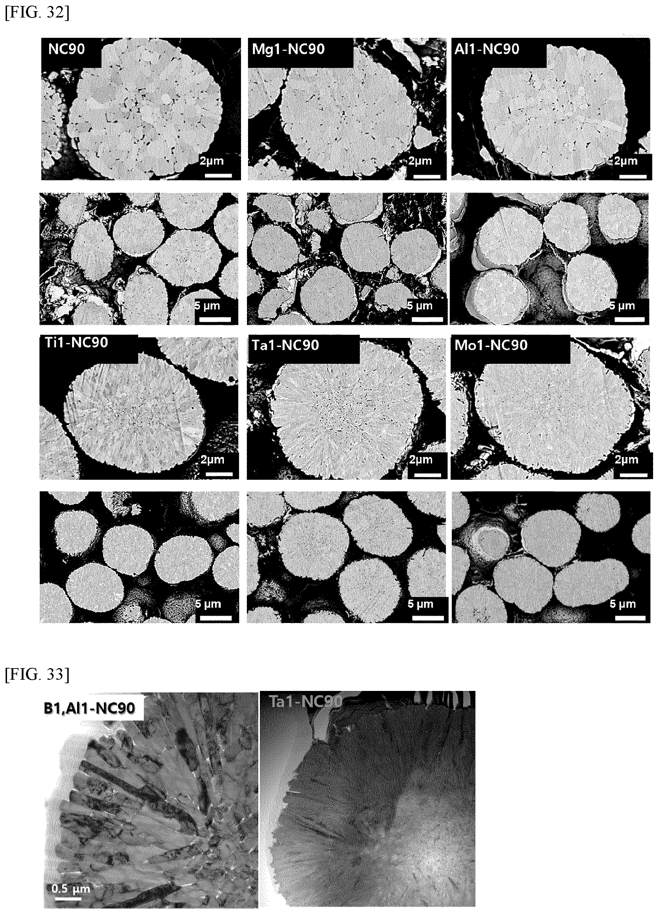

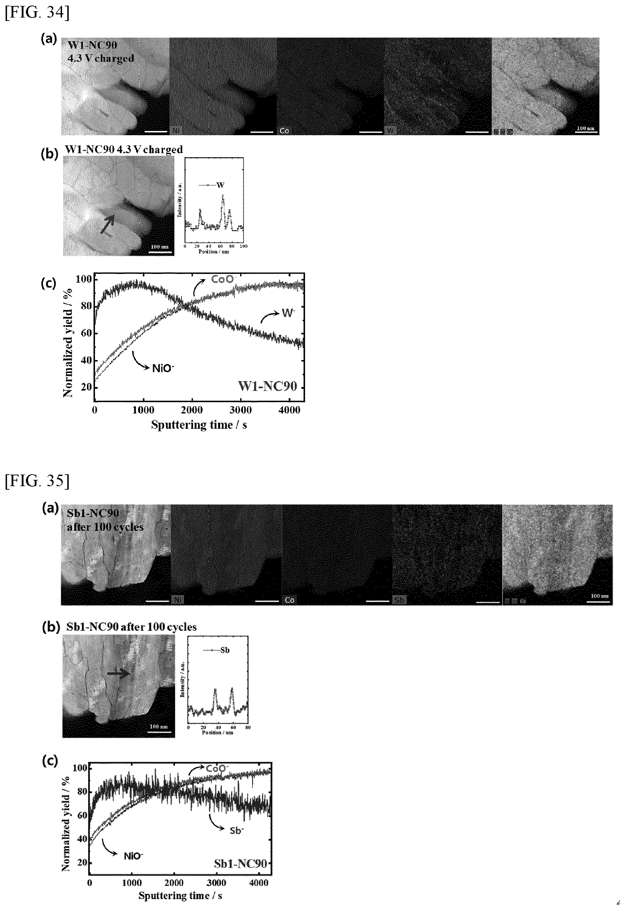

FIG. 32 shows SEM images of secondary particles in NC90-based positive electrode active materials containing different types of heteroatoms. FIG. 33 shows SEM images of the shapes of primary particles provided in the surface portion of a secondary particle in each of a positive electrode active material containing boron and aluminum and a positive electrode active material containing tantalum. FIG. 34 shows the results of TEM-EDX elemental mapping (a), TEM-EDX elemental line scanning (b) and TOF-SIMS sputtering (c) of an NC90-based positive electrode active material containing tungsten. FIG. 35 shows the results of TEM-EDX elemental mapping (a), TEM-EDX elemental line scanning (b) and TOF-SIMS sputtering (c) of an NC90-based positive electrode active material containing antimony.

Referring to FIGS. 32 and 33 showing the cross-sections of calcined positive electrode active materials, it could be confirmed that, in the case of the positive electrode active material (NC90) containing no heteroatom and the positive electrode active material containing aluminum and magnesium, the primary particles constituting the secondary particle were in an irregular form, but in the case of the positive electrode active materials containing titanium, tantalum and molybdenum, the rod shape of the primary particles having a specific aspect ratio was maintained.

It could be confirmed that the primary particles in the positive electrode active material (Al-NC90) containing aluminum alone had a shape similar to that of the primary particles of the positive electrode active material (B1, Al1-NC90) containing both boron and aluminum, but the rod shape of the primary particles in the positive electrode active material containing both boron and aluminum was maintained. This is because, when aluminum was added alone, the aluminum was uniformly doped only into the primary particles and did not exist at the grain boundaries between the primary particles. In the case of the positive electrode active material containing both boron and aluminum, both the boron and aluminum were doped into the primary particles, and at the same time, the born formed a compound containing the boron at the grain boundary between the primary particles.

Referring to FIGS. 34 and 35, it can be confirmed that tungsten and antimony were doped into the primary particles, and at the same time, were provided at the grain boundaries between the primary particles at a higher concentration than inside the primary particles. Also, referring to TOF-SIMS sputtering, it can be confirmed that the concentrations of tungsten and antimony were higher in the surface portion of the secondary particle than in the central portion of the secondary particle.

That is, it could be confirmed that, when the heteroatom was provided at the grain boundary between the primary particles at a higher concentration than the inside of the primary particles, the primary particles maintained the rod shape having a predetermined aspect ratio even in the positive electrode active material calcined at high temperature, and thus the orientation thereof was increased. This is believed to be because the heteroatom-containing compound provided at the grain boundary between the primary particles acted as a sintering inhibitor to prevent agglomeration of the primary particles.

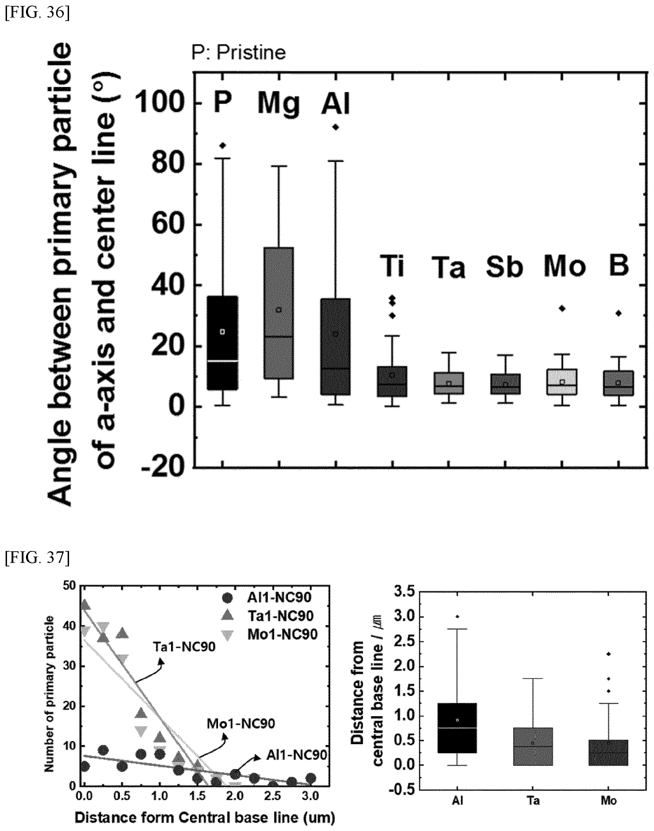

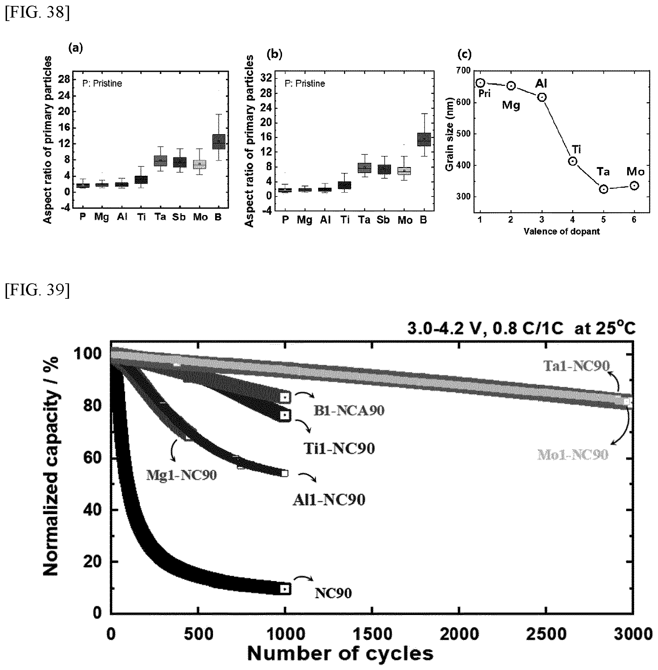

Tables 21 and 22 below show the average width, aspect ratio, grain size, orientation angle and orientation distance values of primary particles provided in the surface portions of secondary particles in NC90 positive electrode active materials containing different heteroatoms. FIG. 36 is a graph showing the results of measuring the orientation angles of primary particles provided in the surface portion of a secondary particle in each of NC90-based positive electrode active materials containing different types of heteroatom. FIG. 37 depicts graphs showing orientation distances in positive electrode active materials containing aluminum, tantalum and molybdenum, respectively. FIG. 38 shows the results of measuring the aspect ratio (a), width (b) and grain size (c) of primary particles.

**[Table 21]**

| Classification 1 | Classification 2 | Average width (µm) | Average aspect ratio | Average grain size (µm) |
|---|---|---|---|---|
| Preparation Example 22 | NC90 | 461.2 | 1.7 | 662.8 |
| Preparation Example 23 | Mgl-NC90 | 514.4 | 2.0 | 653.5 |
| Preparation Example 24 | Al1-NC90 | 431.2 | 2.0 | 618.1 |
| Preparation Example 25 | Til-NC90 | 380.7 | 3.2 | 413.3 |
| Preparation Example 26 | Tal-NC90 | 128.5 | 7.9 | 325.0 |
| Preparation Example 27 | Sb1-NC90 | 122.1 | 7.5 | - |
| Preparation Example 28 | Mol-NC90 | 149.0 | 7.0 | 336.3 |
| Preparation Example 29 | B1,Al1-NC90 | 104.3 | 15.7 | - |

**[Table 22]**

| Classification 1 | Classification 2 | Average orientation angle (°) | Average orientation distance (µm) |
|---|---|---|---|
| Preparation Example 22 | NC90 | 24.8 | - |
| Preparation Example 23 | Mgl-NC90 | 31.7 | - |
| Preparation Example 24 | Al1-NC90 | 23.9 | 0.913 |
| Preparation Example 25 | Til-NC90 | 10.3 | - |
| Preparation Example 26 | Tal-NC90 | 7.5 | 0.448 |
| Preparation Example 27 | Sbl-NC90 | 7.2 | - |
| Preparation Example 28 | Mol-NC90 | 8.1 | 0.449 |
| Preparation Example 29 | B1,Al1-NC90 | 7.7 | - |

Referring to Table 21 above and FIG. 36, it can be confirmed that, in the case of the positive electrode active material containing no heteroatom (Preparation Example 22), the positive electrode active material containing manganese (Preparation Example 23), and the positive electrode active material containing aluminum (Preparation Example 24), the aspect ratio of the primary particles provided in the surface portion of the secondary particle was low, and the distribution of the orientation angle was wide. On the other hand, it can be confirmed that, in the case of the positive electrode active materials containing titanium, tantalum and molybdenum (Preparation Example 25, Preparation Example 26 and Preparation Example 28), the aspect ratio was relatively high, and the orientation angle was also relatively small and the distribution thereof was narrow, indicating that the primary particles in the surface portion of the secondary particle were provided in a rod shape and the orientation thereof was improved. When comparing Preparation Example 22, Preparation Example 24 and Preparation Example 29, it could be confirmed that the positive electrode active material containing only aluminum exhibited characteristics similar to those of the positive electrode active material containing no heteroatom, but in the case of the positive electrode active material containing both boron and aluminum, the aspect ratio of the rod shape increased. This suggests that the boron added was not interfered with by the aluminum added, but acted independently, and thus the boron was provided at the grain boundary between the primary particles at a higher concentration than the inside of the primary particles. On the other hand, it could be confirmed that, when the boron was added and the primary particles had a rod shape having a high aspect ratio, the electrochemical performance was relatively degraded. That is, it could be confirmed that, in this embodiment, the heteroatom element provided at the grain boundary at a higher concentration than the inside of the primary particles could control the aspect ratio of the rod shape of the oriented particles within a predetermined range, thereby controlling the grain size, thereby improving electrochemical properties.

Referring to FIG. 37, it could be confirmed that the positive electrode active materials containing tantalum and molybdenum, respectively, had a smaller orientation distance value than the positive electrode active material containing aluminum, suggesting that they had excellent orientation.

Referring to FIG. 38 showing the aspect ratio (a), width (b) and grain size (c) of the primary particles provided in the surface portion of the secondary particle of the positive electrode active material depending on the type of heteroatom, it could be confirmed that, in the case of tantalum, antimony and molybdenum, the width and the grain size were small, and the aspect ratio was large, suggesting that the rod shape was maintained.

That is, it could be confirmed that the average width of the primary particles provided in the surface portion of the secondary particle did differ depending on the type of heteroatom, and was large in the positive electrode active material containing no heteroatom, the positive electrode active material containing magnesium, and the positive electrode active material containing aluminum, and was small in the positive electrode active materials containing tantalum, antimony and molybdenum, respectively, and the positive electrode active material containing titanium showed an intermediate value.

Table 23 shows the results of evaluating the electrochemical characteristics of NC90-based positive electrode active materials containing different types of heteroatoms, and Table 24 below shows the results of evaluating the cycle life characteristics. FIG. 39 shows the results of evaluating the long-term cycle life characteristics of NC90-based positive electrode active materials containing different types of heteroatoms.

**[Table 23]**

| Classification 1 | Classification 2 | 0.1C, 1st Dis-Cap (mAh/g) | 1^{st} / 3^{rd} Efficiency (activation) | 0.5C Capacity (mAh/g) | 0.5C/0. 1C | Cycle number | 0.5C Capacity Retention |
|---|---|---|---|---|---|---|---|
| Preparation Example 22 | NC90 | 228.8 | 94.7% | 213.9 | 93.5% | 100 | 78.8% |
| Preparation Example 23 | Mgl-NC90 | 230.0 | 96.3% | 213.7 | 92.9% | 100 | 82.5% |
| Preparation Example 24 | Al1-NC90 | 223.9 | 94.4% | 210.0 | 93.8% | 100 | 83.7% |
| Preparation Example 25 | Til-NC90 | 229.1 | 97.0% | 218.2 | 95.2% | 100 | 94.0% |
| Preparation Example 26 | Tal-NC90 | 229.1 | 97.8% | 216.4 | 94.4% | 100 | 97.5% |
| Preparation Example 27 | Sbl-NC90 | 229.3 | 96.8% | 216.5 | 94.4% | 100 | 96.0% |
| Preparation Example 28 | Mol-NC90 | 230.9 | 95.6% | 217.6 | 94.2% | 100 | 94.9% |
| Preparation Example 29 | B1,Al1-NC90 | 227.4 | 95.4% | 206.1 | 90.6% | 100 | 93.5% |

**[Table 24]**

| Classification 1 | Classification 2 | Capacity retention (%) | | | |
|---|---|---|---|---|---|
| | | After 500 cycles | After 1,000 cycles | After 2,000 cycles | After 3,000 cycles |
| Preparation Example 22 | NC90 | 14.7% | 9.6% | - | - |
| Preparation Example 23 | Mgl-NC90 | 66.7% | - | - | - |
| Preparation Example 24 | Al1-NC90 | 67.5% | 54.1% | - | - |
| Preparation Example 25 | Til-NC90 | 92.0% | 76.5% | - | - |
| Preparation Example 26 | Tal-NC90 | 96.3% | 93.9% | 88.2% | 81.4% |
| Preparation Example 27 | Sbl-NC90 | - | - | - | - |
| Preparation Example 28 | Mol-NC90 | 96.9% | 94.0% | 88.1% | 81.8% |
| Preparation Example 29 | B1,Al1-NC90 | 91.3% | 83.4% | - | - |

Referring to Tables 23 and Table 24 above and FIG. 39, it could be confirmed that the positive electrode active material containing no heteroatom and the positive electrode active material containing manganese or aluminum had relatively low capacity retention after cycling. On the other hand, it could be confirmed that the positive electrode active materials containing tantalum, antimony and molybdenum, respectively, had excellent cycle life characteristics. In addition, it could be confirmed that the positive electrode active material containing both boron and aluminum as in Preparation Example 29 exhibited better cycle life characteristics than the positive electrode active material containing only aluminum. That is, it could be confirmed that the tendency of the cycle life characteristics of the positive electrode active materials was also similar to the tendency of the rod shape and orientation degree of the primary particles provided in the surface portion of the secondary particle.

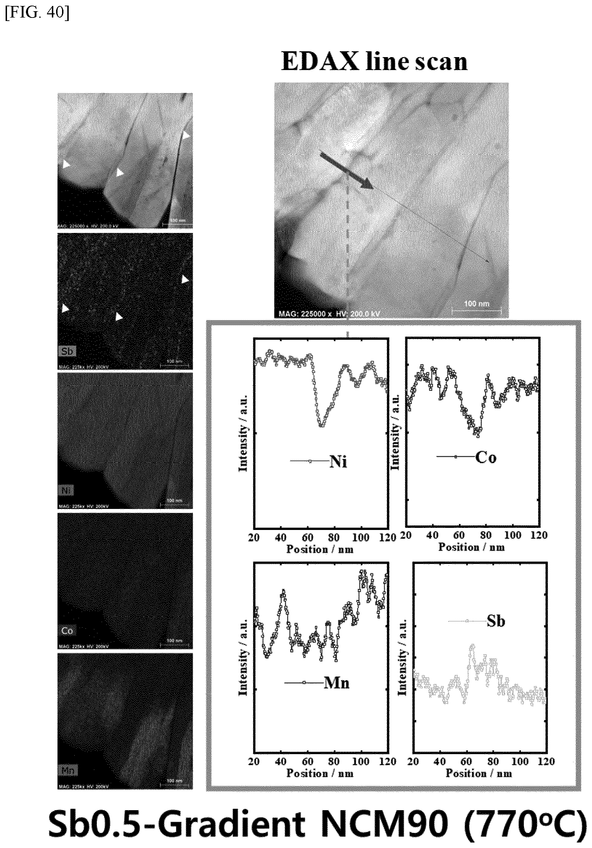

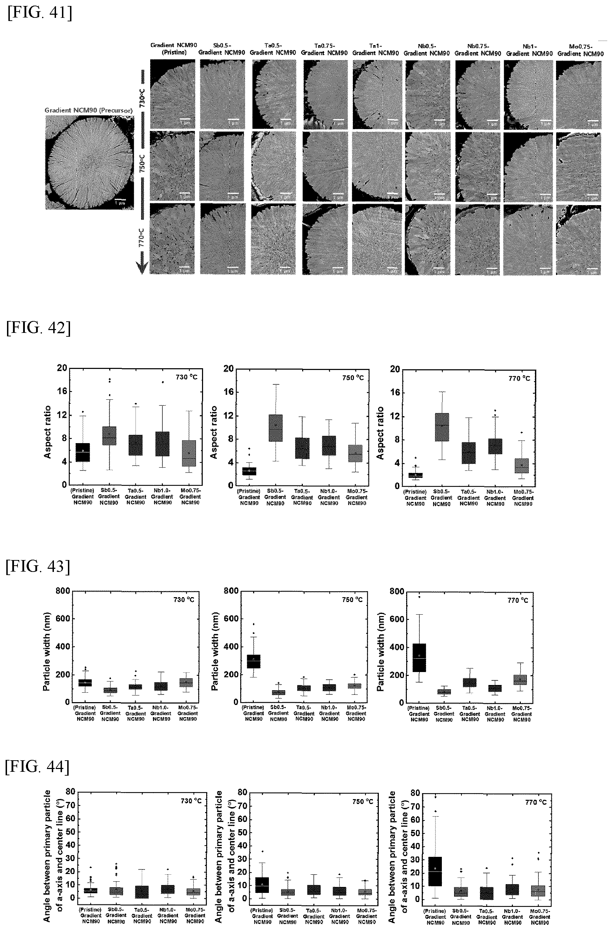

FIG. 40 shows the results of EDAX mapping of Preparation Example 35 (Sb0.5-Gradient NCM90). FIG. 41 depicts SEM images of the cross-sections of a composite metal hydroxide, which is a precursor before calcination, and concentration gradient-type NCM-based positive electrode active materials, depending on the type of heteroatom and calcination temperature.

Referring to FIG. 40, it could be confirmed that, in the concentration gradient-type NCM-based positive electrode active material, antimony was segregated at the grain boundary between the primary particles provided in the surface portion of the secondary particle, similarly to the above-described bulk type positive electrode active material, suggesting that the concentration of the antimony was higher at the grain boundary than the inside of the primary particles. An excess of antimony provided at the grain boundary can prevent agglomeration of the primary particles during high-temperature calcination so that the rod shape of the primary particles can be maintained.

Referring to FIG. 41, it could be confirmed that agglomeration of the primary particles in the positive electrode active material (Gradient NCM90) containing no heteroatom occurred as the calcination temperature increased, unlike the precursor before calcination. On the other hand, it could be confirmed that, in the case of the positive electrode active materials containing antimony, tantalum, niobium and molybdenum, respectively, the shape of the primary particle provided in the surface portion of the secondary particle was a rod shape having a specific aspect ratio, regardless of the calcination temperature. In addition, it could be confirmed that, when the molar ratio of niobium was increased from 0.5 mol% to 0.75 mol% and 1 mol%, the primary particles had a rod shape with a smaller width.

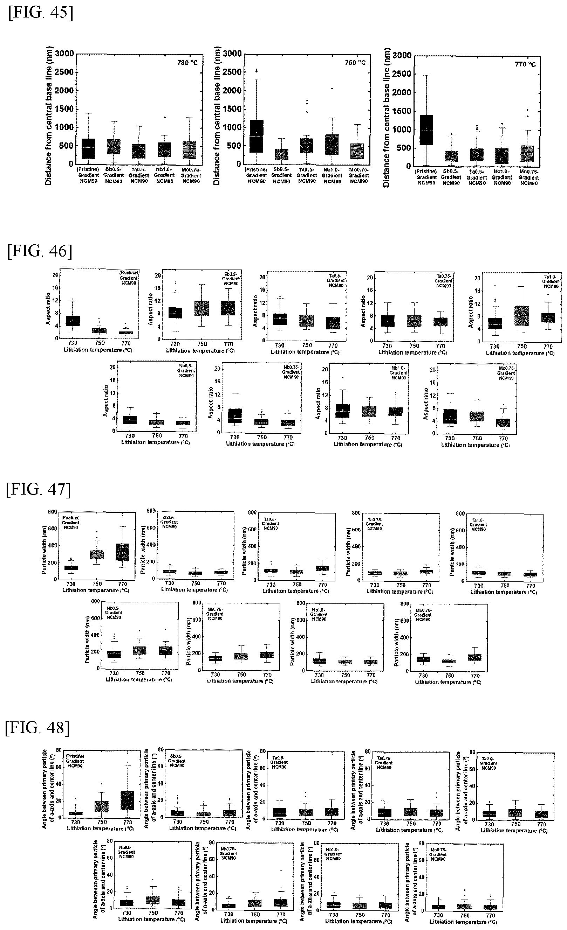

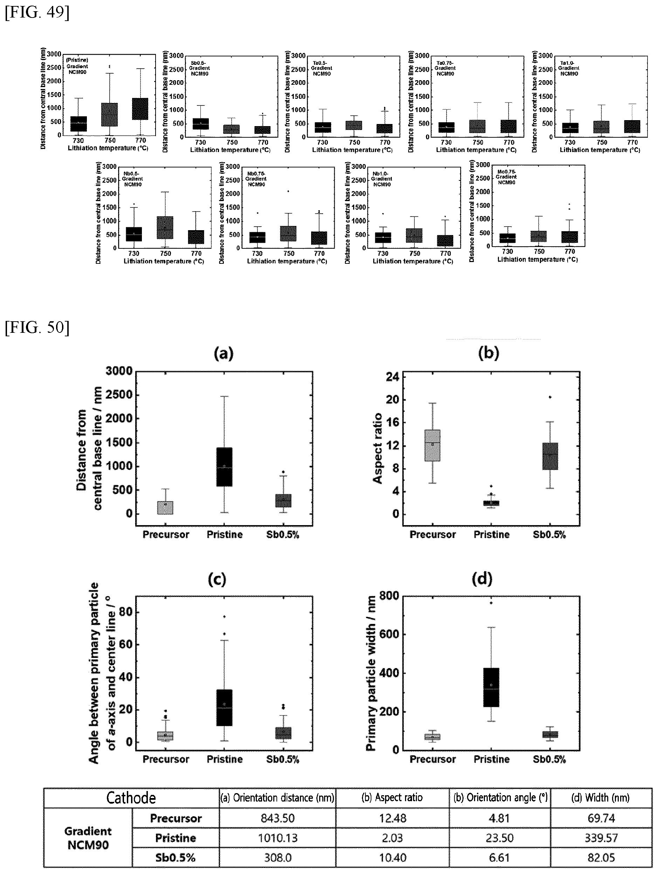

Table 26 below shows the average width, aspect ratio, grain size, orientation angle, and orientation distance values of primary particles provided in the surface portion of the secondary particle in each of concentration gradient-type NCM-based cathode active materials containing different types of heteroatoms at each calcination temperature. FIG. 42 depicts graphs showing the aspect ratios of oriented particles in concentration gradient-type NCM-based positive electrode active materials depending on the type of heteroatom. FIG. 43 depicts graphs showing the widths of oriented particles in concentration gradient-type NCM-based positive electrode active materials depending on the type of heteroatom. FIG. 44 depicts graphs showing the orientation angles of oriented particles in concentration gradient-type NCM-based positive electrode active materials depending on the type of heteroatom. FIG. 45 depicts graphs showing the orientation distance of oriented particles in concentration gradient-type NCM-based positive electrode active materials depending on the type of heteroatom. FIG. 46 depicts graphs showing the aspect ratios in concentration gradient-type NCM-based positive electrode active materials depending on calcination temperature. FIG. 47 depicts graphs showing the widths in concentration gradient-type NCM-based positive electrode active materials depending on calcination temperature. FIG. 48 depicts graphs showing the orientation angles in concentration gradient-type NCM-based positive electrode active materials depending on calcination temperature. FIG. 49 depicts graphs showing the orientation distances in concentration gradient-type NCM-based positive electrode active materials depending on calcination temperature. FIG. 50 shows the results of comparing the characteristics of particles between a precursor, a concentration gradient-type pristine NCM-based positive electrode active material, and a concentration gradient-type NCM-based positive electrode active material containing antimony, at a calcination temperature of 770°C.

**[Table 25]**

| Classification 1 | Classification 2 | Calcination temperature (°C) | Average width (µm) | Average aspect ratio | Average orientation angle (°) | Average orientation distance (µm) |
|---|---|---|---|---|---|---|
| Precursor | Precursor | - | 69.74 | 12.48 | 4.81 | 873.5 |
| Preparation Example 30 | Gradient NCM90 | 730 | 143.8 | 5.90 | 6.32 | 477.2 |
| Preparation Example 31 | Gradient NCM90 | 750 | 308.2 | 2.65 | 10.82 | 899.7 |
| Preparation Example 32 | Gradient NCM90 | 770 | 339.6 | 2.03 | 23.50 | 1010.1 |
| Preparation Example 33 | Sb0.5-Gradient NCM90 | 730 | 92.2 | 8.76 | 6.71 | 527.8 |
| Preparation Example 34 | Sb0.5-Gradient NCM90 | 750 | 73.6 | 10.42 | 5.37 | 285.7 |
| Preparation Example 35 | Sb0.5-Gradient NCM90 | 770 | 82.1 | 10.40 | 6.61 | 308.0 |
| Preparation Example 36 | Mo0.75-Gradient NCM90 | 730 | 146.6 | 5.58 | 5.55 | 429.1 |
| Preparation Example 37 | Mo0.75-Gradient NCM90 | 750 | 123.1 | 5.68 | 5.60 | 425 |
| Preparation Example 38 | Mo0.75-Gradient NCM90 | 770 | 173.9 | 3.74 | 7.64 | 406.0 |
| Preparation Example 39 | Ta0.5-Gradient NCM90 | 730 | 119.5 | 7.33 | 5.58 | 399.5 |
| Preparation Example 40 | Ta0.5-Gradient NCM90 | 750 | 107.0 | 6.84 | 7.00 | 586.3 |
| Preparation Example 41 | Ta0.5-Gradient NCM90 | 770 | 152.7 | 5.95 | 5.80 | 361.4 |
| Preparation Example 54 | Nb1.0-Gradient NCM90 | 730 | 120.5 | 7.48 | 7.47 | 418.1 |
| Preparation Example 55 | Nb1.0-Gradient NCM90 | 750 | 109.1 | 6.96 | 6.31 | 576.2 |
| Preparation Example 56 | Nb1.0-Gradient NCM90 | 770 | 109.1 | 7.10 | 8.11 | 338.4 |

Referring to Table 25 above and FIGS. 42 to 45, it could be confirmed that the width, aspect ratio, orientation angle, and orientation distance of the primary particles provided in the surface portion of the secondary particle changed as the calcination temperature increased. When comparing the positive electrode active material containing no heteroatom (Preparation Examples 30 to 32) and the positive electrode active materials containing antimony, molybdenum, tantalum and niobium, respectively, as heteroatoms (Preparation Examples 33 to 56), it could be confirmed that, in the case of the positive electrode active materials containing antimony, molybdenum, tantalum and niobium, respectively, as heteroatoms (Preparation Examples 33 to 56), the shape of the primary particles provided in the surface portion of the secondary particle did not change significantly even when the calcination temperature increased, unlike the positive electrode active material containing no heteroatom. This is believed to be because the heteroatom provided at the grain boundary between the primary particles at a higher concentration than the inside of the primary particles prevents agglomeration of the primary particles even during high-temperature calcination.

Referring to FIG. 42, it can be confirmed that, when the calcination temperature was 730°C, the positive electrode active material containing no heteroatom and the positive electrode active material containing a heteroatom show approximately similar aspect ratios, but when the calcination temperature was increased to 750°C and 770°C, the width (length in the c-axis direction which is the short axis) of the primary particles provided in the surface portion of the secondary particle in the positive electrode active material containing no heteroatom element increased, and thus the aspect ratio decreased. On the other hand, it can be confirmed that, in the case of the positive electrode active materials containing antimony, molybdenum, tantalum and niobium, respectively, the aspect ratio at the calcination temperature of 770°C was approximately similar to that at 730°C. In addition, it can be confirmed that the change in the aspect ratio depending on the calcination temperature did slightly differ between the types of heteroatoms.

It could be confirmed that, in the case of the positive electrode active material containing no heteroatom (Preparation Examples 30 to 32), the rod shape of the primary particles provided in the surface portion of the secondary particle gradually collapsed as the calcination temperature increased, resulting in deterioration in the performance of the positive electrode active material, whereas the positive electrode active material containing a heteroatom exhibited excellent electrochemical properties while the rod shape was maintained even when the calcination temperature increased. Here, the positive electrode active materials containing 0.5 mol% antimony, 0.5 mol% tantalum, and 1 mol% niobium, respectively, exhibited excellent characteristics at a calcination temperature of 770°C, and the positive electrode active material containing 0.75 mol% molybdenum exhibited excellent characteristics at a calcination temperature of 750°C.

Referring to FIG. 43, it could be confirmed that, at a calcination temperature of 730°C, the width of the primary particles provided in the surface portion of the secondary particle of the positive electrode active material almost unchanged depending on the presence or absence of a heteroatom. On the other hand, it could be confirmed that, as the calcination temperature increased, the width of the positive electrode active material containing no heteroatom (Preparation Examples 30 to 32) gradually increased compared to those in the other positive electrode active materials. It could be confirmed that the positive electrode active materials containing antimony, molybdenum, tantalum, and niobium, respectively, showed similar widths at calcination temperatures of 730°C and 770°C.

It can be confirmed that, in the case of the positive electrode active material containing no heteroatom (Preparation Examples 30 to 32), as the calcination temperature increased, the primary particles provided in the surface portion of the secondary particle lost their rod shape, resulting in deterioration in the electrochemical performance, whereas the positive electrode active materials containing antimony, molybdenum, tantalum and niobium, respectively, which are heteroatoms provided at the grain boundaries between the primary particles at higher concentrations than the inside of the primary particles, exhibited excellent electrochemical performance regardless of the calcination temperature. Regarding the width, the positive electrode active materials containing 0.5 mol% antimony, 0.5 mol% tantalum and 1 mol% niobium, respectively, exhibited excellent characteristics at a calcination temperature of 770°C, and the positive electrode active material containing 0.75 mol% molybdenum exhibited excellent characteristics at a calcination temperature of 750°C.

Referring to FIG. 44, it could be confirmed that, at a calcination temperature of 730°C, the orientation angle of the primary particles provided in the surface portion of the secondary particle of the positive electrode active material almost unchanged, irrespective of the addition of a heteroatom. On the other hand, it could be confirmed that, when the calcination temperature was increased to 770°C, the orientation angle of the primary particles in the positive electrode active material containing no heteroatom (Preparation Examples 30 to 32) gradually increased. The orientation angles in the positive electrode active materials containing antimony, molybdenum, tantalum, and niobium, respectively, almost unchanged even when the calcination temperature increased. That is, it could be confirmed that, in the positive electrode material containing no heteroatom, the primary particles agglomerated as the calcination temperature increased, so that the rod shape thereof was not maintained, whereas the positive electrode active materials containing antimony, molybdenum, tantalum and niobium, respectively, exhibited excellent electrochemical characteristics irrespective of the calcination temperature.

Referring to FIG. 45, it could be confirmed that, at a calcination temperature of 730°C, the positive electrode active materials had similar orientation distances regardless of the addition of a heteroatom. On the other hand, it could be confirmed that, when the calcination temperature was increased, the orientation distances in the positive electrode active materials containing antimony, molybdenum, tantalum and niobium, respectively, were maintained almost unchanged, whereas the orientation distance in the positive electrode active material containing no heteroatom increased.

Referring to the results for heteroatoms added in different amounts at each calcination temperature, it could be confirmed that 0.5 mol% antimony, 0.5 mol% tantalum, 1.0 mol% niobium, and 0.75 mol% molybdenum exhibited the best electrochemical characteristics. In addition, in the case of the same heteroatom, as the amount of heteroatom added increased, the rod shape of the primary particles provided in the surface portion of the secondary particle was better maintained, which means that the heteroatom more effectively prevents agglomeration of the primary particles during calcination.

Referring to FIGS. 46 to 49, it could be confirmed that, in the case of the positive electrode active material containing no heteroatom, the aspect ratio, width, orientation angle, and orientation distance of the primary particles provided in the surface of the secondary particle all increased as the calcination temperature increased, whereas the aspect ratio, width, orientation angle, and orientation distance in the positive electrode active materials containing antimony, molybdenum, tantalum and niobium, respectively, were almost constant regardless of the calcination temperature.

That is, it could be confirmed that, in the case of the positive electrode active material containing no heteroatom, as the calcination temperature increased, the primary particles provided in the surface portion of the secondary particle lost their rod shape, resulting in deterioration in the electrochemical characteristics, whereas the positive electrode active materials containing antimony, molybdenum, tantalum and niobium, respectively, exhibited excellent electrochemical characteristics while the rod shape of the primary particles provided in the surface portion of the secondary particles was maintained even when the calcination temperature increased.

Referring to FIG. 50, when comparing a concentration gradient-type NCM-based positive electrode active material as a precursor, a concentration gradient-type NCM-based positive electrode active material containing no heteroatom, and a concentration gradient-type NCM-based positive electrode active material containing antimony, at a calcination temperature of 770°C, it could be confirmed that, in the case of the positive electrode active material containing no heteroatom, the orientation distance, the orientation angle and the width of the oriented particles increased and the aspect ratio decreased, compared to those in the precursor or the positive electrode active material containing antimony. That is, it could be confirmed that the primary particles of the positive electrode active material containing antimony exhibited characteristics approximately similar to those of the preliminary primary particles of the precursor even after high-temperature calcination, whereas in the case of the positive electrode active material containing no antimony, the morphology of the primary particles in the precursor was not maintained. In addition, referring to the aspect ratio, it could be confirmed that, in the case of the positive electrode active material containing no antimony, the aspect ratio was 2.03, suggesting that the rod shape with an aspect ratio of 12.48 that appeared in the preliminary primary particles of the precursor almost disappeared.

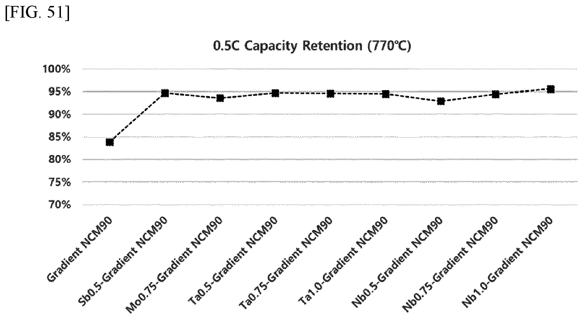

Table 26 below shows the results of measuring the electrochemical characteristics of concentration gradient type NCM-based positive electrode active materials containing no heteroatom or containing different types of heteroatoms, at each calcination temperature. FIG. 51 is a graph showing capacity retention after 100 cycles for concentration gradient-type NCM-based positive electrode active materials containing different types of heteroatom at calcination temperatures of 730°C, 750°C and 770°C.

**[Table 26]**

| Classification 1 | Classification 2 | Calc. Temp. (°C) | 0.1C, 1st Dis-Cap (mAh/g) | 1^{st} / 3^{rd} Efficiency (activation) | 0.5C Capacity (mAh/g) | 0.5C/0. 1C | Cycle number | 0.5C Capacity Retention |
|---|---|---|---|---|---|---|---|---|
| Preparation Example 30 | Gradient NCM90 | 730 | 231.3 | 97.2% | 218.9 | 94.6% | 100 | 92.3% |
| Preparation Example 31 | Gradient NCM90 | 750 | 233.7 | 95.7% | 218.2 | 93.4% | 100 | 88.8% |
| Preparation Example 32 | Gradient NCM90 | 770 | 224.9 | 93.5% | 205.7 | 91.5% | 100 | 83.9% |
| Preparation Example 33 | Sb0.5-Gradient NCM90 | 730 | 226.6 | 98.1% | 216.1 | 95.4% | 100 | 93.0% |
| Preparation Example 34 | Sb0.5-Gradient NCM90 | 750 | 229.4 | 98.0% | 218.6 | 95.3% | 100 | 94.0% |
| Preparation Example 35 | Sb0.5-Gradient NCM90 | 770 | 233.6 | 97.8% | 220.5 | 94.4% | 100 | 94.7% |
| Preparation Example 36 | Mo0.75-Gradient NCM90 | 730 | 231.9 | 97.1% | 220.8 | 95.2% | 100 | 94.0% |
| Preparation Example 37 | Mo0.75-Gradient NCM90 | 750 | 231.8 | 96.5% | 219.6 | 94.8% | 100 | 94.8% |
| Preparation Example 38 | Mo0.75-Gradient NCM90 | 770 | 230.6 | 95.2% | 219 | 95.0% | 100 | 93.6% |
| Preparation Example 39 | Ta0.5-Gradient NCM90 | 730 | 234.9 | 98.2% | 225.2 | 95.8% | 100 | 93.4% |
| Preparation Example 40 | Ta0.5-Gradient NCM90 | 750 | 233.1 | 98.0% | 222.4 | 95.4% | 100 | 94.3% |
| Preparation Example 41 | Ta0.5-Gradient NCM90 | 770 | 232.7 | 97.8% | 219 | 94.1% | 100 | 94.7% |
| Preparation Example 42 | Ta0.75-Gradient NCM90 | 730 | 233 | 97.8% | 220.4 | 94.6% | 100 | 94.0% |
| Preparation Example 43 | Ta0.75-Gradient NCM90 | 750 | 234.9 | 97.8% | 222.8 | 94.9% | 100 | 93.2% |
| Preparation Example 44 | Ta0.75-Gradient NCM90 | 770 | 231.9 | 97.8% | 219.1 | 94.5% | 100 | 94.6% |
| Preparation Example 45 | Ta1.0-Gradient NCM90 | 730 | 232.3 | 97.5% | 218.9 | 94.2% | 100 | 93.5% |
| Preparation Example 46 | Ta1.0-Gradient NCM90 | 750 | 232.7 | 97.8% | 221.2 | 95.1% | 100 | 93.3% |
| Preparation Example 47 | Ta1.0-Gradient NCM90 | 770 | 232 | 97.8% | 217.8 | 93.9% | 100 | 94.5% |
| Preparation Example 48 | Nb0.5-Gradient NCM90 | 730 | 232.6 | 97.3% | 218 | 93.8% | 100 | 94.1% |
| Preparation Example 49 | Nb0.5-Gradient NCM90 | 750 | 235.9 | 97.6% | 222.9 | 94.5% | 100 | 93.4% |
| Preparation Example 50 | Nb0.5-Gradient NCM90 | 770 | 231.5 | 97.1% | 218.1 | 94.2% | 100 | 92.9% |
| Preparation Example 51 | Nb0.75-Gradient NCM90 | 730 | 234 | 97.7% | 219.7 | 93.9% | 100 | 94.6% |
| Preparation Example 52 | Nb0.75-Gradient NCM90 | 750 | 232.6 | 97.6% | 219.1 | 94.2% | 100 | 94.3% |
| Preparation Example 53 | Nb0.75-Gradient NCM90 | 770 | 231.2 | 97.3% | 217.3 | 94.0% | 100 | 94.4% |
| Preparation Example 54 | Nb1.0-Gradient NCM90 | 730 | 234.9 | 97.8% | 219.5 | 93.4% | 100 | 94.2% |
| Preparation Example 55 | Nb1.0-Gradient NCM90 | 750 | 235.2 | 97.6% | 220.9 | 93.9% | 100 | 93.9% |
| Preparation Example 56 | Nb1.0-Gradient NCM90 | 770 | 232.9 | 97.4% | 217 | 93.2% | 100 | 95.6% |

Referring to Table 26 above and FIG. 51, it could be confirmed that the capacity retention performance after 100 cycles corresponded to the aspect ratio, width, orientation angle and orientation distance of the primary particles provided in the surface portion of the secondary particle. That is, it could be confirmed that, even at a high calcination temperature, the positive electrode active materials containing antimony, molybdenum, tantalum and niobium, respectively, which have an excellent rod shape, exhibited excellent capacity retention characteristics compared to the positive electrode active material containing no heteroatom. On the other hand, it could be confirmed that the capacity retention characteristics of the positive electrode active material containing no heteroatom were lowered as the calcination temperature increased.

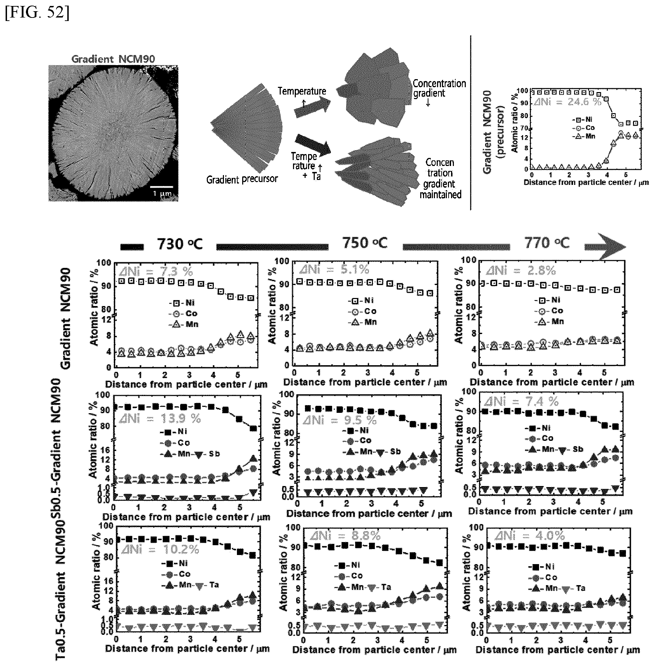

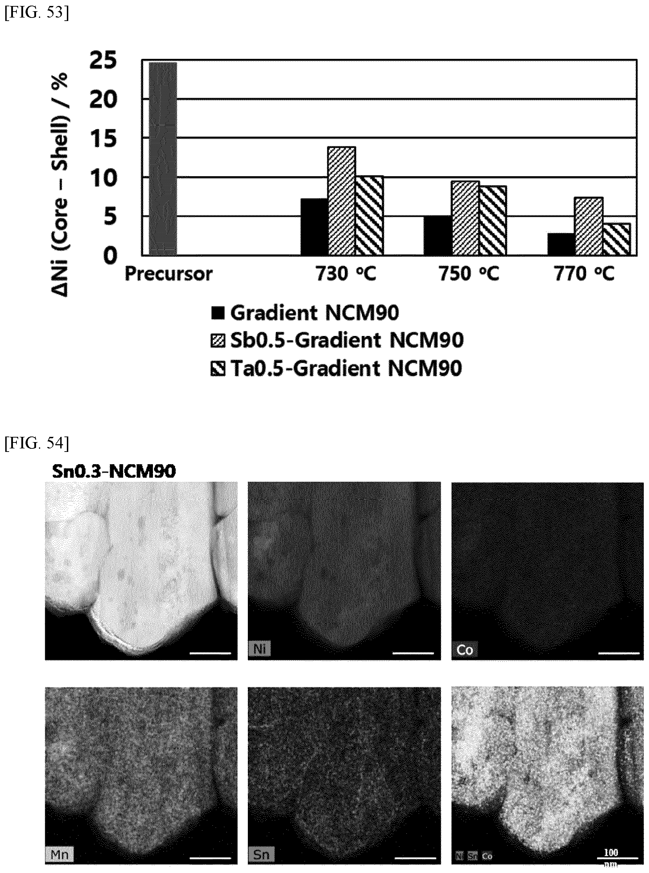

Table 27 shows the results of measuring the changes in nickel concentration in concentration gradient type NCM-based positive electrode active material depending on calcination temperature. FIG. 52 depicts graphs showing the concentration gradients of transition metals in a concentration gradient-type NCM-based positive electrode active material containing no heteroatom, a concentration gradient-type NCM-based positive electrode active material containing 0.5 mol% antimony, a concentration gradient-type NCM-based positive electrode active material containing 0.5 mol% tantalum, depending on calcination temperature. FIG. 53 is a graph showing the concentration gradients of nickel in the central portion and surface portion of a secondary particle in each of a concentration gradient-type NCM-based positive electrode active material containing no heteroatom, a concentration gradient-type NCM-based positive electrode active material containing 0.5 mol% antimony, a concentration gradient-type NCM-based positive electrode active material containing 0.5 mol% tantalum, depending on calcination temperature.

**[Table 27]**

| Classification 1 | Classification 2 | Calcination temperature (°C) | ΔNi |
|---|---|---|---|
| | precursor | - | 24.6% |
| Preparation Example 30 | Gradient NCM90 | 730 | 7.3% |
| Preparation Example 31 | Gradient NCM90 | 750 | 5.1% |
| Preparation Example 32 | Gradient NCM90 | 770 | 2.8% |
| Preparation Example 33 | Sb0.5-Gradient NCM90 | 730 | 13.9% |
| Preparation Example 34 | Sb0.5-Gradient NCM90 | 750 | 9.5% |
| Preparation Example 35 | Sb0.5-Gradient NCM90 | 770 | 7.4% |
| Preparation Example 39 | Ta0.5-Gradient NCM90 | 730 | 10.2% |
| Preparation Example 40 | Ta0.5-Gradient NCM90 | 750 | 8.8% |
| Preparation Example 41 | Ta0.5-Gradient NCM90 | 770 | 4.0% |

Referring to Table 27 above and FIGS. 52 and 53, it can be confirmed that the degree of concentration gradient in the secondary particle of the positive electrode active material gradually decreased as the calcination temperature increased. On the other hand, it can be confirmed that, as the calcination temperature increased, the degree of concentration gradient was greater in the positive electrode active material containing 0.5 mol% antimony and the positive electrode active material containing 0.5 mol% tantalum than in the positive electrode active material containing no heteroatom. This is believed to be because, as shown in the upper drawing of FIG. 48, the concentration gradient throughout the secondary particle was maintained while the rod shape of the primary particles provided in the surface portion of the secondary particles was maintained.

In addition, as shown in FIG. 53, in the positive electrode active material containing 0.5 mol% antimony and the positive electrode active material containing 0.5 mol% tantalum, the antimony and tantalum are segregated at the grain boundaries of the primary particles provided in the surface portions of the secondary particles, and can prevent agglomeration of the primary particles during high-temperature calcination so that the morphology of the primary particles can be maintained in a rod shape and the diffusion of the transition metal can be suppressed, thereby further increasing the degree of concentration gradient, thereby further improving the electrochemical characteristics.

Table 28 below the results of measuring the electrochemical characteristics of a NCM 90-based positive electrode active material containing or not containing 0.3 mol% tin. FIG. 54 shows the results of TEM-EDX elemental mapping for Preparation Example 58.

**[Table 28]**

| Classification 1 | Classification 2 | 0.1C, 1st Dis-Cap (mAh/g) | 1^{st} Efficiency (activation) | 0.5C Capacity (mAh/g) | 0.5C/0. 1C | Cycle number | 0.5C Capacity Retention |
|---|---|---|---|---|---|---|---|
| Preparation Example 57 | NCM90 | 229.4 | 95.3% | 214.5 | 93.5% | 100 | 87.7% |
| Preparation Example 58 | Sn0.3-NCM90 | 233.8 | 97.2% | 218.8 | 93.6% | 100 | 94.5% |

Referring to Table 28 above and FIG. 54, it could be confirmed that the capacity retention characteristics after cycling were further improved by adding tin. Tin added as a heteroatom is doped uniformly into the primary particles, and is segregated at the grain boundary between the primary particles provided in the surface portion of the secondary particle and is present at the grain boundary at a higher concentration than the inside of the primary particles. Tin present in excess at the grain boundary surface can prevent agglomeration of the primary particles even during high-temperature calcination so that the rod shape can be maintained, thereby improving electrochemical performance.

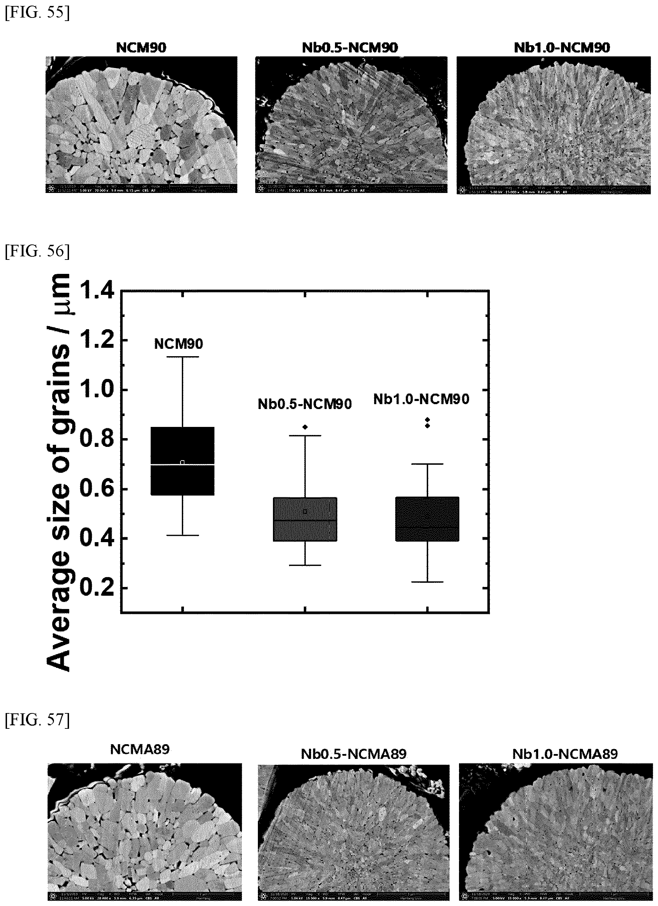

Table 29 below shows the results of measuring the electrochemical characteristics of NCM90-based positive electrode active materials containing niobium as a heteroatom. FIG. 55 depicts SEM images of secondary particles in NCM90-based positive electrode active materials containing different concentrations of a heteroatom. FIG. 56 is a graph showing the average size of grains in NCM90-based positive electrode active materials containing different concentrations of a heteroatom.

**[Table 29]**

| Classification 1 | Classification 2 | 0.1C, 1st Dis-Cap (mAh/g) | 1^{st} Efficiency (activation) | 0.5C Capacity (mAh/g) | 0.5C/0.1 c | Cycle number | 0.5C Capacity Retention |
|---|---|---|---|---|---|---|---|
| Preparation Example 59 | NCM90 | 231 | 96.2% | 216 | 93.5% | 100 | 86.2% |
| Preparation Example 60 | Nb0.5-NCM90 | 229 | 97.1% | 214.1 | 93.5% | 100 | 92.9% |
| Preparation Example 61 | Nb1.0-NCM90 | 230.6 | 97.1% | 213.2 | 92.5% | 100 | 95.1% |

Referring to Table 29 above and FIGS. 55 and 56, it can be confirmed that the NCM90-based positive electrode active material containing niobium exhibited better electrochemical characteristics than the positive electrode material containing no heteroatom (Preparation Example 59), and the orientation of the primary particles thereof was also improved. In addition, it could be confirmed that the grain size was also better in the positive electrode active material containing niobium than in the positive electrode active material containing no niobium.

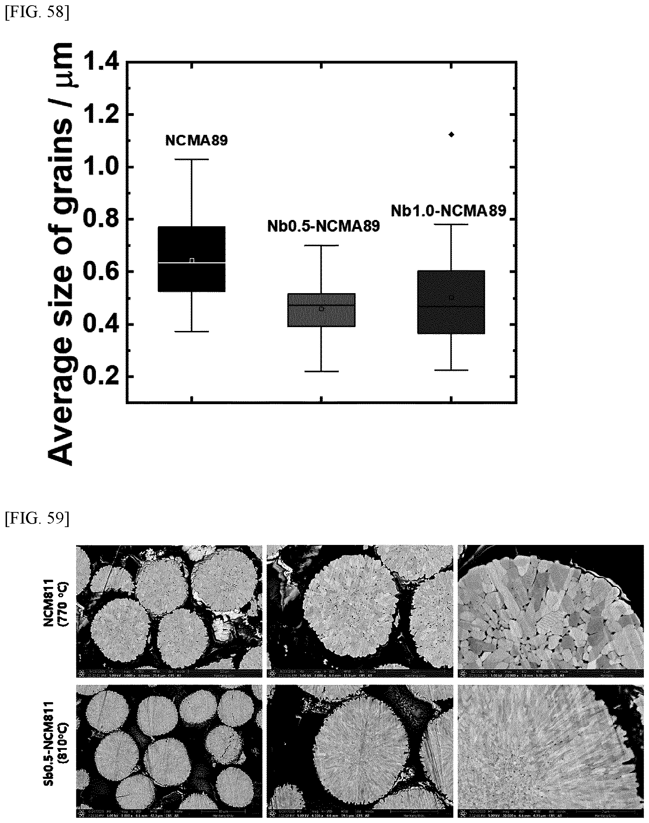

Table 30 below shows the results of measuring the electrochemical characteristics of NCMA89-based positive electrode active materials containing niobium as a heteroatom. FIG. 57 shows SEM images of the cross-sections of secondary particles in NCMA89-based positive electrode active materials containing different concentrations of a heteroatom. FIG. 58 is a graph showing the average size of grains in NCMA89-based positive electrode active materials containing different concentrations of a heteroatom.

**[Table 30]**

| Classification 1 | Classification 2 | 0.1C, 1st Dis-Cap (mAh/g) | 1^{st} Efficiency (activation) | 0.5C Capacity (mAh/g) | 0.5C/0.1 c | Cycle number | 0.5C Capacity Retention |
|---|---|---|---|---|---|---|---|
| Preparation Example 62 | NCMA89 (A10.5%) | 231.1 | 96.3% | 216.6 | 93.7% | 100 | 91.4% |
| Preparation Example 63 | Nb0.5-NCMA89 | 232.5 | 96.8% | 215.4 | 92.6% | 100 | 94.5% |
| Preparation Example 64 | Nb1.0-NCMA89 | 229 | 96.3% | 208.4 | 91.0% | 100 | 96.9% |

Referring to Table 30 above and FIGS. 57 and 58, it can be confirmed that, similar to the above-described NCM90-based positive electrode active material, the NCMA89-based positive electrode active material containing niobium exhibited excellent electrochemical characteristics compared to the positive electrode material containing no heteroatom (Preparation Example 62), and the orientation of the primary particles therein was also improved. In addition, it could be confirmed that the grain size was also better in the positive electrode active material containing niobium than in the positive electrode active material containing no niobium.

Table 31 below shows the results of measuring the electrochemical characteristics of LNO-based positive electrode active materials containing antimony as a heteroatom.

**[Table 31]**

| Classification 1 | Classification 2 | Calcination temperature (°C) | 0.1C, 1st Dis-Cap (mAh/g) | 1^{st} Efficiency (activation) | 0.5C Capacity (mAh/g) | 0.5C/0.1 C | Cycle number | 0.5C Capacity Retention |
|---|---|---|---|---|---|---|---|---|
| Preparation Example 65 | LNO | 650 | 250.7 | 97.8% | 234.1 | 93.4% | 100 | 74.9% |
| Preparation Example 66 | Sb0.7-LNO | 700 | 243.2 | 97.3% | 225.9 | 92.9% | 100 | 88.9% |
| Preparation Example 67 | Sb0.7-LNO | 730 | 247.9 | 97.6% | 232.3 | 93.7% | 100 | 87.3% |
| Preparation Example 68 | Sb0.7-LNO | 750 | 248.4 | 97.4% | 232.3 | 93.5% | 100 | 87.0% |

When comparing Preparation Example 65 and Preparation Example 66, it could be confirmed that the capacity retention characteristics after 100 cycles were excellent in the positive electrode active material containing 0.7 mol% antimony. In addition, it could be confirmed that, in the case of the positive electrode active material containing 0.7 mol% antimony, the capacity retention characteristics after 100 cycles were maintained almost unchanged even when the calcination temperature increased. Even in the case of the LNO-based positive electrode active material, a compound containing an excess of antimony may be provided at the grain boundary between the primary particles, and can maintain the rod shape of the primary particles during calcination, thereby improving electrochemical characteristics.

Table 32 below shows the results of measuring the electrochemical properties of NCM811-based positive electrode active materials containing antimony as a heteroatom. FIG. 59 shows SEM images of the positive electrode active materials of Preparation Examples 69 and 71.

**[Table 32]**

| Classification 1 | Classification 2 | Calcination temperature (°C) | 0.1C, 1st Dis-Cap (mAh/g) | 1^{st} Efficiency (activation) | 0.5C Capacity (mAh/g) | 0.5C/0.1 C | Cycle number | 0.5C Capacity Retention |
|---|---|---|---|---|---|---|---|---|
| Preparation Example 69 | NCM811 | 770 | 219.5 | 97.0% | 208.3 | 94.9% | 100 | 94.9% |
| Preparation Example 70 | Sb0.3-NCM811 | 790 | 220.4 | 96.5% | 206.4 | 93.6% | 100 | 95.3% |
| Preparation Example 71 | Sb0.5-NCM811 | 810 | 220 | 96.7% | 207.7 | 94.4% | 100 | 96.3% |

Referring to Tables 32 above and FIG. 59, it could be confirmed that, in the case of the NCM811-based positive electrode active material containing antimony as a heteroatom, the rod shape of the primary particles was maintained even after high-temperature calcination, thereby improving electrochemical performance. On the other hand, the NCM811-based positive electrode active material had a nickel content of 80 mol%, which is lower than that in the above-described Preparation Example, and thus there was no significant difference in the electrochemical characteristics. It could be confirmed that the heteroatom provided at the grain boundary between the primary particles located in the surface portion of the secondary particle at a higher concentration than the inside of the primary particle according to this embodiment exhibited a greater effect under harder conditions such as a higher nickel content and an increased number of cycles.

Table 33 below shows the results of measuring the electrochemical characteristics of concentration gradient type NCM78-based positive electrode active materials containing antimony as a heteroatom.

**[Table 33]**

| Classification 1 | Classification 2 | Calcination temperature (°C) | 0.1C, 1st Dis-Cap (mAh/g) | 1^{st} Efficiency (activation ) | 0.5C Capacity (mAh/g) | 0.5C/0.1 C | Cycle number | 0.5C Capacity Retention |
|---|---|---|---|---|---|---|---|---|
| Preparation Example 72 | Gradient NCM78 | 790 | 216 | 95.9% | 201.7 | 93.4% | 100 | 94.4% |
| Preparation Example 73 | Sb0.5-Gradient NCM78 | 790 | 213.6 | 96.5% | 200.4 | 93.8% | 100 | 95.2% |
| Preparation Example 74 | Sb0.5-Gradient NCM78 | 800 | 215.1 | 97.0% | 202.7 | 94.3% | 100 | 95.6% |

It could be confirmed that the electrochemical characteristics of the positive electrode active material containing antimony were improved even when the calcination temperature increased. This is believed to be because antimony formed a compound at the grain boundary between the primary particles provided in the surface portion of the secondary particle of the positive electrode active material at a higher concentration than inside the primary particles.

Although the present invention has been described above in detail with reference to preferred embodiments, the scope of the present invention is not limited to specific embodiments, and should be defined by the appended claims. In addition, those skilled in the art will understand that many modifications and variations are possible without departing from the scope of the present invention.

### [Description of reference numerals]

10: central portion
20: surface portion
30: primary particles
100: secondary particle

## Claims

1. A positive electrode active material for a lithium secondary battery comprising a secondary particle composed of a plurality of primary particles,
wherein the primary particles include oriented particles provided in a surface region of the secondary particle and having a short axis and a long axis,
wherein the oriented particles include ultra-fine grains having a grain size of 0.1 µm to 0.5 µm,
wherein the grain size is obtained by calculating a square root of an average cross-sectional area of the oriented particles.

2. A positive electrode active material for a lithium secondary battery comprising a secondary particle composed of a plurality of primary particles,
wherein the primary particles include oriented particles provided in a surface region of the secondary particle and having a short axis and a long axis,
wherein the oriented particles include those in which an average absolute value of acute angles among angles between long-axis-direction extension lines passing through centers of the oriented particles and angle baselines connecting central points of the extension lines to a central point of the secondary particle is 20 or less,
wherein the central point of each of the extension lines is a center of a line connecting one end to the other end of the oriented particle.

3. A positive electrode active material for a lithium secondary battery comprising a secondary particle composed of a plurality of primary particles,
wherein the primary particles include oriented particles provided in a surface portion of the secondary particle and having a short axis and a long axis,
wherein the oriented particles include those in which a distance between a long-axis-direction extension line passing through centers of the oriented particles and a central baseline passing through a central point of the secondary particle in parallel with the extension line is 1.5 µm or less.

4. A positive electrode active material for a lithium secondary battery including a secondary particle composed of a plurality of primary particles,
wherein the primary particles include oriented particles provided in a surface portion of the secondary particle and having a short axis and a long axis,
wherein the primary particles contain a heteroatom,
wherein the heteroatom is provided at the grain boundary between the primary particles and inside the primary particles, and a concentration of the heteroatom is higher at the grain boundary between the primary particles than inside the primary particles so that the heteroatom reduces the degree of agglomeration of the oriented particles when the positive electrode active material is calcined at a high temperature of 700°C or higher.

5. The positive electrode active material of any one of claims 1 to 4, wherein 70% or more of the primary particles distributed in a thickness (T) region ranging from the outermost surface of the secondary particle to a portion corresponding to 40% of the diameter (L) of the secondary particle in a direction toward the center of the secondary particle are oriented particles.

6. The positive electrode active material of claim 5, wherein the thickness (T) ranging from the outermost surface of the secondary particle to a portion corresponding to 40% of the diameter (L) of the secondary particle in a direction toward the center of the secondary particle is 1.5 µm to 4 µm.

7. The positive electrode active material of any one of claims 1 to 4, wherein the long-axis direction of the oriented particles corresponds to a lithium ion diffusion path.

8. The positive electrode active material of any one of claims 1 to 4, wherein an average aspect ratio of the oriented particles, which is a ratio of a length of the long axis to a length of the short axis, is 2.5 to 15.

9. The positive electrode active material of any one of claims 1 to 4, wherein an average diameter of the secondary particles is 5 µm to 20 µm.

10. The positive electrode active material of claim 4, wherein the heteroatom comprises any one or more of antimony (Sb), molybdenum (Mo), tungsten (W), niobium (Nb), tellurium (Te), tantalum (Ta), zirconium (Zr), titanium (Ti), tin (Sn), yttrium (Y), indium (In), vanadium (V), and chromium (Cr).

11. The positive electrode active material of claim 10, wherein an average concentration of the heteroatom in the positive electrode active material is 0.01 mol% to 2 mol%.

12. The positive electrode active material of claim 10, wherein the positive electrode active material comprises one prepared by calcining a lithium compound together with a composite metal hydroxide containing any one or more of nickel (Ni), cobalt (Co), manganese (Mn), and aluminum (Al),
wherein the heteroatom is added together with any one or more of nickel (Ni), cobalt (Co), manganese (Mn), and aluminum (Al), or added together with the lithium compound, before calcination.

13. The positive electrode active material of any one of claims 1 to 4, wherein the positive electrode active material comprises lithium, a transition metal and oxygen,
the primary particles comprise a layered crystal structure in which a lithium (Li) layer comprising only lithium and a transition metal layer comprising only a transition metal are alternately and regularly arranged,
the primary particles further comprise a doping region having a cation-ordered structure,
the cation-ordered structure comprises a first mixed layer and a second mixed layer, each containing lithium and the transition metal, together with the lithium layer and the transition metal layer,
a content of lithium in the first mixed layer is higher than a content of the transition metal therein,
a content of the transition metal in the second mixed layer is higher than a content of lithium therein,
the first mixed layer and the second mixed layer are stacked together, and
a unit cell formed by the first mixed layer and second mixed layer stacked together comprises a long-range ordered lattice with an increased a-axis lattice constant.

14. The positive electrode active material of any one of claims 1 to 4, wherein the positive electrode active material comprises one prepared by calcining a lithium compound together with a composite metal hydroxide containing any one or more of nickel (Ni), cobalt (Co), manganese (Mn), and aluminum (Al), and is any one or more of NC-based, NCMbased, NCA-based, LNO-based, and NCMA-based positive electrode active materials.

15. The positive electrode active material of claim 14, wherein the composite metal hydroxide is produced by a co-precipitation reaction such that any one or more of nickel (Ni), cobalt (Co), manganese (Mn), and aluminum (Al), which are contained in the composite metal hydroxide, have a concentration gradient in at least a portion of the composite metal hydroxide.

16. A lithium secondary battery comprising:
a positive electrode comprising the positive electrode active material according to any one of claims 1 to 4;
a negative electrode facing the positive electrode and comprising graphite or lithium metal;
a separator interposed between the positive electrode and the negative electrode; and
an electrolyte solution or solid electrolyte containing a lithium salt.

17. A composite metal hydroxide for a lithium secondary battery containing at least one of nickel (Ni), cobalt (Co), manganese (Mn), and aluminum (Al) and comprising a preliminary secondary particle composed of a plurality of preliminary primary particles,
wherein the preliminary primary particles include oriented particles provided in a surface portion of the preliminary secondary particle and provided in a rod shape having a short axis and a long axis,
wherein the oriented particles include those in which an average absolute value of acute angles between long-axis-direction extension lines passing through centers of the oriented particles and angle baselines connecting central points of the extension lines to a central point of the secondary particle is 20 or less,
wherein the central point of each of the extension lines is a center of a line connecting one end to the other end of the oriented particle, and
the oriented particles include those in which a distance between the long-axis-direction extension line passing through the centers of the oriented particles and a central baseline passing through the central point of the secondary particle in parallel with the extension line is 1.5 µm or less.

18. The composite metal hydroxide of claim 16, which is produced by a co-precipitation reaction such that any one or more of nickel (Ni), cobalt (Co), manganese (Mn), and aluminum (Al), which are contained in the composite metal hydroxide have a concentration gradient in at least a portion of the composite metal hydroxide.
